(19) Europäisches Patentamt
European Patent Office
Office européen des brevets

(11) EP 3 751 657 A1

(12) # EUROPEAN PATENT APPLICATION
published in accordance with Art. 153(4) EPC

(43) Date of publication:
**16.12.2020 Bulletin 2020/51**

(21) Application number: **19747290.5**

(22) Date of filing: **31.01.2019**

(51) Int Cl.:
***H01M 10/0562*** (2010.01) ***H01B 1/06*** (2006.01)
***H01B 13/00*** (2006.01) ***H01M 4/13*** (2010.01)
***H01M 4/139*** (2010.01) ***H01M 10/0585*** (2010.01)

(86) International application number:
**PCT/JP2019/003270**

(87) International publication number:
**WO 2019/151363 (08.08.2019 Gazette 2019/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2018 JP 2018018678**
**27.04.2018 JP 2018087793**

(71) Applicant: **Fujifilm Corporation**
**Minato-ku**
**Tokyo 106-8620 (JP)**

(72) Inventors:
- **OZAWA Shin**
**Ashigarakami-gun, Kanagawa 258-8577 (JP)**
- **IMAI Shinji**
**Ashigarakami-gun, Kanagawa 258-8577 (JP)**
- **SUZUKI Hideyuki**
**Ashigarakami-gun, Kanagawa 258-8577 (JP)**
- **ISOJIMA Hiroshi**
**Ashigarakami-gun, Kanagawa 258-8577 (JP)**
- **YAWATA Toshihiko**
**Ashigarakami-gun, Kanagawa 258-8577 (JP)**

(74) Representative: **Hoffmann Eitle**
**Patent- und Rechtsanwälte PartmbB**
**Arabellastraße 30**
**81925 München (DE)**

(54) **SOLID-ELECTROLYTE-CONTAINING SHEET, ALL-SOLID SECONDARY BATTERY ELECTRODE SHEET, ALL-SOLID SECONDARY BATTERY, ELECTRONIC APPARATUS, ELECTRIC AUTOMOBILE, AND PRODUCTION METHODS FOR SAME**

(57) A solid electrolyte-containing sheet includes a laminate of three or more solid electrolyte layers, in which the solid electrolyte layer includes an inorganic solid electrolyte and a binder, the inorganic solid electrolytes included in two solid electrolyte layers that are disposed on both surface sides of the laminate among the solid electrolyte layers are formed of particles having an average particle size of 0.3 to 0.9 μm, the inorganic solid electrolyte included in at least one of solid electrolyte layers that are disposed between the two solid electrolyte layers disposed on both the surface sides of the laminate is formed of particles having an average particle size of 1 to 5 μm, and the binder included in the at least one solid electrolyte layer is particulate.

FIG. 1

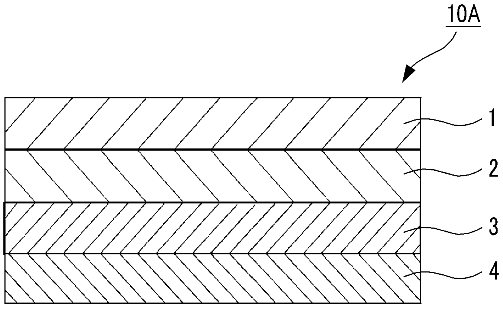


EP 3 751 657 A1

## Description

## BACKGROUND OF THE INVENTION

### 1. Field of the Invention

The present invention relates to a solid electrolyte-containing sheet, an electrode sheet for an all-solid state secondary battery, an all-solid state secondary battery, an electronic apparatus, and an electric vehicle, and methods of manufacturing the same.

### 2. Description of the Related Art

A lithium ion secondary battery is a storage battery including a negative electrode, a positive electrode, and an electrolyte sandwiched between the negative electrode and the positive electrode and enables charging and discharging by the reciprocal migration of lithium ions between both electrodes. In the related art, in lithium ion secondary batteries, an organic electrolytic solution has been used as the electrolyte. However, in organic electrolytic solutions, liquid leakage is likely to occur, there is a concern that a short-circuit and ignition may be caused in batteries due to overcharging or overdischarging, and there is a demand for additional improvement in safety and reliability.

Under these circumstances, all-solid state secondary batteries in which an inorganic solid electrolyte is used instead of the organic electrolytic solution are attracting attention. In all-solid state secondary batteries, all of the negative electrode, the electrolyte, and the positive electrode are solid, safety or reliability which is considered as a problem of batteries in which the organic electrolytic solution is used can be significantly improved, and it also becomes possible to extend the service lives. Further, an all-solid state secondary battery may have a laminate structure in which electrodes and an electrolyte are directly disposed in series. Therefore, the energy density can be further increased as compared to a secondary battery in which an organic electrolytic solution is used, and the application to various electronic apparatuses, an electric vehicle, or a large-sized storage battery is expected.

In order to put the all-solid state secondary battery into practice, the all-solid state secondary battery and a member forming the all-solid state secondary battery have been actively considered.

For example, JP5686191B describes a method of manufacturing an all-solid state secondary battery including: laminating an electrode material on one solid electrolyte layer including a binder that is disposed on a foil to form a laminate; pressing the laminate to form an electrode layer; and removing the foil. It is known that the all-solid state secondary battery obtained using this manufacturing method has high output. JP2017-010816A describes a method of manufacturing an all-solid state secondary battery including two or three solid electrolyte layers. In the all-solid state secondary battery obtained using this manufacturing method, it is known that short-circuit is suppressed and an internal resistance value decreases. JP2008-135287A describes a member for an all-solid state secondary battery obtained by laminating a thin film layer having a thickness of 10 nm to 1 $\mu$m and a solid electrolyte layer having a thickness of 1 to 500 $\mu$m in this order on an electrode material layer, in which the thin film layer consists of the same material as that of the solid electrolyte layer, the same material as that of the electrode material layer, or a mixture thereof. In the member, it is known that an interface resistance between the electrode material layer and the solid electrolyte layer is low and a discharge current density is excellent.

## SUMMARY OF THE INVENTION

In an all-solid state secondary battery, an electrode active material layer forming an electrode (a negative electrode or a positive electrode) and a solid electrolyte layer are formed of solid particles such as an active material or an inorganic solid electrolyte. From the viewpoint of contact with an active material on a surface of the electrode active material layer, it is preferable that the average particle size of the inorganic solid electrolyte in the solid electrolyte layer is small because ion conductivity between the solid electrolyte layer and the electrode active material layer is excellent. On the other hand, in order to improve ion conductivity of the solid electrolyte layer itself, it is preferable that the average particle size of the inorganic solid electrolyte in the solid electrolyte layer is large.

In addition, this solid electrolyte layer is required to endure friction during winding in a roll shape, impact during winding and transport at a high curvature, a load applied during laminating on a positive electrode or a negative electrode, and the like. Therefore, it is desired to improve film hardness.

The all-solid state secondary battery obtained using the manufacturing method described in JP5686191B consists of one thin solid electrolyte layer. In a case where the average particle size of the inorganic solid electrolyte increases in order to improve the ion conductivity of the solid electrolyte layer, a resistance in an interface increases due to a small contact area between the solid electrolyte layer and the electrode active material layer. In addition, in a case where the average particle size of the inorganic solid electrolyte in the solid electrolyte layer decreases in order to

increase the contact area between the solid electrolyte layer and the electrode active material layer, the number of particles in the layer is excessively large, and a resistance of the solid electrolyte layer itself increases.

In the manufacturing method described in JP2017-010816A, a solid electrolyte layer that is formed on an electrode active material layer and a solid electrolyte layer that is separately provided are laminated and subsequently pressed. Therefore, there is a void between the solid electrolyte layers. As a result, in the laminate that consists of two or three solid electrolyte layers included in the all-solid state secondary battery obtained using the manufacturing method described in JP2017-010816A, the ion conductivity is low, and the resistance is high.

The laminate of the thin film layer and the solid electrolyte layer included in the member for an all-solid state secondary battery described in JP2008-135287A does not include a binder. Therefore, assuming that the above-described laminate is a film, the film hardness is low.

An object of the present invention is to provide a solid electrolyte-containing sheet having excellent film hardness that includes a laminate of three or more solid electrolyte layers. By using this solid electrolyte-containing sheet as a component, an all-solid state secondary battery having an excellent battery voltage can be realized. In addition, another object of the present invention is to provide an electrode sheet for an all-solid state secondary battery including the above-described laminate, an all-solid state secondary battery including the above-described electrode sheet for an all-solid state secondary battery, and an electronic apparatus and an electric vehicle including the above-described all-solid state secondary battery. In addition, still another object of the present invention is to provide a method of manufacturing the above-described solid electrolyte-containing sheet, a method of manufacturing the above-described electrode sheet for an all-solid state secondary battery, a method of manufacturing the above-described all-solid state secondary battery, a method of manufacturing the above-described electronic apparatus, and a method of manufacturing the above-described electric vehicle.

The present inventors repeatedly conducted a thorough investigation in consideration of the above-described objects. As a result, it was found that the above-described objects can be achieved with a laminate consisting of three or more solid electrolyte layers that include an inorganic solid electrolyte and a binder, in which average particle sizes of the inorganic solid electrolytes included in two solid electrolyte layers that are disposed on both surface sides of the laminate and an average particle size of the inorganic solid electrolyte included in a solid electrolyte layer that is disposed between the two solid electrolyte layers are adjusted to be specific ranges, respectively, and the binder included in the solid electrolyte layer that is disposed between the two solid electrolyte layers disposed on both the surface sides of the laminate is particulate. The present invention has been completed based on the above findings as a result of repeated investigation.

That is, the above-described objects have been achieved by the following means.

<1> A solid electrolyte-containing sheet comprising:

a laminate of three or more solid electrolyte layers,
in which the solid electrolyte layer includes an inorganic solid electrolyte and a binder,
the inorganic solid electrolytes included in two solid electrolyte layers that are disposed on both surface sides of the laminate among the three or more solid electrolyte layers are formed of particles having an average particle size of 0.3 to 0.9 μm,
the inorganic solid electrolyte included in at least one of solid electrolyte layers that are disposed between the two solid electrolyte layers disposed on both the surface sides of the laminate is formed of particles having an average particle size of 1 to 5 μm, and
the binder included in the at least one solid electrolyte layer is particulate.

<2> The solid electrolyte-containing sheet according to <1>,
in which the binders included in the two solid electrolyte layers that are disposed on both the surface sides of the laminate are different from each other.
<3> The solid electrolyte-containing sheet according to <1> or <2>,
in which the binders included in the two solid electrolyte layers that are disposed on both the surface sides of the laminate are particulate.
<4> The solid electrolyte-containing sheet according to any one of <1> to <3>,
in which the binders that are included in all the solid electrolyte layers included in the laminate are particulate.
<5> The solid electrolyte-containing sheet according to any one of <1> to <4>,
in which the inorganic solid electrolytes that are included in all the solid electrolyte layers included in the laminate are sulfide-based inorganic solid electrolytes.
<6> The solid electrolyte-containing sheet according to any one of <1> to <5>, comprising:

a laminate of four or more solid electrolyte layers,

in which one of the solid electrolyte layers that are disposed between the two solid electrolyte layers disposed on both the surface sides of the laminate is a short-circuit suppressing layer,
a pore radius of the short-circuit suppressing layer measured using a mercury intrusion method is less than 5 nm, and
a thickness of the short-circuit suppressing layer is 4 μm or less.

<7> The solid electrolyte-containing sheet according to <6>,
in which the short-circuit suppressing layer is in contact with one of the two solid electrolyte layers disposed on both the surface sides of the laminate.
<8> The solid electrolyte-containing sheet according to any one of <1> to <7>, which is a solid electrolyte-containing sheet for transfer.
<9> An electrode sheet for an all-solid state secondary battery, the electrode sheet comprising:

the laminate included in the solid electrolyte-containing sheet according to any one of <1> to <8>; and
an electrode active material layer adjacent to the laminate.

<10> An all-solid state secondary battery comprising:
the electrode sheet for an all-solid state secondary battery according to <9>.
<11> An electronic apparatus comprising:
the all-solid state secondary battery according to <10>.
<12> An electric vehicle comprising:
the all-solid state secondary battery according to <10>.
<13> A method of manufacturing a solid electrolyte-containing sheet including a laminate of three or more solid electrolyte layers, the method comprising:

a step (1) of forming a solid electrolyte layer by applying a solid electrolyte composition including an inorganic solid electrolyte having an average particle size of 0.3 to 0.9 μm and a binder;
a step (2) of forming a solid electrolyte layer by applying a solid electrolyte composition including an inorganic solid electrolyte having an average particle size of 1 to 5 μm and a particulate binder;
a step (3) of forming a solid electrolyte layer by applying a solid electrolyte composition including an inorganic solid electrolyte having an average particle size of 0.3 to 0.9 μm and a binder; and
a step of drying the solid electrolyte layers,
in which the solid electrolyte layer formed in the step (2) is disposed between the solid electrolyte layer formed in the step (1) and the solid electrolyte layer formed in the step (3).

<14> The method of manufacturing a solid electrolyte-containing sheet according to <13>,
in which the binder included in the solid electrolyte composition in the step (1) and the binder included in the solid electrolyte composition in the step (3) are different from each other.
<15> The method of manufacturing a solid electrolyte-containing sheet according to L<13> or <14>, further comprising:
a step of laminating the three or more solid electrolyte layers in a wet state and drying the three or more laminated solid electrolyte layers.
<16> The method of manufacturing a solid electrolyte-containing sheet according to any one of <13> to <15>, further comprising:
a step of pressurizing the dried three or more solid electrolyte layers.
<17> The method of manufacturing a solid electrolyte-containing sheet according to <16>, further comprising:
a step of winding the pressurized three or more solid electrolyte layers into a roll.
<18> The method of manufacturing a solid electrolyte-containing sheet according to any one of <13> to <17> including a laminate of four or more solid electrolyte layers, the method further comprising:
a step (4) of forming a short-circuit suppressing layer between the solid electrolyte layer formed in the step (1) and the solid electrolyte layer formed in the step (3) by applying a solid electrolyte composition for forming the short-circuit suppressing layer,, the short-circuit suppressing layer having a pore radius of less than 5 nm and a thickness of 4 μm or less, and the pore radius being measured using a mercury intrusion method.
<19> The method of manufacturing a solid electrolyte-containing sheet according to <18>,
in which the short-circuit suppressing layer is in contact with one of solid electrolyte layers disposed on both surfaces of the laminate.
<20> A method of manufacturing an electrode sheet for an all-solid state secondary battery, the method comprising:
a step of transferring the laminate included in the solid electrolyte-containing sheet to an electrode active material

layer, the solid electrolyte-containing sheet being obtained using the method of manufacturing a solid electrolyte-containing sheet according to any one of <13> to <19>.
<21> A method of manufacturing an all-solid state secondary battery, the method comprising:
the method of manufacturing an electrode sheet for an all-solid state secondary battery according to <20>.
<22> A method of manufacturing an electronic apparatus, the method comprising:
the method of manufacturing an all-solid state secondary battery according to <21>.
<23> A method of manufacturing an electric vehicle, the method comprising:
the method of manufacturing an all-solid state secondary battery according to <21>.

A solid electrolyte-containing sheet according to the present invention has excellent film hardness. By using the laminate included in this solid electrolyte-containing sheet as a component, an all-solid state secondary battery having an excellent battery voltage can be realized. According to the present invention there are provided an electrode sheet for an all-solid state secondary battery including the above-described laminate, an all-solid state secondary battery including the above-described electrode sheet for an all-solid state secondary battery, and an electronic apparatus and an electric vehicle including the above-described all-solid state secondary battery.
With the method of manufacturing a solid electrolyte-containing sheet, the method of manufacturing an electrode sheet for an all-solid state secondary battery, the method of manufacturing an all-solid state secondary battery, the method of manufacturing an electronic apparatus, and the method of manufacturing an electric vehicle according to the present invention, the solid electrolyte-containing sheet, the electrode sheet for an all-solid state secondary battery, the all-solid state secondary battery, the electronic apparatus, and the electric vehicle according to the present invention can be obtained.

## BRIEF DESCRIPTION OF THE DRAWINGS

Fig. 1 is a vertical cross-sectional view schematically showing a solid electrolyte-containing sheet (transfer sheet) according to a preferred embodiment of the present invention.
Fig. 2 is a vertical cross-sectional view schematically showing another solid electrolyte-containing sheet (transfer sheet) according to a preferred embodiment of the present invention.
Fig. 3 is a vertical cross-sectional view schematically showing an all-solid state secondary battery according to a preferred embodiment of the present invention.
Fig. 4 is a vertical cross-sectional view schematically showing another all-solid state secondary battery according to a preferred embodiment of the present invention.

## DESCRIPTION OF THE PREFERRED EMBODIMENTS

In the present invention, a solid electrolyte layer does not typically include an active material but may include an active material within a range where the effects of the present invention do not deteriorate and the solid electrolyte layer does not function as an active material layer.
In the description of the present invention, "the binders included in the two solid electrolyte layers that are disposed on both the surface sides of the laminate are different from each other" represents that, among the above-described two solid electrolyte layers, the binder included in one solid electrolyte layer and the binder included in the other solid electrolyte layer are different from each other. For example, among the two solid electrolyte layers, one solid electrolyte layer includes a binder having high adhesiveness with a positive electrode active material layer, and the other solid electrolyte layer includes a binder having high adhesiveness with a negative electrode active material layer.
In the description of the present invention, compositions of solid electrolyte layers adjacent to each other and forming a laminate of three or more solid electrolyte layers are different from each other. That is, in a case where a plurality of solid electrolyte layers having the same composition are laminated, the plurality of solid electrolyte layers are assumed as one solid electrolyte layer.
In the description of the present invention, "transfer" represents that a solid electrolyte-containing sheet and an electrode active material layer are laminated such that, in a laminate consisting of three or more solid electrolyte layers formed on a release film (support), a solid electrolyte layer that is disposed opposite to the release film (support) is in contact with the electrode active material layer. Accordingly, it can be said that a solid electrolyte-containing sheet according to an embodiment of the present invention is a sheet for transferring a laminate.
In the description of the present invention, numerical ranges represented by "to" include numerical values before and after "to" as lower limit values and upper limit values.

[Solid Electrolyte-Containing Sheet]

A solid electrolyte-containing sheet according to an embodiment of the present invention includes a laminate of three or more solid electrolyte layers. The solid electrolyte layer included in the laminate is used for forming a solid electrolyte layer in an all-solid state secondary battery.

The solid electrolyte layer includes an inorganic solid electrolyte and a binder, inorganic solid electrolytes included in two solid electrolyte layers (an outermost solid electrolyte layer on the front surface side and an outermost solid electrolyte layer on the back surface side) that are disposed on both surface sides of the laminate among the three or more solid electrolyte layers are formed of particles having an average particle size (hereinafter, simply referred to as "particle size") of 0.3 to 0.9 μm, the binder included in at least one of solid electrolyte layers that are disposed between the two solid electrolyte layers disposed on both the surface sides of the laminate is particulate, and the inorganic solid electrolyte included in the solid electrolyte layer including the particulate binder is formed of particles having an average particle size of 1 to 5 μm.

Hereinafter, the above-described laminate will also be referred to as "the laminate according to the embodiment of the present invention".

<Laminate>

The laminate according to the embodiment of the present invention consists of three or more solid electrolyte layers.

In the laminate according to the embodiment of the present invention, the upper limit of the number of the solid electrolyte layers is not particularly limited and is preferably 10 or less, more preferably 7 or less, still more preferably 5 or less, and still more preferably 4 or less.

It is preferable that one of the solid electrolyte layers included in the laminate according to the embodiment of the present invention is a short-circuit suppressing layer (dendrite suppressing layer). The pore radius of the short-circuit suppressing layer measured using a mercury intrusion method is less than 5 nm and preferably less than 3 nm. The lower limit is not particularly limited and is practically 1 nm or more. It is preferable that the pore radius of the short-circuit suppressing layer is in the above-described range in a state where the laminate according to the embodiment of the present invention is incorporated into an all-solid state secondary battery. In addition, the thickness of the short-circuit suppressing layer is 4 μm or less and preferably 2 μm or less. The lower limit is not particularly limited and is practically 0.1 μm or more.

In the laminate according to the embodiment of the present invention, a position of the short-circuit suppressing layer is not particularly limited, and it is preferable that the short-circuit suppressing layer is not disposed on both the surface sides of the laminate. That is, in a case where the laminate according to the embodiment of the present invention includes a solid electrolyte layer as the short-circuit suppressing layer, it is preferable that the laminate according to the embodiment of the present invention includes four or more solid electrolyte layers and the short-circuit suppressing layer is interposed the two solid electrolyte layers disposed on both the surface sides of the laminate directly or with another solid electrolyte layer interposed therebetween.

In the following description of the solid electrolyte-containing sheet according to the embodiment of the present invention, it is assumed that the short-circuit suppressing layer is interposed the two solid electrolyte layers disposed on both the surface sides of the laminate directly or with another solid electrolyte layer interposed therebetween. Here, "the two solid electrolyte layers disposed on both the surface sides of the laminate" represents a front surface layer and a back surface layer of the laminate. In an example of a transfer sheet 10A in Fig. 1, a solid electrolyte layer 1 and a solid electrolyte layer 3 are the two solid electrolyte layers.

Among the two solid electrolyte layers disposed on both the surface sides of the laminate, one solid electrolyte layer will also be referred to as "first solid electrolyte layer (first SE layer)", and the other solid electrolyte layer will also be referred to as "third solid electrolyte layer (third SE layer)". In addition, a solid electrolyte layer that is disposed between the first SE layer and the third SE layer and includes a particulate binder and inorganic solid electrolyte particles having an average particle size of 1 to 5 μm will also be referred to as "second solid electrolyte layer (second SE layer)". In addition, the short-circuit suppressing layer will also be referred to as "fourth solid electrolyte layer (fourth SE layer)". In addition, a solid electrolyte layer other than the first to fourth SE layers included in the laminate according to the embodiment of the present invention will also be referred to as "other solid electrolyte layer (other SE layer)".

Hereinafter, a preferable aspect of the laminate according to the embodiment of the present invention will be described.

(Laminate including Three Solid Electrolyte Layers)

In a case where the laminate according to the embodiment of the present invention consists of three solid

electrolyte layers, the laminate according to the embodiment of the present invention consists of the first to third SE layers. Specifically, the laminate according to the embodiment of the present invention consists of: two solid electrolyte layers (the first SE layer and the third SE layer) that include a binder and inorganic solid electrolyte particles having a particle size of 0.3 to 0.9 μm and are disposed on both the surface sides of the laminate; and a solid electrolyte layer (the second SE layer) that includes a particulate binder and inorganic solid electrolyte particles having a particle size of 1 to 5 μm.

(Laminate including Four Solid Electrolyte Layers)

In a case where the laminate according to the embodiment of the present invention consists of four solid electrolyte layers, an aspect where the laminate according to the embodiment of the present invention consists of the first to fourth SE layers is preferable. Specifically, the laminate according to the embodiment of the present invention consists of: two solid electrolyte layers (the first SE layer and the third SE layer) that include a binder and inorganic solid electrolyte particles having a particle size of 0.3 to 0.9 μm and are disposed on both the surface sides of the laminate; a solid electrolyte layer (the second SE layer) that includes a particulate binder and inorganic solid electrolyte particles having a particle size of 1 to 5 μm; and a short-circuit suppressing layer (fourth SE layer). A positional relationship between the second SE layer and the fourth SE layer is not particularly limited. In addition, the present invention also includes an aspect where the other SE layer is provided instead of the short-circuit suppressing layer.

(Laminate including Five or More Solid Electrolyte Layers)

In a case where the laminate according to the embodiment of the present invention consists of five or more solid electrolyte layers, an aspect where the laminate according to the embodiment of the present invention consists of the first to fourth SE layers and the other SE layer is preferable. As the other SE layer, a typical solid electrolyte layer having an appropriately adjusted thickness that is used in an all-solid state secondary battery can be used. In the laminate according to the embodiment of the present invention, it is preferable that the fourth SE layer is in contact with the first or third SE layer. This configuration is for efficiently suppressing short-circuit in an all-solid state secondary battery. The present invention includes not only an aspect where a plurality of short-circuit suppressing layers are provided and but also an aspect where three other SE layers are provided without including the short-circuit suppressing layer.

[Transfer Sheet]

A solid electrolyte-containing sheet according to the embodiment of the present invention may be a sheet consisting of the above-described laminate and may be a transfer sheet including a release film (support). Hereinafter, the solid electrolyte-containing sheet according to the embodiment of the present invention that is the transfer sheet will also be referred to as "transfer sheet". The transfer sheet according to the embodiment of the present invention is suitable for transferring the laminate according to the embodiment of the present invention to an electrode active material layer.

Examples of a preferable aspect of the transfer sheet according to the embodiment of the present invention include a transfer sheet shown in Figs. 1 and 2.

The transfer sheet 10A according to the embodiment of the present invention shown in Fig. 1 includes a release film 4, a solid electrolyte layer 3 (first SE layer), a solid electrolyte layer 2 (second SE layer), and a solid electrolyte layer 1 (third SE layer) in this order. On the other hand, a transfer sheet 10B according to the embodiment of the present invention shown in Fig. 2 has the same configuration as that of the transfer sheet shown in Fig. 1, except that it includes a solid electrolyte layer 5 (short-circuit suppressing layer; fourth SE layer) that is disposed between the solid electrolyte layer 1 (third SE layer) and the solid electrolyte layer 2 (second SE layer).

The release film used in the transfer sheet according to the embodiment of the present invention is not particularly limited, and examples thereof include a metal film such as an aluminum film, a stainless steel (SUS) film, or a copper film and a resin film such as a polyethylene terephthalate film, a polyethylene naphthalate film, a polyimide film, or a polytetrafluoroethylene (PTFE) film. In addition, in order to improve releasability between the release film and the solid electrolyte layer, a releasability adjusting layer such as a silicone resin layer, a fluororesin layer, or an olefin resin layer may be provided between the solid electrolyte layer and the release film. Specific examples of the release film with the releasability adjusting layer include CERAPEEL (manufactured by Toray Advanced Film Co., Ltd.), PANA-PEEL (manufactured by Panac Corporation), and UNIPEEL (manufactured by Unitika Ltd.).

The solid electrolyte-containing sheet according to the embodiment of the present invention may include a protective film. As the protective film, for example, a film described above regarding the release film can be used. Among films that are provided on the two solid electrolyte layers disposed on both the surface sides of the laminate, a film that is required to be released before transfer is a protective film, and a film that is released after laminating the laminate according to the embodiment of the present invention on an electrode active material layer is a release film.

The solid electrolyte-containing sheet according to the embodiment of the present invention may include a film that protects an end surface of the laminate according to the embodiment of the present invention in order to prevent infiltration of moisture and foreign matter and to prevent short-circuit caused by contact with a positive electrode or a negative electrode due to misalignment during lamination after transfer.

[Electrode Sheet for All-Solid State Secondary Battery]

The electrode sheet for an all-solid state secondary battery according to the embodiment of the present invention includes the laminate according to the embodiment of the present invention and an electrode active material layer.

Examples of the electrode sheet for an all-solid state secondary battery according to the embodiment of the present invention include a sheet including: an electrode active material layer that is provided on a current collector; and the laminate according to the embodiment of the present invention that is provided on the electrode active material layer, and a sheet including: a conductor layer that is provided on a current collector; an electrode active material layer that is provided on the conductor layer; and the laminate according to the embodiment of the present invention that is provided on the electrode active material layer.

In the electrode sheet for an all-solid state secondary battery, each of the solid electrolyte layers forming the laminate may include a dispersion medium described below.

Examples of the conductor layer include conductor layers (carbon-coated foil) described in JP2013-023654A and JP2013-229187A.

In addition, as the electrode active material layer and the current collector described above, an electrode active material layer and a current collector used in a typical all-solid state secondary battery can be used. For example, an electrode active material layer and a current collector described in JP2015-088486A can be used.

In the description of the present invention, the electrode active material layers (the positive electrode active material layer (hereinafter, also referred to as positive electrode layer") and the negative electrode active material layer (hereinafter, also referred to as "negative electrode layer")) will also be referred to as "active material layer".

[All-Solid State Secondary Battery]

An all-solid state secondary battery according to the embodiment of the present invention includes a current collector, an electrode active material layer, and the laminate according to the embodiment of the present invention. Hereinafter, a preferable all-solid state secondary battery according to the embodiment of the present invention will be described with reference to Figs. 3 and 4, but the present invention is not limited thereto.

Fig. 3 is a cross-sectional view schematically showing an all-solid state secondary battery 100A (lithium ion secondary battery) according to a preferred embodiment of the present invention. The all-solid state secondary battery 100A according to the embodiment includes the laminate in the solid electrolyte-containing sheet shown in Fig. 1 and includes a negative electrode current collector 9, a negative electrode active material layer 8, the solid electrolyte layer 1 (third SE layer), the solid electrolyte layer 2 (second SE layer), the solid electrolyte layer 3 (first SE layer), a positive electrode active material layer 7, a positive electrode current collector 6 in this order from the negative electrode side. The respective layers are in contact with one another and have a laminated structure. In a case in which the above-described structure is employed, during charging, electrons ($e^-$) are supplied to the negative electrode side, and lithium ions ($Li^+$) are accumulated in the negative electrode side. On the other hand, during discharging, the lithium ions ($Li^+$) accumulated in the negative electrode side return to the positive electrode, and electrons are supplied to an operation portion 11. In an example shown in the drawing, an electric bulb is employed as the operation portion 11 and is lit by discharging. Although not shown in Fig. 3, a conductor layer may be provided between the negative electrode current collector 9 and the negative electrode active material layer 8 and/or between the positive electrode active material layer 7 and the positive electrode current collector 6.

Fig. 4 is a cross-sectional view schematically showing another all-solid state secondary battery (lithium ion secondary battery) according to a preferred embodiment of the present invention. The all-solid state secondary battery has the same configuration as that the all-solid state secondary battery shown in Fig. 3, except that it includes the solid electrolyte layer 5 (short-circuit suppressing layer; fourth SE layer) that is disposed between the solid electrolyte layer 1 (third SE layer) and the solid electrolyte layer 2 (second SE layer).

The thicknesses of the solid electrolyte layer 1 (third SE layer), the solid electrolyte layer 2 (second SE layer), and the solid electrolyte layer 3 (first SE layer) are not particularly limited, but the thicknesses of the first SE layer and the third SE layer are preferably 1 to 5 $\mu$m and more preferably 2 to 4 $\mu$m. On the other hand, the thickness of the second SE layer is preferably 3 to 50 $\mu$m and more preferably 5 to 30 $\mu$m.

The thicknesses of the negative electrode active material layer 8 and the positive electrode active material layer 7 are not particularly limited. In consideration of the dimension of a general battery, the thicknesses are preferably 10 to 1,000 $\mu$m and more preferably 20 $\mu$m or more and less than 500 $\mu$m.

In the present invention, for example, a functional layer or member may be appropriately interposed or disposed between the solid electrolyte layer and the electrode active material layer, between the electrode active material layer and the current collector, and on the outside of the current collector. In addition, the electrode active material layer may have a single-layer structure or a multi-layer structure.

[Case]

A basic structure of the all-solid state secondary battery can be prepared by disposing the above-described respective layers. Depending on uses, the all-solid state secondary battery according to the embodiment of the present invention may be used as an all-solid state secondary battery as it is but is sealed in an appropriate case to be used in the form of a dry cell. The case may be a metallic case or a resin (plastic) case. In a case where a metallic case is used, examples thereof include an aluminum alloy case and a stainless steel case. It is preferable that the metallic case is classified into a positive electrode-side case and a negative electrode-side case and that the positive electrode-side case and the negative electrode-side case are electrically connected to the positive electrode current collector and the negative electrode current collector, respectively. The positive electrode-side case and the negative electrode-side case are preferably integrated by being joined together through a gasket for short-circuit prevention.

[Components included in Solid Electrolyte Layer]

<Inorganic Solid Electrolyte>

In the present invention, the inorganic solid electrolyte is an inorganic solid electrolyte, and the solid electrolyte refers to a solid-form electrolyte capable of migrating ions therein. The inorganic solid electrolyte is clearly distinguished from organic solid electrolytes (polymer electrolytes such as polyethylene oxide (PEO) and organic electrolyte salts such as lithium bis(trifluoromethanesulfonyl)imide (LiTFSI)) since the inorganic solid electrolyte does not include any organic matter as a principal ion conductive material. In addition, the inorganic solid electrolyte is solid in a steady state and thus, typically, is not dissociated or liberated into cations and anions. Due to this fact, the inorganic solid electrolyte is also clearly distinguished from inorganic electrolyte salts of which cations and anions are dissociated or liberated in electrolytic solutions or polymers ($LiPF_6$, $LiBF_4$, LiFSI, LiCl, and the like). The inorganic solid electrolyte is not particularly limited as long as it has ion conductivity of a metal belonging to Group 1 or Group 2 in the periodic table and generally does not have electron conductivity.

In the present invention, the inorganic solid electrolyte has conductivity of an ion of a metal belonging to Group 1 or Group 2 in the periodic table. The inorganic solid electrolyte can be appropriately selected from solid electrolyte materials to be applied to this kind of products and used. Representative examples of the inorganic solid electrolyte include (i) a sulfide-based inorganic solid electrolyte and (ii) an oxide-based inorganic solid electrolyte. From the viewpoint of a high ion conductivity and easiness in joining interfaces between particles, a sulfide-based inorganic solid electrolyte is preferable.

In a case where an all-solid state secondary battery according to the embodiment of the present invention is an all-solid state lithium ion secondary battery, the inorganic solid electrolyte preferably has ion conductivity of lithium ions.

(i) Sulfide-Based Inorganic Solid Electrolyte

The sulfide-based inorganic solid electrolyte is preferably a compound that contains a sulfur atom (S), has ion conductivity of a metal belonging to Group 1 or Group 2 in the periodic table, and has electron-insulating properties. The sulfide-based inorganic solid electrolyte is preferably an inorganic solid electrolyte that contains at least Li, S, and P as elements and has lithium ion conductivity. However, the sulfide-based inorganic solid electrolyte may include elements other than Li, S, and P depending on the purposes or cases.

Examples of the sulfide-based inorganic solid electrolyte include a lithium ion-conductive sulfide-based inorganic solid electrolyte satisfying a composition represented by the following Formula (1).

$$L_{a1}M_{b1}P_{c1}S_{d1}A_{e1} \qquad \text{Formula (I)}$$

In the formula, L represents an element selected from Li, Na, or K and is preferably Li. M represents an element selected from B, Zn, Sn, Si, Cu, Ga, Sb, Al, or Ge. A represents an element selected from I, Br, Cl, or F. a1 to e1 represent the compositional ratios among the respective elements, and a1:b1:c1:d1:e1 satisfies 1 to 12:0 to 5:1:2 to 12:0 to 10. a1 is preferably 1 to 9 and more preferably 1.5 to 7.5. b1 is preferably 0 to 3 and more preferably 0 to 1. d1 is preferably 2.5 to 10 and more preferably 3.0 to 8.5. e1 is preferably 0 to 5 and more preferably 0 to 3.

The compositional ratios among the respective elements can be controlled by adjusting the ratios of raw material

compounds blended to manufacture the sulfide-based inorganic solid electrolyte as described below.

The sulfide-based inorganic solid electrolyte may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide ($Li_2S$), phosphorus sulfide (for example, diphosphoruspentasulfide ($P_2S_5$)), a phosphorus single body, a sulfur single body, sodium sulfide, hydrogen sulfide, lithium halides (for example, LiI, LiBr, and LiCl), or sulfides of an element represented by M (for example, $SiS_2$, SnS, and $GeS_2$).

The ratio between $Li_2S$ and $P_2S_5$ in Li-P-S-based glass and Li-P-S-based glass ceramic is preferably 60:40 to 90:10 and more preferably 68:32 to 78:22 in terms of the molar ratio between $Li_2S:P_2S_5$. In a case where the ratio between $Li_2S$ and $P_2S_5$ is set in the above-described range, it is possible to increase the lithium ion conductivity. Specifically, the lithium ion conductivity can be preferably set to $1 \times 10^{-4}$ S/cm or more and more preferably set to $1 \times 10^{-3}$ S/cm or more. The upper limit is not particularly limited, but realistically $1 \times 10^{-1}$ S/cm or less.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-$GeS_2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$SiS_2$-$P_2S_5$-LiI, $Li_2S$-$SiS_2$-LiI, $Li_2S$-$SiS_2$-$Li_4SiO_4$, $Li_2S$-$SiS_2$-$Li_3PO_4$, and $Li_{10}GeP_2S_{12}$. Mixing ratios of the respective raw materials do not matter. Examples of a method for synthesizing the sulfide-based inorganic solid electrolyte material using the above-described raw material compositions include an amorphization method. Examples of the amorphization method include a mechanical milling method, a solution method, and a melting quenching method. This is because treatments at a normal temperature become possible, and it is possible to simplify manufacturing steps.

(ii) Oxide-Based Inorganic Solid Electrolyte

The oxide-based inorganic solid electrolyte is preferably a compound that contains an oxygen atom (O), has ion conductivity of a metal belonging to Group 1 or Group 2 in the periodic table, and has electron-insulating properties.

Specific examples of the compound include $Li_{xa}La_{ya}TiO_3$ [xa = 0.3 to 0.7 and ya = 0.3 to 0.7] (LLT), $Li_{xb}La_{yb}Zr_{zb}M^{bb}_{mb}O_{nb}$ ($M^{bb}$ is at least one element of Al, Mg, Ca, Sr, V, Nb, Ta, Ti, Ge, In or Sn, xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$.), $Li_{xc}B_{yc}M^{cc}_{zc}O_{nc}$ ($M^{cc}$ is at least one element of C, S, Al, Si, Ga, Ge, In, or Sn, xc satisfies $0 \leq xc \leq 5$, yc satisfies $0 \leq yc \leq 1$, zc satisfies $0 \leq zc \leq 1$, and nc satisfies $0 \leq nc \leq 6$), $Li_{xd}(Al, Ga)_{yd}(Ti, Ge)_{zd}Si_{ad}P_{md}O_{nd}$ ($1 \leq xd \leq 3$, $0 \leq yd \leq 1$, $0 \leq zd \leq 2$, $0 \leq ad \leq 1$, $1 \leq md \leq 7$, $3 \leq nd \leq 13$), $Li_{(3-2xe)}M^{ee}_{xe}D^{ee}O$ (xe represents a number of 0 or more and 0.1 or less, and $M^{ee}$ represents a divalent metal atom. $D^{ee}$ represents a halogen atom or a combination of two or more halogen atoms.), $Li_{xf}Si_{yf}O_{zf}$ ($1 \leq xf \leq 5$, $0 < yf \leq 3$, $1 \leq zf \leq 10$), $Li_{xg}S_{yg}O_{zg}$ ($1 \leq xg \leq 3$, $0 < yg \leq 2$, $1 \leq zg \leq 10$), $Li_3BO_3$-$Li_2SO_4$, $Li_2O$-$B_2O_3$-$P_2O_5$, $Li_2O$-$SiO_2$, $Li_6BaLa_2Ta_2O_{12}$, $Li_3PO_{(4-3/2w)}N_w$ (w satisfies w<1), $Li_{3.5}Zn_{0.25}GeO_4$ having a lithium super ionic conductor (LISICON)-type crystal structure, $La_{0.55}Li_{0.35}TiO_3$ having a perovskite type crystal structure, $LiTi_2P_3O_{12}$ having a natrium super ionic conductor (NASICON)-type crystal structure, $Li_{1+xh+yh}(Al, Ga)_{xh}(Ti, Ge)_{2-xh}Si_{yh}P_{3-yh}O_{12}$ ($0 \leq xh \leq 1$, $0 \leq yh \leq 1$), $Li_7La_3Zr_2O_{12}$ (LLZ) having a garnet-type crystal structure. In addition, phosphorus compounds containing Li, P, and O are also desirable. Examples thereof include lithium phosphate ($Li_3PO_4$) and LiPON in which some of oxygen atoms in lithium phosphate are substituted with nitrogen atoms, $LiPOD^1$ ($D^1$ is at least one element selected from Ti, V, Cr, Mn, Fe, Co, Ni, Cu, Zr, Nb, Mo, Ru, Ag, Ta, W, Pt, Au, or the like). It is also possible to preferably use $LiA^1ON$ ($A^1$ represents at least one element selected from Si, B, Ge, Al, C, Ga, or the like) and the like.

In the laminate according to the embodiment of the present invention, the lower limit of the particle size of the inorganic solid electrolyte particles included in the first SE layer and the third SE layer is 0.3 μm or more. In order to further improve the film hardness of the solid electrolyte-containing sheet and a high battery voltage of the solid electrolyte-containing sheet during incorporation into the all-solid state secondary battery at the same time, the lower limit of the particle size is preferably 0.4 μm or more and more preferably 0.5 μm or more. On the other hand, the upper limit of the particle size is 0.9 μm or less.

In addition, in the laminate according to the embodiment of the present invention, the lower limit of the particle size of the inorganic solid electrolyte particles included in the second SE layer is 1 μm or more, preferably 1.8 μm or more, and more preferably 2.0 μm or more. On the other hand, the upper limit of the particle size is 5 μm or less.

In addition, as the inorganic solid electrolyte particles included in the fourth SE layer and the other SE layer in the laminate according to the embodiment of the present invention, the inorganic solid electrolyte particles included in the first SE layer and the second SE layer can be used.

In the description of the present invention, the particle size of the inorganic solid electrolyte in the solid electrolyte layer is a value obtained with a measurement method using a scanning electron microscope in Examples described below.

As the inorganic solid electrolyte, one kind may be used alone, or two or more kinds may be used in combination.

The content of the inorganic solid electrolyte in each of the solid electrolyte layers is not particularly limited. From the viewpoints of reducing the interface resistance during use in an all-solid state secondary battery and maintaining the reduced interface resistance, the content of the inorganic solid electrolyte is preferably 50 to 99.9 parts by mass, more preferably 60 to 99.5 parts by mass, and still more preferably 70 to 99 parts by mass or more with respect to 100 parts by mass of the solid components in the each of the solid electrolyte layers.

In the present invention, the solid content (solid component) refers to components that neither volatilize nor evaporate and disappear in a case where a solid electrolyte composition for forming each of the solid electrolyte layers is dried at 120°C for 6 hours in a nitrogen atmosphere at a pressure of 1 mmHg. Typically, the solid content refers to components other than a dispersion medium included in the solid electrolyte composition.

-Binder-

In the laminate according to the embodiment of the present invention, the binders included in the first SE layer and the third SE layer may be the same as or different from each other but are preferably different from each other. That is, it is preferable that, among the first SE layer and the third SE layer, one SE layer includes a binder having high adhesiveness with the positive electrode active material layer, and the other SE layer includes a binder having high adhesiveness with the negative electrode active material layer. The reason for this is that the laminate according to the embodiment of the present invention and the electrode active material layer are more strongly bonded to each other.

In the laminate according to the embodiment of the present invention, it is preferable that, among the first SE layer and the third SE layer, one solid electrolyte layer includes a binder having high adhesiveness with the negative electrode active material layer, and the remaining solid electrolyte layer includes a binder having high adhesiveness with the positive electrode active material layer.

In the laminate according to the embodiment of the present invention, the shape of the binder included in the solid electrolyte layer other than the second SE layer is not particularly limited. However, in order further improve the battery voltage, it is preferable that the binders included in the first SE layer and the third SE layer are particulate, and it is preferable that the binders included in all the solid electrolyte layers forming the laminate according to the embodiment of the present invention are particulate.

In the example of the transfer sheet shown in Fig. 1, an aspect where the solid electrolyte layer 1 (third SE layer) includes a binder having high adhesiveness with the negative electrode active material layer and the solid electrolyte layer 2 (second SE layer) and the solid electrolyte layer 3 (first SE layer) include a binder (preferably binder particles) having high adhesiveness with the positive electrode active material layer is a preferable aspect of the transfer sheet according to the embodiment of the present invention.

In the example of the transfer sheet shown in Fig. 2, an aspect where the solid electrolyte layer 1 (third SE layer) includes a binder having high adhesiveness with the negative electrode active material layer and the solid electrolyte layer 2 (second SE layer), the solid electrolyte layer 3 (first SE layer), and the solid electrolyte layer 5 (short-circuit suppressing layer; fourth SE layer) include a binder (preferably binder particles) having high adhesiveness with the positive electrode active material layer is a preferable aspect of the transfer sheet according to the embodiment of the present invention.

As the binder particles having high adhesiveness with the positive electrode active material layer, for example, binder particles described in JP2015-088486A can be used. As the binder particles having high adhesiveness with the negative electrode active material layer, for example, binder particles described in WO2017/131093A can be used.

Hereinafter, specific aspects of the binder particles having high adhesiveness with the positive electrode active material layer and the binder particles having high adhesiveness with the negative electrode active material layer will be described.

(i) Binder Particles (Binder Particles A) having High Adhesiveness with Positive Electrode Active Material Layer

A component derived from a macromonomer A having a number-average molecular weight of 1000 or higher is incorporated into a polymer forming the binder particles A. In the polymer forming the above-described binder particles A, a graft portion derived from the macromonomer A forms a side chain with respect to the main chain. The main chain is not particularly limited.

Monomer (a)

A component other than the component derived from the macromonomer A in the polymer forming the binder particles A is not particularly limited, and a typical polymer component can be used. It is preferable that a monomer for introducing the component other than the component derived from the macromonomer A (hereinafter, this monomer will

also be referred to as "monomer (a)") is a monomer having a polymerizable unsaturated bond. For example, various vinyl monomers and/or acrylic monomers can be used. In the present invention, in particular, an acrylic monomer is preferably used. It is more preferable that a monomer selected from a (meth)acrylic acid monomer, a (meth)acrylic acid ester monomer, or a (meth)acrylonitrile is used. The number of polymerizable groups is not particularly limited and is preferably 1 to 4.

It is preferable that the polymer forming the binder particles A has at least one functional group in the following group (a) of functional groups. This group of functional groups may be included in the main chain or in the side chain derived from the macromonomer A but is preferably included in the main chain. This way, the specific functional group is included in the main chain or the like such that an interaction with a hydrogen atom, an oxygen atom, or a sulfur atom that is presumed to be present on a surface of the inorganic solid electrolyte, the active material, or the current collector is strengthened, binding properties are improved, and an action of reducing an interface resistance can be expected.

Group (a) of Functional Groups

a carbonyl group, an amino group, a sulfonate group, a phosphate group, a hydroxy group, an ether group, a cyano group, and a thiol (sulfanyl) group

Examples of a carbonyl group-containing group include a carboxy group, a carbonyloxy group, an amido group, and a carbamoyl group, and the number of carbon atoms in the carboxy group-containing group is preferably 1 to 24, more preferably 1 to 12, and still more preferably 1 to 6.

The number of carbon atoms in the amino group is preferably 0 to 12, more preferably 0 to 6, and still more preferably 0 to 2.

The sulfonate group may be an ester or a salt thereof. In the case of an ester, the number of carbon atoms is preferably 1 to 24, more preferably 1 to 12, and still more preferably 1 to 6.

The phosphate group may be an ester or a salt thereof. In the case of an ester, the number of carbon atoms is preferably 1 to 24, more preferably 1 to 12, and still more preferably 1 to 6.

The above-described functional group may be present as a substituent or may be present as a linking group. For example, the amino group may be present as a divalent imino group or a trivalent nitrogen atom.

It is preferable that the vinyl monomer forming the above-described polymer is represented by the following Formula (b-1).

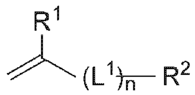

(b−1)

In the formula, $R^1$ represents a hydrogen atom, a hydroxy group, a cyano group, a halogen atom, an alkyl group (having preferably 1 to 24 carbon atoms, more preferably 1 to 12 carbon atoms, and still more preferably 1 to 6 carbon atoms), an alkenyl group (having preferably 2 to 24 carbon atoms, more preferably 2 to 12 carbon atoms, and still more preferably 2 to 6 carbon atoms), an alkynyl group (having preferably 2 to 24 carbon atoms, more preferably 2 to 12 carbon atoms, and still more preferably 2 to 6 carbon atoms), or an aryl group (having preferably 6 to 22 carbon atoms and more preferably 6 to 14 carbon atoms). In particular, a hydrogen atom or an alkyl group is preferable, and a hydrogen atom or a methyl group is more preferable.

$R^2$ represents a hydrogen atom, an alkyl group (having preferably 1 to 24 carbon atoms, more preferably 1 to 12 carbon atoms, and still more preferably 1 to 6 carbon atoms), an alkenyl group (having preferably 2 to 12 carbon atoms and more preferably 2 to 6 carbon atoms), an aryl group (having preferably 6 to 22 carbon atoms and more preferably 6 to 14 carbon atoms), an aralkyl group (having preferably 7 to 23 carbon atoms and more preferably 7 to 15 carbon atoms), a cyano group, a carboxy group, a hydroxy group, a thiol group, a sulfonate group, a phosphate group, a phosphonate group, an aliphatic heterocyclic group having an oxygen atom (having preferably 2 to 12 carbon atoms and more preferably 2 to 6 carbon atoms), or an amino group ($NR^N_2$: $R^N$ represents preferably a hydrogen atom or an alkyl group having 1 to 3 carbon atoms according to the definition described below). In particular, for example, a methyl group, an ethyl group, a propyl group, a butyl group, a cyano group, an ethenyl group, a phenyl group, a carboxy group, a thiol group, or a sulfonate group is preferable.

$R^2$ may further have a substituent T described below. In particular, a carboxy group, a halogen atom (for example, a fluorine atom), a hydroxy group, an alkyl group, or the like may be substituted.

A carboxy group, a hydroxy group, a sulfonate group, a phosphate group, or a phosphonate group may be esterified through, for example, an alkyl group having 1 to 6 carbon atoms.

As the aliphatic heterocyclic group having an oxygen atom, for example, an epoxy group-containing group, an

oxetane group-containing group, or a tetrahydrofuryl group-containing group is preferable.

$L^1$ represents any linking group, and examples thereof include examples of a linking group L described below. Specific examples of the linking group L include an alkylene group having 1 to 6 carbon atoms (having preferably 1 to 3 carbon atoms), an alkenylene group having 2 to 6 carbon atoms (having preferably 2 or 3 carbon atoms), an arylene group having 6 to 24 carbon atoms (having preferably 6 to 10 carbon atoms), an oxygen atom, a sulfur atom, an imino group ($NR^N$), a carbonyl group, a phosphate linking group (-O-P(OH)(O)-O-), a phosphonate linking group (-P(OH)(O)-O-), and a group relating to a combination thereof. The above-described linking group may have any substituent. The number of linking atoms and a preferable range of the number of linking atoms are as described below. Examples of the substituent include the substituent T. For example, an alkyl group or a halogen atom can be used.

n represents 0 or 1.

It is preferable that the acrylic monomer forming the above-described polymer is represented by any one of Formula (b-1) and the following Formulae (b-2) to (b-6).

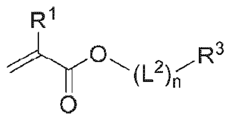
(b−2)

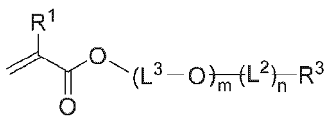
(b−3)

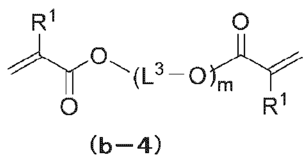
(b−4)

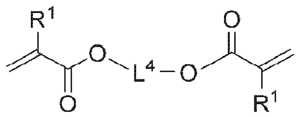
(b−5)

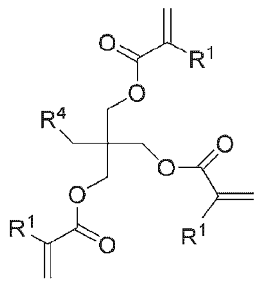
(b−6)

$R^1$ and n have the same definitions as those of Formula (b-1).

$R^3$ has the same definition as that of $R^2$. For example, a hydrogen atom, an alkyl group, an aryl group, a carboxy group, a thiol group, a phosphate group, a phosphonate group, an aliphatic heterocyclic group having an oxygen atom, or an amino group ($NR^N{}_2$) is preferable.

$L^2$ represents any linking group, examples of $L^1$ are preferable, and an oxygen atom, an alkylene group having 1 to 6 carbon atoms (having preferably 1 to 3 carbon atoms), an alkenylene group having 2 to 6 carbon atoms (having preferably 2 or 3 carbon atoms), a carbonyl group, an imino group ($NR^N$), or a group relating to a combination thereof is more preferable.

$L^3$ represents a linking group, examples of $L^2$ are preferable, and an alkylene group having 1 to 6 carbon atoms (having preferably 1 to 3 carbon atoms) is more preferable.

$L^4$ has the same definition as that of $L^1$.

$R^4$ represents a hydrogen atom, an alkyl group having 1 to 6 carbon atoms (having preferably 1 to 3 carbon atoms), a hydroxy group-containing group having 0 to 6 carbon atoms (having preferably 0 to 3 carbon atoms), a carboxy group-containing group having 0 to 6 carbon atoms (having preferably 0 to 3 carbon atoms), or a (meth)acryloyloxy group. $R^4$ may represent the linking group of $L^1$, in which a dimer may be formed.

m represents an integer of 1 to 200, preferably an integer of 1 to 100, and more preferably an integer of 1 to 50.

In Formulas (b-1) to (b-6), a group which may have a substituent such as an alkyl group, an aryl group, an alkylene group, or an arylene group may have any substituent as long as the effects of the present invention can be maintained. Examples of the substituent include the substituent T. Specifically, the group may have any substituent such as a halogen atom, a hydroxy group, a carboxy group, a thiol group, an acyl group, an acyloxy group, an alkoxy group, an aryloxy group, an aryloyl group, an aryloyloxy group, or an amino group.

Specific examples of the monomer (a) will be shown below but do not intend to limit the present invention. In the following formulae, 1 represents 1 to 1,000,000.

A-1
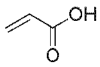
A-2
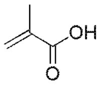
A-3
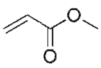
A-4
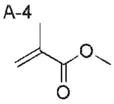
A-5
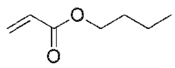
A-6
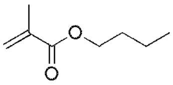

A-7
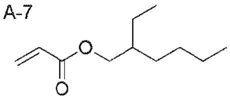
A-8
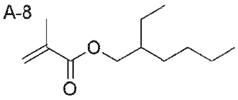
A-9
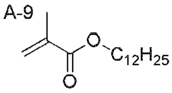
A-10
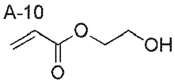

A-11
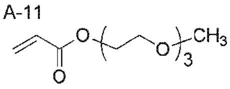
A-12
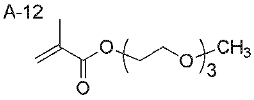
A-13
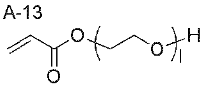
A-14
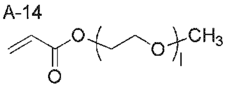

A-15
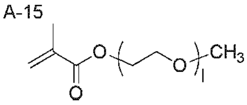
A-16
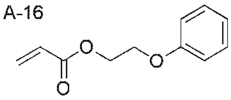
A-17
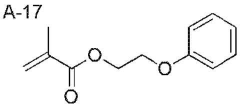
A-18
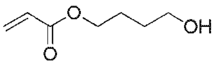

A-19
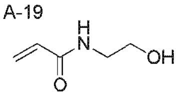
A-20
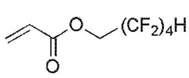
A-21
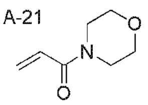
A-22
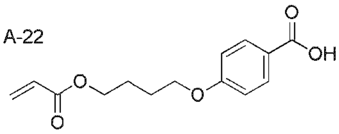

A-23
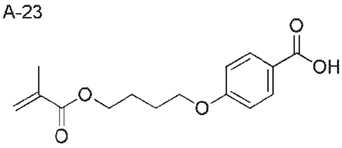
A-24
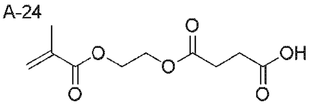
A-25
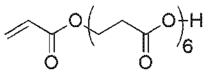

A-26
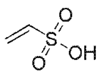
A-27
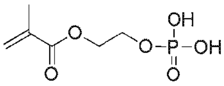
A-28
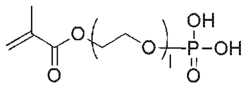
A-29
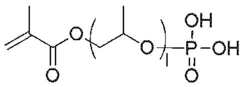

A-30
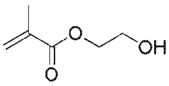
A-31
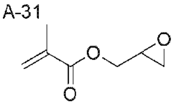
A-32
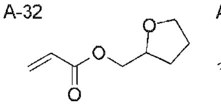
A-33
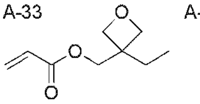
A-34
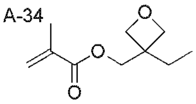

A-35 A-36 A-37 A-38 A-39 A-40 A-41
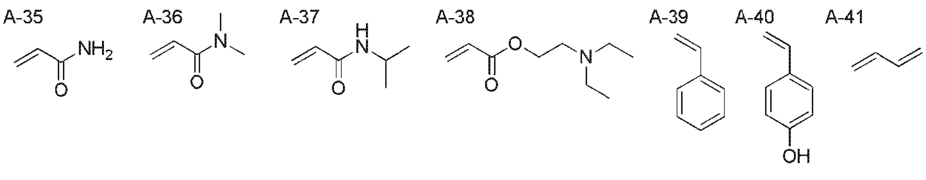

A-42 A-43 A-44 A-45 A-46 A-47
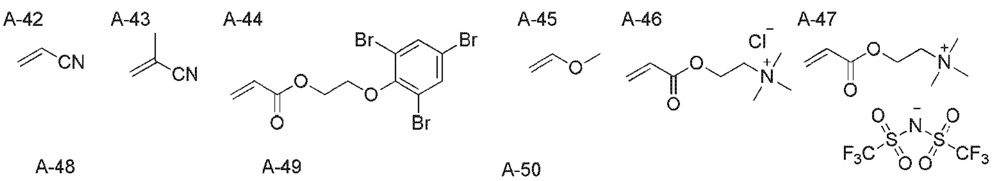

A-48 A-49 A-50
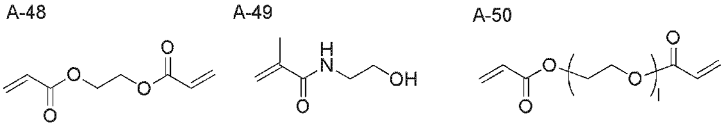

A-51

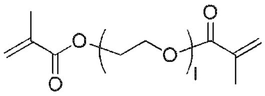

A-52

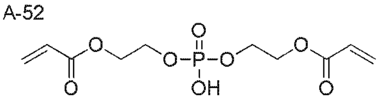

A-53

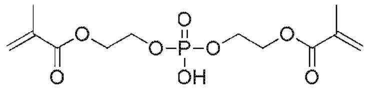

A-54

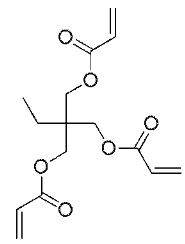

A-55

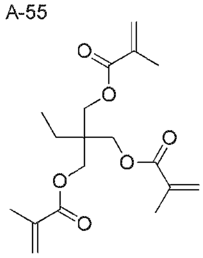

A-56

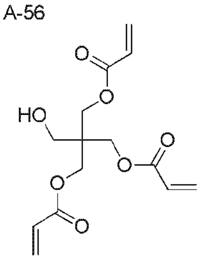

A-57

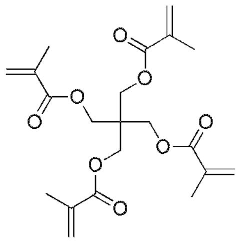

A-58

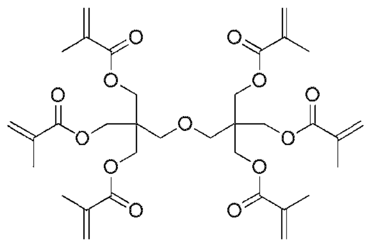

A-59

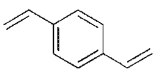

A-60

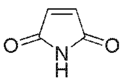

A-61

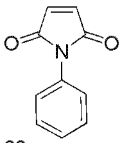

A-62

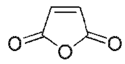

A-63

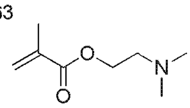

A-64

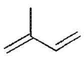

A-65

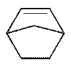

A-66

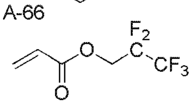

A-67

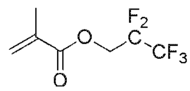

A-68

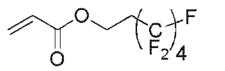

A-69

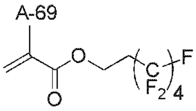

A-70

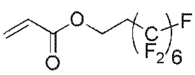

A-71

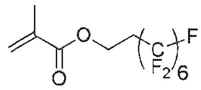

A-72

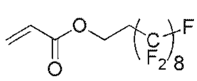

A-73

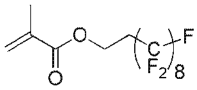

A-74

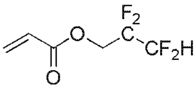

A-75

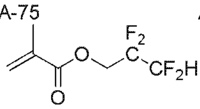

A-76

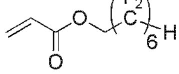

A-77

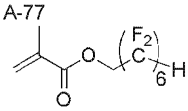

A-78

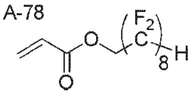

A-79

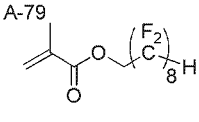

A-80

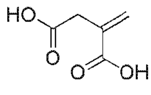

A-81

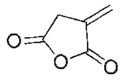

A-82

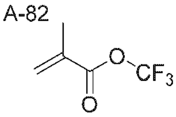

A-83

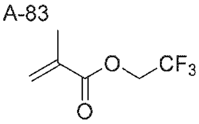

A-84

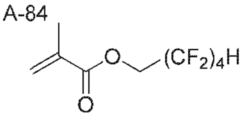

A-85

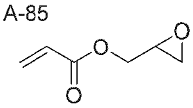

A-86

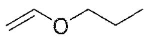

A-87

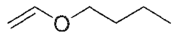

A-88

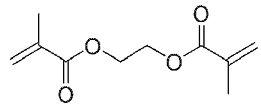

• Macromonomer A

The number-average molecular weight of the macromonomer A is preferably 1,000 or higher, more preferably 2,000 or higher, and still more preferably 3,000 or higher. The upper limit is preferably 500,000 or lower, more preferably 100,000 or lower, and still more preferably 30,000 or lower. The polymer forming the above-described binder particles A includes the side chain derived from the macromonomer A having a molecular weight in the above-described range such that the polymer can be uniformly dispersed in an organic solvent (dispersion medium) more favorably and can be mixed with the solid electrolyte particles for application.

Here, regarding the action of the solid electrolyte composition used for preparing the laminate according to the embodiment of the present invention, it is presumed that the side chain derived from the above-described macromonomer A in the polymer forming the binder particles A has an action of improving dispersibility in a solvent. As a result, the binder particles A are favorably dispersed and thus can cause the inorganic solid electrolyte to be bonded to each other without locally or totally covering the inorganic solid electrolyte. As a result, the solid particles such as the inorganic solid electrolyte particles can be closely attached to each other without interrupting an electrical connection therebetween. Therefore, it is presumed that an increase in the interface resistance between the solid particles is suppressed. Further, the polymer forming the binder particles A includes the above-described side chain such that not only an effect of causing the binder particles A to be attached to the inorganic solid electrolyte particles but also an effect of twisting the side chain can be expected. As a result, it is presumed that, regarding the inorganic solid electrolyte, reduction in interface resistance and improvement of binding properties are simultaneously achieved. Further since the polymer forming the binder particles A has high dispersibility, a step of transferring a layer in an organic solvent can be removed as compared to emulsion polymerization in water or the like, and a solvent having a low boiling point can also be used as a dispersion medium. The molecular weight of the component derived from the macromonomer A can be identified by measuring the molecular weight of a polymerizable compound (macromonomer A) incorporated during the synthesis of the polymer forming the binder particles A.

-Measurement of Molecular Weight-

In the present invention, unless specified otherwise, the molecular weights of the polymer forming the binder A and the macromonomer A refer to number-average molecular weights and are obtained by measuring the number-average molecular weights in terms of standard polystyrene by gel permeation chromatography (GPC). Regarding a measurement method, basically, a value measured using a method under the following condition 1 or condition 2 (preferred) is used. In this case, an appropriate eluent may be selected and used depending on the kind of the polymer.

(Condition 1)

Column: Two TOSOH TSKgel Super AWM-H's (trade name, manufactured by Tosoh Corporation) connected together
Carrier: 10 mM LiBr/N-methylpyrrolidone
Measurement temperature: 40°C
Carrier flow rate: 1.0 ml/min
Sample concentration: 0.1 mass%
Detector: refractive index (RI) detector
(Condition 2)
Column: A column obtained by connecting TOSOH TSKgel Super HZM-H, TOSOH TSKgel Super HZ4000, and TOSOH TSKgel Super HZ2000 (all of which are trade names, manufactured by Tosoh Corporation)
Carrier: tetrahydrofuran
Measurement temperature: 40°C
Carrier flow rate: 1.0 ml/min
Sample concentration: 0.1 mass%
Detector: refractive index (RI) detector

The SP value of the macromonomer A is preferably 10 or lower and more preferably 9.5 or lower. The lower limit value is not particularly limited, but is practically 5 or more.

-Definition of SP Value-

Unless specified otherwise, the SP value in the present specification is obtained using a Hoy method (H. L. Hoy Journal of Painting, 1970, Vol. 42, 76-118). In addition, the unit of the SP value is not shown but is $cal^{1/2}cm^{-3/2}$. The SP value of the side chain component is not substantially different from the SP value of a raw material monomer forming the above-described side chain and may be evaluated using the SP value of the raw material monomer.

The SP value is an index indicating a property of being dispersed in an organic solvent. In addition, it is preferable that the side chain component has a specific molecular weight or higher to adjust the SP value to be the above-described SP value or higher because binding properties with the inorganic solid electrolyte can be improved, affinity to a solvent can be improved, and thus the inorganic solid electrolyte can be stably dispersed.

The main chain of the above-described macromonomer A is not particularly limited, and a typical polymer component can be used. It is preferable that the macromonomer A has a polymerizable unsaturated bond. For example, the macromonomer A may have various vinyl groups or (meth)acryloyl groups. In the present invention, in particular, it is preferable that the macromonomer A has a (meth)acryloyl group.

In the present specification, in a broad sense, "acryl" or "acryloyl" refers to not only an acryloyl group but also a derivative structure thereof, that is, a structure which has a specific substituent at the α-position of the acryloyl group. In a narrow sense, a structure in which the α-position is a hydrogen atom may be referred to as "acryl" or "acryloyl". A structure which has a methyl group at the α-position may be referred to as "methacryl", and any one of acryl (the α-position is a hydrogen atom) or methacryl (the α-position is a methyl group) may be referred to as "(meth)acryl or the like.

It is preferable that the above-described macromonomer A is a repeating unit derived from a monomer selected from a (meth)acrylic acid monomer, a (meth)acrylic acid ester monomer, or a (meth)acrylonitrile. In addition, it is preferable that the above-described macromonomer A includes a polymerizable double bond and a linear hydrocarbon structural unit S having 6 or more carbon atoms (preferably an alkylene group having 6 to 30 carbon atoms and more preferably an alkylene group having 8 to 24 carbon atoms). This way, the macromonomer A forming the side chain includes the linear hydrocarbon structural unit S such that an action of improving affinity to a dispersion medium and improving dispersion stability can be expected.

It is preferable that the above-described macromonomer A has a site represented by the following Formula (b-11).

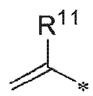

**(b-11)**

$R^{11}$ has the same definition as $R^1$. * represents a binding site.

It is preferable that the above-described macromonomer A has a site represented by any one of the following Formulae (b-12a) to (b-12c). These sites will also be referred to as "specific polymerizable site".

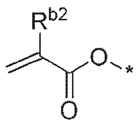
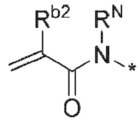
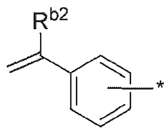

(b-12a) (b-12b) (b-12c)

$R^{b2}$ has the same definition as $R^1$. * represents a binding site. $R^N$ has the same definition described below regarding the substituent T. A benzene ring in Formula (b-12c) and (b-13c) and (b-14c) described below may be substituted with any substituent T.

A structural unit present before the binding site of * is not particularly limited as long as it satisfies a molecular weight as the macromonomer A, but is preferably a structural unit formed of a carbon atom, an oxygen atom, or a hydrogen atom. In this case, this structural unit may have the substituent T, for example, a halogen atom (fluorine atom).

It is preferable that the above-described macromonomer A is a compound represented by any one of the following Formulae (b-13a) to (b-13c) or a compound having a repeating unit represented by any one of Formulae (b-14a) to (b-14c).

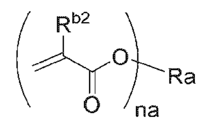
(b-13a)

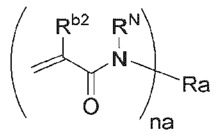
(b-13b)

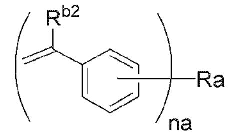
(b-13c)

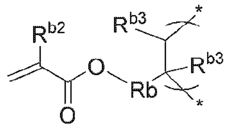
(b-14a)

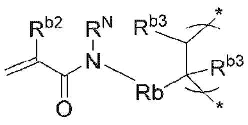
(b-14b)

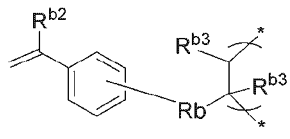
(b-14c)

$R^{b2}$ and $R^{b3}$ have the same definition as that of $R^1$.

na is not particularly limited and is preferably an integer of 1 to 6 and more preferably 1 or 2.

In a case where na represents 1, Ra represents a substituent (preferably an organic group). In a case where na represents 2 or more, Ra represents a linking group.

Rb represents a divalent linking group.

In a case where Ra and Rb represent a linking group, examples of the linking group include the following linking group L. Specifically, it is preferable that the linking group is an alkane linking group having 1 to 30 carbon atoms (in the case of a divalent linking group, an alkylene group), a cycloalkane linking group having 3 to 12 carbon atoms (in the case of a divalent linking group, a cycloalkylene group), an aryl linking group having 6 to 24 carbon atoms (in the case of a divalent linking group, an arylene group), a heteroaryl linking group having 3 to 12 carbon atoms (in the case of a divalent linking group, a heteroarylene group), an ether group (-O-), a sulfide group (-S-), a phosphinidene group (-PR-: R represents a hydrogen atom or an alkyl group having 1 to 6 carbon atoms), a silylene group (-SiRR'-: R and R' represent a hydrogen atom or an alkyl group having 1 to 6 carbon atoms), a carbonyl group, an imino group ($NR^N$:$R^N$ represents preferably a hydrogen atom, an alkyl group having 1 to 6 carbon atoms, or an aryl group having 6 to 10 carbon atoms according to the definition described below), or a combination thereof. In particular, it is preferable that the linking group is an alkane linking group having 1 to 30 carbon atoms (in the case of a divalent linking group, an alkylene group), an aryl linking group having 6 to 24 carbon atoms (in the case of a divalent linking group, an arylene group), an ether group, a carbonyl group, or a combination thereof. In addition, in a case where Ra and Rb represent a linking group, the following linking group L may be used as the linking group.

It is preferable that the linking group represented by Ra and Rb is a linking structure formed of a carbon atom, an oxygen atom, or a hydrogen atom. Alternatively, it is preferable that the linking group represented by Ra and Rb is a structural unit including the following repeating unit (b-15). In a case where Ra and Rb represent a linking group, the number of atoms forming the linking group or the number of linking atoms has the same definition as that of the linking group L described below.

In a case where Ra represents a monovalent substituent, examples of the monovalent substituent include examples of the substituent T described below. In particular, an alkyl group, an alkenyl group, or an aryl group is preferable. In this case, in a case where the linking group L is interposed for substitution, the linking group L may be interposed in the substituent.

Alternatively, in a case where Ra represents a monovalent substituent, it is preferable that the linking group is a structure represented by -Rb-Rc or a structural unit including the following repeating unit (b-15). Here, Rc represents examples of the substituent T described below. In particular, an alkyl group, an alkenyl group, or an aryl group is preferable.

In this case, it is preferable that each of Ra and Rb includes at least a linear hydrocarbon structural unit having 1 to 30 carbon atoms (preferably an alkylene group), and it is more preferable that each of Ra and Rb includes the above-described linear hydrocarbon structural unit S. In addition, each of Ra to Rc may have a linking group or a substituent, and examples thereof include the linking group L or the substituent T described below.

It is preferable that the above-described macromonomer A includes a repeating unit represented by the following Formula (b-15).

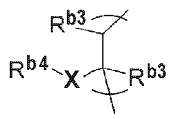
(b−15)

In the formula, Rb4 represents a hydrogen atom or the substituent T described below. Among these, a hydrogen atom, an alkyl group, an alkenyl group, or an aryl group is preferable. In a case where $R^{b4}$ represents an alkyl group, an alkenyl group, or an aryl group, $R^{b4}$ may further have the substituent T described below. For example, $R^{b4}$ may have a halogen atom or a hydroxy group.

X represents a linking group, and examples thereof include examples of the linking group L. Among these, an ether group, a carbonyl group, an imino group, an alkylene group, an arylene group, or a combination thereof is preferable. Specific examples of the linking group relating to the combination include linking groups formed of a carbonyloxy group, an amido group, an oxygen atom, a carbon atom, and a hydrogen atom. In a case where $R^{b4}$ and X include carbon, the preferable number of carbon atoms is the same as that of the substituent T described below and the linking group L. The preferable number of atoms forming the linking group or the preferable number of linking atoms is the same as that of the substituent T described below and the linking group L.

In addition, examples of the macromonomer A include the repeating unit having the above-described polymerizable group, a (meth)acrylate constitutional unit such as Formula (b-15), and an alkylene chain (for example, an ethylene chain) which may have a halogen atom (for example, a fluorine atom). In this case, an ether group (O) or the like may be interposed in the alkylene chain.

Examples of the substituent include a structure in which any substituent is positioned at a terminal of the above-described linking group. Examples of the terminal substituent include the substituent T described below. Among these, examples of $R^1$ are preferable.

In the present specification, the expression of a compound (for example, in a case where a compound is represented by an expression with "compound" added to the end) refers to not only the compound itself but also a salt or an ion thereof. In addition, this expression also refers to a derivative obtained by modifying a part of the compound, for example, by introducing a substituent into the compound within a range where desired effects are exhibited.

A substituent (the same shall be applied to a linking group) which is not specified in the present specification regarding whether to be substituted or unsubstituted may have any substituent. The same shall be applied to a compound which is not specified in the present specification regarding whether to be substituted or unsubstituted. Preferable examples of the substituent include a substituent T described below.

Examples of the substituent T are as follows:

an alkyl group (preferably an alkyl group having 1 to 20 carbon atoms, for example, methyl, ethyl, isopropyl, t-butyl, pentyl, heptyl, 1-ethylheptyl, benzyl, 2-ethoxyethyl, or 1-carboxymethyl); an alkenyl group (preferably an alkenyl group having 2 to 20 carbon atoms, for example, vinyl, allyl, or oleyl); an alkynyl group (preferably an alkynyl group having 2 to 20 carbon atoms, for example, ethynyl, butadiynyl, or phenyl-ethynyl); a cycloalkyl group (preferably a cycloalkyl group having 3 to 20 carbon atoms, for example, cyclopropyl, cyclopentyl, cyclohexyl, or 4-methylcyclohexyl); an aryl group (preferably an aryl group having 6 to 26 carbon atoms, for example, phenyl, 1-naphthyl, 4-methoxyphenyl, 2-chlorophenyl, or 3-methylphenyl); a heterocyclic group (preferably a heterocyclic group having 2 to 20 carbon atoms and more preferably a 5- or 6-membered heterocyclic group having at least one oxygen atom, sulfur atom, or nitrogen atom, for example, tetrahydropyran, tetrahydrofuran, 2-pyridyl, 4-pyridyl, 2-imidazolyl, 2-benzimidazolyl, 2-thiazolyl, or 2-oxazolyl); an alkoxy group (preferably an alkoxy group having 1 to 20 carbon atoms, for example, methoxy, ethoxy, isopropyloxy, or benzyloxy); an aryloxy group (preferably an aryloxy group having 6 to 26 carbon atoms, for example, phenoxy, 1-naphthyloxy, 3-methylphenoxy, or 4-methoxyphenoxy); an alkoxycarbonyl group (preferably an alkoxycarbonyl group having 2 to 20 carbon atoms, for example, ethoxycarbonyl or 2-ethylhexyloxycarbonyl); an aryloxycarbonyl group (preferably an aryloxycarbonyl group having 6 to 26 carbon atoms, for example, phenoxycarbonyl, 1-naphthyloxycarbonyl, 3-methylphenoxycarbonyl, or 4-methoxyphenoxycarbonyl); an amino group (preferably an amino group having 0 to 20 carbon atoms, an alkylamino group, or an arylamino group, for example, amino, N,N-dimethylamino, N,N-diethylamino, N-ethylamino, or anilino); a sulfamoyl group (preferably a sulfamoyl group having 0 to 20 carbon atoms, for example, N,N-dimethylsulfamoyl or N-phenylsufamoyl); an acyl group (an alkylcarbonyl group, an alkenylcarbonyl group, an alkynylcarbonyl group, an arylcarbonyl group, or a heterocyclic carbonyl group, preferably an acyl group having 1 to 20 carbon atoms, for example, acetyl, propionyl, butyryl, octanoyl, hexadecanoyl, acryloyl, methacryloyl, crotonoyl, benzoyl, naphthoyl, or nicotinoyl); an acyloxy group (an alkylcarbonyloxy group, an alkenylcarbonyloxy group, an alkynylcarbonyloxy group, an arylcarbonyloxy group, or a heterocyclic carbonyloxy group, preferably an acyloxy group having 1 to 20 carbon atoms, for example, acetyloxy, propionyloxy, butyryloxy, octanoyloxy, hexadecanoyloxy, acryloyloxy, methacryloyloxy, crotonoyloxy, benzoyloxy, naphthoyloxy, or nicotinoyloxy); an aryloyloxy group (preferably an aryloyloxy group having 7 to 23 carbon atoms, for example, benzoyloxy);a carbamoyl group (preferably a carbamoyl group having 1 to 20 carbon atoms, for example, N,N-dimethylcarbamoyl or N-phenylcarbamoyl); an acylamino group (preferably an acylamino group having 1 to 20 carbon atoms, for example, acetylamino or benzoylamino); an alkylthio group (preferably an alkylthio group having 1 to 20 carbon atoms, for example, methylthio, ethylthio, isopropylthio, or benzylthio); an arylthio group (preferably an arylthio group having 6 to 26 carbon atoms, for example, phenylthio, 1-naphthylthio, 3-methylphenylthio, or 4-methoxyphenylthio); an alkylsulfonyl group (preferably an alkylsulfonyl group having 1 to 20 carbon atoms, for example, methylsulfonyl or ethylsulfonyl), an arylsulfonyl group (preferably an arylsulfonyl group having 6 to 22 carbon

atoms, for example, benzenesulfonyl), an alkylsilyl group (preferably an alkylsilyl group having 1 to 20 carbon atoms, for example, monomethylsilyl, dimethylsilyl, trimethylsilyl, or triethylsilyl); an arylsilyl group (preferably an arylsilyl group having 6 to 42 carbon atoms, for example, triphenylsilyl), a phosphoryl group (preferably a phosphate group having 0 to 20 carbon atoms, for example, $-OP(=O)(R^P)_2$), a phosphonyl group (preferably a phosphonyl group having 0 to 20 carbon atoms, for example, $-P(=O)(R^P)_2$), a phosphinyl group (preferably a phosphinyl group having 0 to 20 carbon atoms, for example, $-P(R^P)_2$), a sulfo group (sulfonate group), a hydroxy group, a sulfanyl group, a cyano group, and a halogen atom (for example, a fluorine atom, a chlorine atom, a bromine atom, or an iodine atom).

In addition, each exemplary group of the substituent T may be further substituted with the substituent T.

In a case where a compound or a substituent, a linking group, or the like includes, for example, an alkyl group, an alkylene group, an alkenyl group, an alkenylene group, an alkynyl group, and/or an alkynylene group, these groups may be cyclic or branched, may be linear or branched, and may be substituted or unsubstituted as described above.

In a case where each of the substituents defined in the present specification is substituted in a state where the linking group L described below is interposed in a range where the effects of the present invention are exhibited, the linking group L may be interposed in the structure. For example, the following heterocyclic linking group may be further interposed in the structure of an alkyl group, an alkylene group, an alkenyl group, an alkenylene group, or the like.

As the linking group L, a hydrocarbon linking group [an alkylene group having 1 to 10 carbon atoms (more preferably 1 to 6 carbon atoms and still more preferably 1 to 3 carbon atoms), an alkenylene group having 2 to 10 carbon atoms (more preferably 2 to 6 carbon atoms still more preferably 2 to 4 carbon atoms), an alkynylene group having 2 to 10 carbon atoms (more preferably 2 to 6 carbon atoms still more preferably 2 to 4 carbon atoms), or an arylene group having 6 to 22 carbon atoms (more preferably 6 to 10 carbon atoms)], a heterocyclic linking group [a carbonyl group (-CO-), a thiocarbonyl group (-CS-), an ether group (-O-), a thioether group (-S-), an imino group ($-NR^N-$), an imine linking group ($R^N-N=C<$, $-N=C(R^N)-$), a sulfonyl group ($-SO_2-$), a sulfinyl group (-SO-), a phosphate linking group (-O-P(OH)(O)-O-), a phosphonate linking group (-P(OH)(O)-O-), or a divalent heterocyclic group], or a linking group including a combination thereof is preferable. In a case where a ring is formed by condensation, the above-described hydrocarbon linking group may be linked by appropriately forming a double bond or a triple bond. As the formed ring, a 5-membered ring or a 6-membered ring is preferable. As the 5-membered ring, a nitrogen-containing 5-membered ring is preferable, and examples of a compound forming the ring include pyrrole, imidazole, pyrazole, indazole, indole, benzoimidazole, pyrrolidine, imidazolidine, pyrazolidine, indoline, carbazole, and a derivative thereof. Examples of the 6-membered ring include piperidine, morpholine, piperazine, a derivative thereof. In addition, in a case where a compound or a substituent, a linking group, or the like contains, for example, an aryl group or a heterocyclic group, these groups may have a monocyclic or fused ring and may be substituted or unsubstituted as described above.

$R^N$ represents a hydrogen atom or a substituent, and the substituent has the same definition as that of the substituent T. As the substituent, an alkyl group (having preferably 1 to 24 carbon atoms, more preferably 1 to 12 carbon atoms, still more preferably 1 to 6 carbon atoms, and still more preferably 1 to 3 carbon atoms), an alkenyl group (having preferably 2 to 24 carbon atoms, more preferably 2 to 12 carbon atoms, still more preferably 2 to 6 carbon atoms, and still more preferably 2 or 3 carbon atoms), an alkynyl group (having preferably 2 to 24 carbon atoms, more preferably 2 to 12 carbon atoms, still more preferably 2 to 6 carbon atoms, and still more preferably 2 or 3 carbon atoms), an aralkyl group (having preferably 7 to 22 carbon atoms, more preferably 7 to 14 carbon atoms, and still more preferably 7 to 10 carbon atoms), or an aryl group (having preferably 6 to 22 carbon atoms, more preferably 6 to 14 carbon atoms, and still more preferably 6 to 10 carbon atoms) is preferable.

$R^P$ represents a hydrogen atom, a hydroxy group, or a substituent. As the substituent, an alkyl group (having preferably 1 to 24 carbon atoms, more preferably 1 to 12 carbon atoms, still more preferably 1 to 6 carbon atoms, and still more preferably 1 to 3 carbon atoms), an alkenyl group (having preferably 2 to 24 carbon atoms, more preferably 2 to 12 carbon atoms, still more preferably 2 to 6 carbon atoms, and still more preferably 2 or 3 carbon atoms), an alkynyl group (having preferably 2 to 24 carbon atoms, more preferably 2 to 12 carbon atoms, still more preferably 2 to 6 carbon atoms, and still more preferably 2 or 3 carbon atoms), an aralkyl group (having preferably 7 to 22 carbon atoms, more preferably 7 to 14 carbon atoms, and still more preferably 7 to 10 carbon atoms), an aryl group (having preferably 6 to 22 carbon atoms, more preferably 6 to 14 carbon atoms, and still more preferably 6 to 10 carbon atoms), or an alkoxy group (having preferably 1 to 24 carbon atoms, more preferably 1 to 12 carbon atoms, still more preferably 1 to 6 carbon atoms, and still more preferably 1 to 3 carbon atoms), an alkenyloxy group (having preferably 2 to 24 carbon atoms, more preferably 2 to 12 carbon atoms, still more preferably 2 to 6 carbon atoms, and still more preferably 2 or 3 carbon atoms), an alkynyloxy group (having preferably 2 to 24 carbon atoms, more preferably 2 to 12 carbon atoms, still more preferably 2 to 6 carbon atoms, and still more preferably 2 or 3 carbon atoms), an aralkyloxy group (having preferably 7 to 22 carbon atoms, more preferably 7 to 14 carbon atoms, and still more preferably 7 to 10 carbon atoms), an aryloxy group (having preferably 6 to 22 carbon atoms, more preferably 6 to 14 carbon atoms, and still more preferably 6 to 10 carbon atoms) is preferable.

In the present specification, the number of atoms forming the linking group is preferably 1 to 36, more preferably 1 to 24, still more preferably 1 to 12, and still more preferably 1 to 6. The number of linking atom in the linking group is

preferably 10 or less and more preferably 8 or less. The lower limit is 1 or more. The number of linking atoms refers to the minimum number of atoms that is positioned on a path connecting predetermined structural units and relates to linking. For example, in the case of $-CH_2-C(=O)-O-$, the number of atoms forming the linking group is 6, but the number of linking atom is 3.

Specific examples of the combination of linking groups include the following examples. An oxycarbonyl group (-OCO-), a carbonate group (-OCOO-), an amido group (-CONH-), a urethane group (-NHCOO-), a urea group (-NHCONH-), a (poly)alkyleneoxy group (-(Lr-O)x-), a carbonyl(poly)oxyalkylene group (-CO-(O-Lr)x-), a carbonyl(poly)alkyleneoxy group (-CO-(Lr-O)x-), a carbonyloxy(poly)oxyalkyleneoxy group (-COO-(Lr-O)x-), a (poly)alkyleneimino group (-(Lr-$NR^N$)x-), an alkylene(poly)iminoalkylene group (-Lr-($NR^N$-Lr)x-), a carbonyl(poly)iminoalkylene group (-CO-($NR^N$-Lr)x-), a carbonyl(poly)alkyleneimino group (-CO-(Lr-$NR^N$)x-), a (poly)ester group (-(CO-O-Lr)x-), -(O-CO-Lr)x-, -(O-Lr-CO)x-, -(Lr-CO-O)x-, -(Lr-O-CO)x-), a (poly)amido group (-(CO-$NR^N$-Lr)x-, -($NR^N$-CO-Lr)x-, -($NR^N$-Lr-CO)x-, -(Lr-CO-$NR^N$)x-, and -(Lr-$NR^N$-CO)x-). x represents an integer of 1 or more, preferably 1 to 500, and more preferably 1 to 100.

It is preferable that Lr represents an alkylene group, an alkenylene group, or an alkynylene group. The number of carbon atoms in Lr is preferably 1 to 12, more preferably 1 to 6, and still more preferably 1 to 3. A plurality of Lr's, a plurality of $R^N$'s, a plurality of $R^P$'s, a plurality of x's, or the like are not necessarily the same. The direction of the linking group is not limited to that described above and may be appropriately adjusted according to a predetermined chemical formula.

As the above-described macromonomer A, a macromonomer having an ethylenically unsaturated bond at a terminal may be used. Here, the macromonomer A consists of a polymer chain portion and a polymerizable functional group portion having an ethylenically unsaturated double bond at a terminal.

A copolymerization ratio of the component derived from the macromonomer A is not particularly limited but is preferably 1 mass% or higher, more preferably 3 mass% or higher, and still more preferably 5 mass% or higher with respect to the polymer forming the binder particles A. The upper limit of the concentration is preferably 50 mass% or lower, more preferably 30 mass% or lower, and still more preferably 20 mass% or lower.

• Specification of Binder Particles A or the like

The number-average molecular weight of the polymer forming the binder particles A is preferably 5,000 or more, more preferably 10,000 or higher, and still more preferably 30,000 or higher. The upper limit is preferably 1,000,000 or lower and more preferably 200,000 or lower.

The average particle size of the binder particles A is preferably 1,000 nm or less, more preferably 750 nm or less, still more preferably 500 nm or less, still more preferably 300 nm or less, and still more preferably 200 nm or less. The lower limit value is preferably 10 nm or more, more preferably 20 nm or more, still more preferably 30 nm or more, and still more preferably 50 nm or more. Unless specified otherwise, the average particle size of the binder particles A according to the embodiment of the present invention is a value obtained with a measurement method using a scanning electron microscope described below in Examples.

It is preferable that the particle size of the above-described binder particles A is less than the average particle size of the inorganic solid electrolyte.

By adjusting the particle size of binder particles A to be in the above-described range, excellent adhesiveness and suppression of an interface resistance can be realized.

It is preferable that the polymer forming the binder particles A according to the embodiment of the present invention is amorphous. In the present invention, the polymer "being amorphous" typically refers to a polymer that shows no endothermic peak caused by crystal melting during measurement using a measurement method of a glass transition temperature described in paragraph "0143" of JP2015-088486A. The Tg of the above-described polymer is preferably 50°C or lower, more preferably 30°C or lower, still more preferably 20°C or lower, and still more preferably 0°C or lower. The lower limit value s preferably -80°C or higher, more preferably -70°C or higher, and still more preferably -60°C or higher. Unless specified otherwise, the glass transition temperature of the polymer forming the binder particles A according to the embodiment of the present invention is a value obtained using the above-described measurement method.

In the prepared all-solid state secondary battery, the glass transition temperature can be measured, for example, by disassembling the battery to peel off an electrode, putting the electrode into water to disperse a material thereof, filtering the dispersion liquid, collecting the remaining solid, and measuring the glass transition temperature of the solid using the above-described Tg measurement method.

The binder particles A may consist of the polymer forming the binder particles, or may be formed in a form including another material (for example, a polymer, a low molecular weight compound, or an inorganic compound). It is preferable that the binder particles consist of only the forming polymer.

(ii) Binder (Binder Particles B) having High Adhesiveness with Negative Electrode Active Material Layer

The binder particles B includes a component derived from a macromonomer B having a mass average molecular weight of 1,000 or higher and lower than 1,000,000 and a ring structure of two or more rings.
It is preferable that the polymer forming the binder particles B is polyamide, polyimide, polyurea, polyurethane, or an acrylic resin.

• Monomer used for Synthesis of Binder Particles B

A monomer other than the macromonomer B used for the synthesis of the binder particles B is not particularly limited. It is preferable that the monomer is a monomer having a polymerizable unsaturated bond. For example, various vinyl monomers and/or acrylic monomers can be used. Specifically, the monomer (a) described in the above-described binder particles A can be used.
Examples of the monomer used as the synthetic raw material of the polymer forming the binder particles B include the exemplary compounds represented by "A-numeral". However, the present invention is not interpreted to be limited to this configuration.

• Component derived from Macromonomer B

The component derived from the macromonomer B having a mass average molecular weight of 1000 or higher is incorporated into the polymer forming the binder particles B used in the present invention. In the polymer forming the above-described binder particles B, the component derived from the macromonomer B forms a side chain with respect to the main chain.
The mass average molecular weight of the macromonomer B is preferably 2,000 or higher and more preferably 3,000 or higher. The upper limit is lower than 1,000,000, preferably 500,000 or lower, more preferably 100,000 or lower, and still more preferably 30,000 or lower. The polymer forming the above-described binder particles B includes the side chain having a molecular weight in the above-described range such that the polymer can be uniformly dispersed in an organic solvent more favorably and can be mixed with the solid electrolyte particles for application.
The mass average molecular weight of the macromonomer B can be measured using the same method as the method of measuring the number-average molecular weight of the macromonomer A.
The binder particles B including the component derived from the macromonomer B exhibits the same action as that of the binder particles A.
The SP value of the macromonomer B is preferably 10 or lower and more preferably 9.5 or lower. The lower limit value is not particularly limited, but is practically 5 or more.
In the polymer forming the binder particles B, in a case where the graft portion derived from the above-described macromonomer B is the side chain and the other portion is the main chain, this main chain structure is not particularly limited. It is preferable that the macromonomer B has a polymerizable unsaturated bond. For example, the macromonomer B may have various vinyl groups or (meth)acryloyl groups. In the present invention, in particular, it is preferable that the macromonomer B has a (meth)acryloyl group.
It is preferable that the component derived from the above-described macromonomer B includes a component (repeating unit) selected from a (meth)acrylic acid component, a (meth)acrylic acid ester component, or a (meth)acrylonitrile component in the graft chain. In addition, it is preferable that the above-described macromonomer B includes a polymerizable double bond and a linear hydrocarbon structural unit S having 6 or more carbon atoms (preferably an alkylene group having 6 to 30 carbon atoms and more preferably an alkylene group having 8 to 24 carbon atoms; a part of methylene forming these alkylene groups may have a substituent, and a part of methylene forming these alkylene groups may be replaced with another structure (for example, an oxygen atom, a sulfur atom, an imino group, or a carbonyl group). This way, the macromonomer B includes the linear hydrocarbon structural unit S such that an action of improving affinity to a solvent and improving dispersion stability can be expected.
It is preferable that the above-described macromonomer B has a site represented by Formula (b-1).
As the macromonomer B, a polyurea or a polyurethane including a structural portion (solvated portion) that is solvated with a hydrocarbon solvent and a structural portion (non-solvated portion) that is not solvated with a hydrocarbon solvent is also preferable. As the polyurea or the polyurethane, particles which have a long-chain alkyl group having 6 or more carbon atoms are preferable. The particles can be obtained, for example, by causing a diol compound (a so-called lipophilic diol) that includes a long-chain alkyl group having 6 or more carbon atoms, an isocyanate compound, and a polyamine (in the case of a polyurethane, polyol) compound to react with each other in a non-aqueous medium. That is, particles can be imparted to the structural portion that is solvated with a hydrocarbon solvent, for example, a long-chain alkyl group having 6 or more carbon atoms. Instead of the lipophilic diol and the isocyanate compound, a terminal NCO prepolymer consisting of these compounds may be provided for the reaction.

The lipophilic diol is a polyol having two or less functional groups, in which the molecular weight is preferably 700 or higher and lower than 5000. However, the lipophilic diol is not limited to this configuration. Specific examples of the lipophilic diol include a diol obtained by introducing about 2 or less hydroxyl groups into a fat and oil using a method of converting various fats and oils into alcoholysis products using a lower alcohol and/or a glycol, a method of partially saponifying a fat and oil, a method of esterifying a hydroxy group-containing aliphatic acid using a glycol, or the like, and a fat and oil-modified polyol, a terminal alcohol-modified acrylic resin, and a terminal alcohol-modified polyester described in J. H. SAUNDERS, K. C. FRISCH, et al., POLYURETHANES, CHEMISTRY AND TECHNOLOGY PART 1, Chemistry (pp. 48 to 53, published on 1962) and the like.

Among these, examples of the hydroxy group-containing aliphatic acid include ricinoleic acid, 12-hydroxystearic acid, castor oil fatty acid, and hydrogenated castor oil fatty acid.

Examples of the terminal alcohol-modified acrylic resin include a polymer of a long-chain alkyl (meth)acrylate in which thioglycerol is used as a chain transfer agent. As the polymer of the alkyl (meth)acrylate, one or two or more alkyl (meth)acrylates having 6 or more and less than 30 carbon atoms are suitably used. An alkyl (meth)acrylate having 8 or more and less than 25 carbon atoms (preferably 10 or more and less than 20 carbon atoms) is more preferable.

As the isocyanate compound, all the typical isocyanate compound can be used. Among these, an aliphatic or alicyclic diisocyanate compound such as hexamethylene diisocyanate, hydrogenated toluene diisocyanate (hydrogenated TDI), hydrogenated diphenylmethane diisocyanate (hydrogenated MDI), or isophorone diisocyanate is more preferable.

Examples of the amine compound include ethylenediamine, diaminopropane, diaminobutane, hexamethylenediamine, trimethylhexamethylenediamine, N-aminoethylpiperazine, bis-aminopropyl piperazine, polyoxypropyleneamine, 4,4'-diaminodicyclohexylmethane, isophorone diamine, thiourea, and methyliminobispropylamine. As the amine compound, one kind may be used alone, or a mixture of two or more kinds may be used.

As the above-described macromonomer B, a macromonomer having an ethylenically unsaturated bond at a terminal may be used. Here, the macromonomer B consists of a polymer chain portion and a polymerizable functional group portion having an ethylenically unsaturated double bond at a terminal.

A copolymerization ratio of the component derived from the macromonomer B is not particularly limited but is preferably 3 mass% or higher, more preferably 10 mass% or higher, and still more preferably 20 mass% or higher with respect to the polymer forming the binder particles B. The upper limit of the concentration is preferably 70 mass% or lower, more preferably 60 mass% or lower, and still more preferably 50 mass% or lower. The copolymerization ratio can be calculated from the addition amount (amount used) of the monomer used for the synthesis of the binder particles B. The addition amount (amount used) of the monomer that has a group having a ring structure of two or more rings is not included.

-Group having Ring Structure of Two or More Rings-

The group having a ring structure of two or more rings that is used in the present invention is not particularly limited as long as it is a group in which at least one hydrogen atom in a compound which has a group having a ring (preferably a fused ring) structure having two or more rings is replaced with a direct bond. The group having a ring structure of two or more rings is preferably a group in which at least one hydrogen atom in a compound represented by the following Formula (D) is replaced with a direct bond, more preferably a group in which one or two hydrogen atoms are replaced with a direct bond, and still more preferably a group in which one hydrogen atom is replaced with a direct bond.

The group formed of the compound represented by the following Formula (D) has excellent affinity to a carbonaceous material. Therefore, the dispersion stability of the solid electrolyte composition including the binder particles B can be improved, and the binding properties of the laminate and the electrode sheet for an all-solid state secondary battery according to the embodiment of the present invention can be improved. Along with the improvement of the dispersion stability and the improvement of the binding properties, an all-solid state secondary battery prepared using the laminate and the electrode sheet for an all-solid state secondary battery according to the embodiment of the present invention has excellent cycle characteristics. From the viewpoint of improving cycle characteristics, the group having a ring structure of two or more rings is preferably a group having a ring structure of three or more rings and more preferably a group having a ring structure of four or more rings. The upper limit of the number of rings in the ring structure is not particularly limited and is preferably 18 or less, more preferably 16 or less, still more preferably 12 or less, still more preferably 8 or less, and still more preferably 6 or less.

Formula (D)

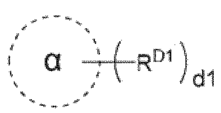

In Formula (D), a ring α represents a ring composed of two or more rings, $R^{D1}$ represents a substituent that is bonded to an atom forming the ring α, d1 represents an integer of 1 or more. In a case where d1 represents 2 or more, a plurality of $R^{D1}$'s may be the same as or different from each other. $R^{D1}$'s which are substituted with atoms adjacent to each other may be bonded to each other to form a ring. The number of rings in the ring α is 2 or more, more preferably 3 or more, and still more preferably 4 or more. In addition, the number of rings in the ring α is not particularly limited and is preferably 18 or less, more preferably 16 or less, still more preferably 12 or less, still more preferably 8 or less, and still more preferably 6 or less. It is preferable that the ring α includes a ring structure of a 3- or more membered ring, it is more preferable that the ring α includes a ring structure of a 4- or more membered ring, it is still more preferable that the ring α includes a ring structure of a 5- or more membered ring, it is still more preferable that the ring α includes a 6-membered ring structure. In addition, it is preferable that the ring α includes a ring structure of a 24- or less membered ring, it is more preferable that the ring α includes a ring structure of a 12- or less membered ring, it is still more preferable that the ring α includes a ring structure of a 8- or less membered ring, and it is still more preferable that the ring α includes a ring structure of a 6-membered ring.

It is preferable that the ring α includes a structure of an aliphatic hydrocarbon ring, an unsaturated hydrocarbon ring, an aromatic ring, or a heterocycle, or a combination thereof. Examples of a specific structure of the aliphatic hydrocarbon ring include cyclopropane, cyclobutane, cyclopentane, cyclohexane, cycloheptane, cyclooctane, cyclononane, cyclodecane, cycloundecane, cyclododecane, and decalin.

Examples of a specific structure of the unsaturated hydrocarbon ring include a ring structure in which a part of the aliphatic hydrocarbon ring is replaced with a double bond. Examples of the ring structure include cyclobutene, cyclopentene, dicyclopentadiene, cyclohexene, cyclohexadiene, cyclooctene, and cyclooctadiene.

Examples of a specific structure of the aromatic ring include benzene, naphthalene, anthracene, pyrene, tetracene, pentacene, phenanthrene, chrysene, triphenylene, tetraphene, picene, pentaphene, perylene, helicene, and coronene.

Examples of a specific structure of the heterocycle include ethyleneimine, ethylene oxide, ethylene sulfide, acetylene oxide, azacyclobutane, 1,3-propylene oxide, trimethylene sulfide, pyrrolidine, tetrahydrofuran, tetrahydrothiophene, pyrrole, furan, thiophene, piperidine, tetrahydropyran, tetrahydrothiopyran, pyridine, hexamethyleneimine, hexamethylene oxide, hexamethylene sulfide, azatropilidene, oxacycloheptatriene, thiotropilidene, imidazole, oxazole, thiazole, imidazoline, pyrazine, morpholine, thiazine, indole, isoindole, benzoimidazole, purine, quinoline, isoquinoline, quinoxaline, cinnoline, pteridine, chromene, isocromene, acridine, xanthene, acridine, benzoquinoline, carbazole, benzo-O-cinnoline, porphyrin, chlorine, and choline.

As the ring α, a structure including cyclobutane, cyclopentane, cyclohexane, cycloheptane, cyclooctane, cyclobutene, cyclopentene, dicyclopentadiene, cyclohexene, cyclohexadiene, cyclooctene, benzene, naphthalene, anthracene, pyrene, tetracene, phenanthrene, triphenylene, pyrrolidine, tetrahydrofuran, tetrahydrothiophene, pyrrole, furan, thiophene, piperidine, pyridine, hexamethyleneimine, hexamethylene oxide, hexamethylene sulfide, imidazole, oxazole, thiazole, imidazoline, pyrazine, morpholine, thiazine, indole, isoindole, benzoimidazole, quinoline, benzoquinoline, xanthene, carbazole, or porphyrin is preferable, a structure including cyclopentane, cyclohexane, cycloheptane, cyclopentene, dicyclopentadiene, cyclohexene, cyclohexadiene, benzene, naphthalene, anthracene, pyrene, triphenylene, pyrrole, furan, thiophene, piperidine, pyridine, imidazole, oxazole, or indole is more preferable, and a structure including cyclopentane, cyclohexane, cyclohexene, or pyrene is still more preferable.

Preferable examples of the substituent represented by $R^{D1}$ include the above-described substituent T.

In addition, as the substituent represented by $R^{D1}$=O is also preferable. Examples of the ring α having =O include a structure having anthraquinone.

As described above, in order to introduce the ring structure of two or more rings into the side chain of the polymer forming the binder particles B used in the present invention and/or the side chain of the macromonomer B component, it is preferable that $R^{D1}$ has the site represented by Formula (b-1) and/or the above-described linking group L and $R^{D1}$ represents $P^1$ described below.

The polymer forming the binder particles B used in the present invention may have the above-described group having the ring structure of two or more rings at the main chain, a side chain, or a terminal of the polymer.

Hereinafter, a case where the compound having the ring structure of two or more rings is a compound represented by Formula (D) will be described as an example.

"Being included at the main chain of the polymer" represents that the compound represented by Formula (D) is incorporated into the polymer as a structure in which at least two hydrogen atoms in the compound represented by the following Formula (D) are replaced with a direct bond, and functions as the main chain as a repeating structure of the polymer. On the other hand, "being included at the side chain of the polymer" represents being incorporated into the polymer as a structure in which one hydrogen atom in the compound represented by the following Formula (D) is replaced with a direct bond. In addition, "being included at the terminal of the polymer" represents being incorporated into the polymer as a structure in which one hydrogen atom in the compound represented by the following Formula (D) is replaced with a direct bond, and functioning as a polymer chain. Here, even in a case where the group is included at a plurality

of main chains, side chains, or terminals of the polymer, the same can be applied.

In the present invention, that the polymer forming the binder particles B includes the group having the ring structure of two or more rings preferably at the main chain or the side chain, more preferably at the side chain, and still more preferably the side chain of the component derived from the macromonomer B (the graft chain having the component derived from the macromonomer B). Being included at the side chain of the macromonomer B component represents that a repeating unit having, as a side chain, a structure in which one hydrogen atom in the compound represented by Formula (D) is replaced with a direct bond is incorporated into the macromonomer B component as one repeating unit forming the macromonomer B component.

The group having the ring structure of two or more rings is incorporated into the side chain of the polymer forming the binder particles B used in the present invention such that the mobility of the group having the ring structure of two or more rings is improved and thus adsorption is improved. As a result, binding properties between the solid particles in the all-solid state secondary battery can be further improved. The group having the ring structure of two or more rings is incorporated into the side chain of the macromonomer B component of the polymer forming the binder particles B used in the present invention such that the proportion of the group having the ring structure of two or more rings present on the surfaces of the binder particles B increases, and binding properties between the solid particles in the all-solid state secondary battery can be further improved.

In the present invention, the content of the repeating unit that has the group having the ring structure of two or more rings is preferably 10 mass% to 85 mass%, more preferably 15 mass% to 80 mass%, and still more preferably 18 mass% to 70 mass% with respect to 100 mass% of the polymer forming the binder particles B. It is preferable that the content of the repeating unit that has the group having the ring structure of two or more rings is in the above-described range such that the adsorption and the dispersion stability of the binder particles B are simultaneously achieved.

The content of the repeating unit that has the group having the ring structure of two or more rings can be calculated from the addition amount (amount used) of the monomer used for the synthesis of the binder particles B. In Table 1 of WO2017/131093A, among components represented by M1 to M4 and MM, the total content of components that have the group having the ring structure of two or more rings refers to the content of the repeating unit that has the group having the ring structure of two or more rings. For example, in BP-5 in Table 1, M4 (B-5) and MM (MM-2) have the group having the ring structure of two or more rings, and the content of the repeating unit that has the group having the ring structure of two or more rings is 40 mass%.

In addition, in the present invention, it is preferable that the compound represented by Formula (D) is at least one of a compound represented by the following Formula (1) or an aliphatic hydrocarbon represented by the following Formula (2).

The compound represented by the following Formula (1) and the aliphatic hydrocarbon represented by the following Formula (2) have affinity to the carbonaceous material as the negative electrode active material. Therefore, the dispersion stability of the solid electrolyte composition including the above-described compound is further improved, and the binding properties of the laminate and the electrode sheet for an all-solid state secondary battery according to the embodiment of the present invention can be improved. In addition, along with the improvement of the dispersion stability and the improvement of the binding properties, cycle characteristics of the all-solid state secondary battery prepared using the solid electrolyte composition can be improved.

Formula (1)

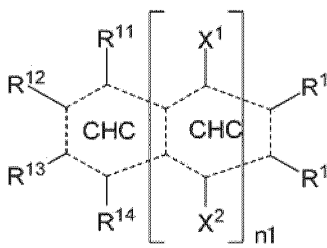

In Formula (1), CHC represents a benzene ring, a cyclohexane ring, a cyclohexene ring, or a cyclohexadiene ring. n1 represents an integer of 0 to 8. $R^{11}$ to $R^{16}$ each independently represent a hydrogen atom or a substituent. In a case where CHC represents a group other than a benzene ring, the ring structure may have a hydrogen atom at a position other than $R^{11}$ to $R^{16}$. $X^1$ and $X^2$ each independently represent a hydrogen atom or a substituent. Here, in $R^{11}$ to $R^{16}$, $X^1$, and $X^2$, groups adjacent to each other may be bonded to each other to form a 5- or 6-membered ring. In a case where n1 represents 0, one substituent represented by any one of $R^{11}$ to $R^{16}$ is $-(CHC^1)_{m1}$-Rx, or any two or $R^{11}$ to $R^{16}$ may be bonded to form $-(CHC^1)_{m1}$. Here, $CHC^1$ represents a phenylene group, a cycloalkylene group, or a cycloalkenylene group, m1 represents an integer of 2 or more, and Rx represents a hydrogen atom or a substituent. In

addition, in a case where n1 represents 1, among $R^{11}$ to $R^{16}$, $X^1$, and $X^2$, at least two adjacent to each other are bonded to each other to form a benzene ring, a cyclohexane ring, a cyclohexene ring, or a cyclohexadiene ring.

Examples of the substituent represented by $R^{11}$ to $R^{16}$ include an alkyl group, an aryl group, a heteroaryl group, and an alkenyl group, an alkynyl group, an alkoxy group, an aryloxy group, a heteroaryloxy group, an alkylthio group, an arylthio group, a heteroarylthio group, an acyl group, an acyloxy group, an alkoxycarbonyl group, an aryloxycarbonyl group, an alkylcarbonyloxy group, an arylcarbonyloxy group, a hydroxy group, a carboxy group or a salt thereof, a sulfo group or a salt thereof, an amino group, a mercapto group (sulfanyl group), an amido group, a formyl group, a cyano group, a halogen atom, a (meth)acryl group, a (meth)acryloyloxy group, a (meth)acrylamido group, an epoxy group, and an oxetanyl group.

Hereinafter, in the following description, a formyl group is considered as an acyl group.

The number of carbon atoms in the alkyl group is preferably 1 to 30, more preferably 1 to 25, and still more preferably 1 to 20. Specific examples of the alkyl group include methyl, ethyl, propyl, isopropyl, butyl, t-butyl, octyl, dodecyl, stearyl, benzyl, naphthylmethyl, pyrenylmethyl, and pyrenylbutyl. It is more preferable that the alkyl group has an unsaturated carbon bond of a double bond or a triple bond.

The number of carbon atoms in the aryl group is preferably 6 to 30, more preferably 6 to 26, and still more preferably 6 to 15. Specific examples of the aryl group include phenyl, naphthyl, anthracene, terphenyl, tolyl, xylyl, methoxyphenyl, cyanophenyl, and nitrophenyl.

The number of carbon atoms in the heteroaryl group is preferably 6 to 30, more preferably 6 to 26, and still more preferably 6 to 15. Specific examples of the heteroaryl group include furan, pyridine, thiophene, pyrrole, triazine, imidazole, tetrazole, pyrazole, thiazole, and oxazole.

The number of carbon atoms in the alkenyl group is preferably 2 to 30, more preferably 2 to 25, and still more preferably 2 to 20. Specific examples of the alkenyl group include vinyl and propenyl.

The number of carbon atoms in the alkynyl group is preferably 2 to 30, more preferably 2 to 25, and still more preferably 2 to 20. Specific examples of the alkynyl group include ethynyl, propynyl, and phenylethynyl.

- Alkoxy group: the alkyl group in the alkoxy group is the same as the above-described alkyl group.
- Aryloxy group: the aryl group in the aryloxy group is the same as the above-described aryl group.
- Heteroaryloxy group: the heteroaryl group in the heteroaryloxy group is the same as the above-described heteroaryl group.
- Alkylthio Group: the alkyl group in the alkylthio group is the same as the above-described alkyl group.
- Arylthio group: the aryl group in the arylthio group is the same as the above-described aryl group.
- Heteroarylthio group: the heteroaryl group in the heteroarylthio group is the same as the above-described heteroaryl group.
- Acyl group: the number of carbon atoms is preferably 1 to 30, more preferably 1 to 25, and still more preferably 1 to 20. The acyl group may be a formyl group, an aliphatic carbonyl group, an aromatic carbonyl group, or a heterocyclic carbonyl group. Examples of the acyl group are as follows.

Formyl, acetyl (methylcarbonyl), benzoyl (phenylcarbonyl), ethylcarbonyl, acryloyl, methacryloyl, octylcarbonyl, dodecylcarbonyl (stearic acid residue), a linoleic acid residue, and a linolenic acid residue.

- Acyloxy group: the acyl group in the acyloxy group is the same as the above-described acyl group.
- Alkoxycarbonyl group: the alkyl group in the alkoxycarbonyl group is the same as the above-described alkyl group.
- Aryloxycarbonyl group: the aryl group in the aryloxycarbonyl group is the same as the above-described aryl group.
- Alkylcarbonyloxy group: the alkyl group in the alkylcarbonyloxy group is the same as the above-described alkyl group.
- Arylcarbonyloxy group: the aryl group in the arylcarbonyloxy group is the same as the above-described aryl group.

In general, these substituents can be introduced using an electrophilic substitution reaction, a nucleophilic substitution reaction, halogenation, sulfonation, or diazotization of the aromatic hydrocarbon represented by Formula (1) or a combination thereof. Examples of the reaction include alkylation by the Friedel-Crafts reaction, acylation by the Friedel-Crafts reaction, the Vilsmeier reaction, and a transition metal catalyst coupling reaction.

n1 represents more preferably an integer of 0 to 6 and still more preferably an integer of 1 to 4.

The compound represented by Formula (1) is preferably a compound represented by the following Formula (1-1) or (1-2).

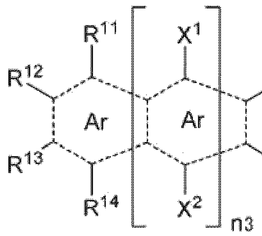

Formula (1-1)

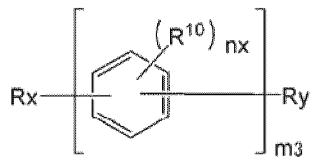

Formula (1-2)

In Formula (1-1), Ar represents a benzene ring. $R^{11}$ to $R^{16}$, $X^1$, and $X^2$ have the same definitions and the same preferable ranges as those of the examples described regarding $R^{11}$ to $R^{16}$ and $X^1$ and $X^2$ in Formula (1). n3 represents an integer of 1 or more. In a case where n3 represents 1, among $R^{11}$ to $R^{16}$ and $X^1$ and $X^2$, at least two adjacent to each other are bonded to each other to form a benzene ring.

Rx in Formula (1-2) has the same definition and the same preferable range as Rx in Formula (1). $R^{10}$ represents a substituent, and nx represents an integer of 0 to 4. m3 represents an integer of 3 or more. Ry represents a hydrogen atom or a substituent. Here, Rx and Ry may be bonded to each other.

n3 represents preferably an integer of 1 to 6, more preferably an integer of 1 to 3, and still more preferably an integer of 1 or 2.

m3 represents preferably an integer of 3 to 10, more preferably an integer of 3 to 8, and still more preferably an integer of 3 to 5.

Specific examples of the compound represented by Formula (1) include a compound having a structure of naphthalene, anthracene, phenanthracene, pyrene, tetracene, tetraphene, chrysene, triphenylene, pentacene, pentaphene, perylene, pyrene, benzo[a]pyrene, coronene, anthanthrene, corannulene, ovalene, graphene, cycloparaphenylene, polyparaphenylene, or cyclophene. However, the present invention is not limited to Examples.

Formula (2)

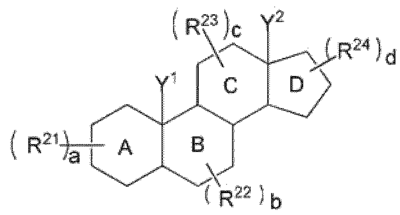

In Formula (2), $Y^1$ and $Y^2$ each independently represent a hydrogen atom, a methyl group, or a formyl group. $R^{21}$, $R^{22}$, $R^{23}$, and $R^{24}$ each independently represent a substituent, and a, b, c, and d represent an integer of 0 to 4.

Here, an A ring may be a saturated ring, an unsaturated ring having one or two double bonds, or an aromatic ring, and a B ring and a C ring may be an unsaturated ring having one or two double bonds. In a case where a, b, c, or d represents an integer of 2 to 4, substituents adjacent to each other may be bonded to form a ring.

The aliphatic hydrocarbon represented by Formula (2) is a compound having a steroid skeleton.

Here, carbon numbers in the steroid skeleton are as follows.

Carbon Numbers in Steroid Skeleton

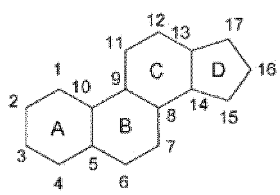

First, the aliphatic hydrocarbon represented by Formula (2) will be described.

The substituent represented by $R^{21}$, $R^{22}$, $R^{23}$, and $R^{24}$ may be any substituent. In particular, an alkyl group, an alkenyl group, a hydroxy group, a formyl group, an acyl group, a carboxy group or a salt thereof, a (meth)acryl group, a (meth)acryloyloxy group, a (meth)acrylamido group, an epoxy group, or an oxetanyl group is preferable. In addition, an =O group in which two substituents are formed common to the same carbon atom is preferable.

The alkyl group is preferably an alkyl group having 1 to 12 carbon atoms and may have a substituent. The substituent may be any substituent, and examples thereof include an alkyl group, an alkenyl group, a hydroxy group, a formyl group, an acyl group, a carboxy group, an alkoxycarbonyl group, a carbamoyl group, and a sulfo group. It is more preferable that the alkyl group has an unsaturated carbon bond of a double bond or a triple bond.

The alkenyl group is preferably an alkenyl group having 1 to 12 carbon atoms and may have a substituent. The substituent may be any substituent, and examples thereof include an alkyl group, an alkenyl group, a hydroxy group, a formyl group, an acyl group, a carboxy group, an alkoxycarbonyl group, a carbamoyl group, and a sulfo group.

It is preferable that $R^{21}$ is substituted with carbon number 3, it is preferable that $R^{22}$ is substituted with carbon number 6 or 7, it is preferable that $R^{23}$ is substituted with carbon number 11 or 12, and it is preferable that $R^{24}$ is substituted with carbon number 17.

It is preferable that $Y^1$ and $Y^2$ represent a hydrogen atom or a methyl group.

It is preferable that a, b, c, and d represent an integer of 0 to 2.

In a case where the A ring represents an unsaturated ring, it is preferable that the double bond is a bond of carbon numbers 4 and 5. In a case where the B ring represents an unsaturated ring, it is preferable that the double bond is a bond of carbon numbers 5 and 6 or a bond of carbon numbers 6 and 7. In a case where the C ring represents an unsaturated ring, it is preferable that the double bond is a bond of carbon numbers 8 and 9.

The compound represented by Formula (2) may include any stereoisomer. In a case where a downward direction on the paper plane is represented by $\alpha$ and an upward direction on the paper plane is represented by $\beta$, a bonding direction of a substituent, may be any of $\alpha$ or $\beta$ or a mixture thereof. In addition, the configuration of the A/B rings, the configuration of the B/C rings, or the configuration of the C/D rings may be any one of a trans configuration or a cis configuration or may be a mixed configuration thereof.

In the present invention, it is preferable that the sum of a to d represent 1 or more and any one of $R^{21}$, $R^{22}$, $R^{23}$, or $R^{24}$ represent a hydroxy group or an alkyl group having a substituent.

It is preferable that the compound having a steroid skeleton is steroid as described below.

In the following description, a substituent having a steroid ring is sterically controlled.

In order from the left, the substituents are a cholestane, a cholane, a pregnane, an androstane, and an estrane.

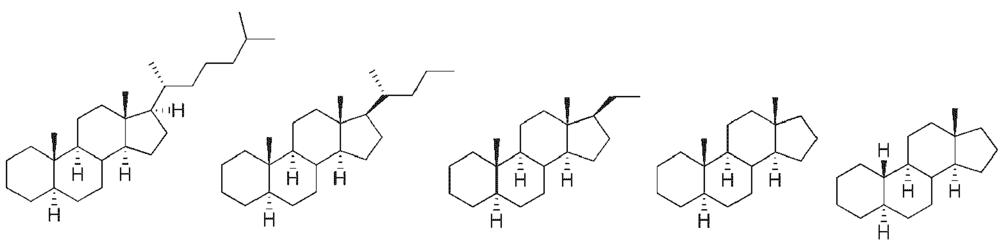

Specific examples of the aliphatic hydrocarbon represented by Formula (2) include a compound having a structure of cholesterol, ergosterol, testosterone, estradiol, aldosterone, hydrocortisone, stigmasterol, thymosterol, lanosterol, 7-dehydrodesmosterol, 7-dehydrocholesterol, cholanic acid, cholic acid, lithocholic acid, deoxycholic acid, sodium deoxycholate, lithium deoxycholate, hyodeoxycholic acid, chenodeoxycholic acid, ursodeoxycholic acid, dehydrocholic acid, hococholic acid, or hyocholic acid. However, the present invention is not limited to Examples.

The aliphatic hydrocarbon represented by Formula (2) may be a commercially available product.

In the compound represented by Formula (D), it is preferable that at least one $R^{D1}$ represents $L^{1a}$-$P^1$ and or at least two $R^{D1}$'s each independently represent $L^{2a}$-$P^2$ or $L^{3a}$-$P^2$, and it is more preferable that at least one $R^{D1}$ represents $L^{1a}$-$P^1$. In Formula (1), it is preferable that at least one of $R^{11}$ to $R^{16}$, $X^1$, and $X^2$ represents $L^{1a}$-$P^1$ and or at least two of $R^{11}$ to $R^{16}$, $X^1$, and $X^2$ each independently represent $L^{2a}$-$P^2$ or $L^{3a}$-$P^2$, and it is more preferable that at least one of $R^{11}$ to $R^{16}$, $X^1$, and $X^2$ represents $L^{1a}$-$P^1$. In Formula (2), it is preferable that at least one of $R^{21}$, $R^{22}$, $R^{23}$, and $R^{24}$ represents $L^{1a}$-$P^1$ and or at least two of $R^{21}$, $R^{22}$, $R^{23}$, and $R^{24}$ each independently represent $L^{2a}$-$P^2$ or $L^{3a}$-$P^2$, and it is more preferable that at least one of $R^{21}$, $R^{22}$, $R^{23}$, and $R^{24}$ represents $L^{1a}$-$P^1$.

$L^{1a}$-$P^1$ is bonded to a ring at $L^{1a}$. $L^{2a}$-$P^2$ and $L^{3a}$-$P^2$ are bonded to rings at $L^{2a}$ and $L^{3a}$, respectively.

$L^{1a}$ represents a single bond or a linking group. As the linking group, a hydrocarbon linking group [an alkylene group having 1 to 10 carbon atoms (more preferably 1 to 6 carbon atoms and still more preferably 1 to 3 carbon atoms), an alkenylene group having 2 to 10 carbon atoms (more preferably 2 to 6 carbon atoms still more preferably 2 to 4 carbon atoms), an alkynylene group having 2 to 10 carbon atoms (more preferably 2 to 6 carbon atoms still more

preferably 2 to 4 carbon atoms), an arylene group having 6 to 22 carbon atoms (more preferably 6 to 10 carbon atoms), or a combination thereof], a heterocyclic linking group [a carbonyl group (-CO-), a thiocarbonyl group (-CS-), an ether group (-O-), a thioether group (-S-), an imino group ($-NR^{Na}-$), an ammonium linking group ($-NR^{Na}{}_2{}^+-$), a polysulfide group (the number of S's is 1 to 8), an imine linking group ($R^{Na}$-N=C<, -N=C($R^{Na}$)-), a sulfonyl group ($-SO_2-$), a sulfinyl group (-SO-), a phosphate linking group (-O-P(OH)(O)-O-), a phosphonate linking group (-P(OH)(O)-O-), or a combination thereof], or a linking group including a combination thereof is preferable. $R^{Na}$ in $L^{1a}$ represents a hydrogen atom or an alkyl group having 1 to 12 carbon atoms (preferably 1 to 4 carbon atoms and more preferably 1 or 2 carbon atoms).

In a case where a ring is formed by condensation of a substituent or a linking group, the above-described hydrocarbon linking group may be linked by appropriately forming a double bond or a triple bond. As the formed ring, a 5-membered ring or a 6-membered ring is preferable. As the 5-membered ring, a nitrogen-containing 5-membered ring is preferable, and examples of a compound forming the ring include pyrrole, imidazole, pyrazole, indazole, indole, benzoimidazole, pyrrolidine, imidazolidine, pyrazolidine, indoline, carbazole, and a derivative thereof. Examples of the 6-membered ring include piperidine, morpholine, piperazine, a derivative thereof. In addition, in a case where a compound or a substituent, a linking group, or the like contains, for example, an aryl group or a heterocyclic group, these groups may have a monocyclic or fused ring and may be substituted or unsubstituted as described above.

In a case where $L^{1a}$ represents a linking group consisting of a combination of linking groups, the number of the linking groups used in combination is not particularly limited and is, for example, preferably 2 to 30, more preferably 2 to 20, still more preferably 2 to 10, and still more preferably 2 to 4. Examples of the linking group consisting of a combination of linking groups include an alkylene group having 1 to 6 carbon atoms (having preferably 1 to 4 carbon atoms), an arylene group having 6 to 24 carbon atoms (having preferably 6 to 10 carbon atoms), an ether group (-O-), a thioether group (-S-), an imino group ($NR^{Na}$), a carbonyl group, a (poly)alkyleneoxy group, a (poly)ester group, a (poly)amido group, and a group relating to a combination thereof. In particular, an alkylene group having 1 to 4 carbon atoms, an ether group (-O-), an imino group ($NR^{Na}$), a carbonyl group, a (poly)alkyleneoxy group, a (poly)ester group, or a group relating to a combination thereof is more preferable. In addition, a linking group having an exemplary monomer described below can be used.

In a case where $L^{1a}$ represents a group which may have a substituent, the group may further have a substituent. Examples of the substituent include the above-described substituent T. In particular, a halogen atom (preferably, a fluorine atom or a chlorine atom), an alkyl group, an acyl group, a carbamoyl group, or a hydroxy group is preferable.

It is preferable that $L^{1a}$ has a certain length or more. Specifically, the minimum number of atoms linking the ring $\alpha$ (an atom bonded to $L^{1a}$ among the atoms forming the ring structure represented by Formula (1) or (2)) and $P^1$ to each other is preferably 2 or more, more preferably 4 or more, still more preferably 6 or more, and still more preferably 8 or more. The upper limit is preferably 1000 or less, more preferably 500 or less, still more preferably 100 or less, and still more preferably 20 or less.

$L^{2a}$ and $L^{3a}$ have the same definition as that of $L^{1a}$ and may be the same as or different from each other.

$P^1$ represents a polymerizable site. The polymerizable site is a group that is polymerizable through a polymerization reaction, and examples thereof include a group capable of chain polymerization, for example, an ethylenically unsaturated group, an epoxy group, or an oxetanyl group. In addition, for example, a group including two or more of a hydroxy group, an amino group, a carboxy group, an isocyanate group, and the like, or a group including one or more dicarboxylic anhydride structures as a group for condensation polymerization can be used.

Examples of the ethylenically unsaturated group include a (meth)acryloyl group, a (meth)acryloyloxy group, a (meth)acrylamido group, and a vinyl group (including an allyl group).

As $P^1$, a partial structure including one or more ethylenically unsaturated groups, one or more epoxy groups, one or more oxetanyl groups, or one or more dicarboxylic anhydrides or including two or more hydroxy groups, two or more amino groups, or two or more isocyanate groups is preferable, a partial structure including one or more (meth)acryloyl groups, one or more (meth)acryloyloxy groups, one or more (meth)acrylamido groups, or one or more vinyl groups or including two or more hydroxy groups, two or more amino groups, or two or more isocyanate groups is more preferable, and a partial structure including a (meth)acryloyl group or a (meth)acryloyloxy group is still more preferable.

Examples of $P^2$ include a group capable of condensation polymerization, for example, a hydroxy group, an amino group, a carboxy group, an isocyanate group, or a dicarboxylic anhydride. In particular, a hydroxy group, an amino group, an isocyanate group, or a dicarboxylic anhydride is preferable, and a hydroxy group, an amino group, or an isocyanate group is more preferable.

It is preferable that $L^{1a}$-$P^1$ represents a group represented by the following Formula (F-1).

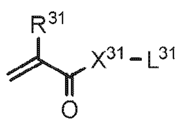

(F-1)

In the compound represented by Formula (D), it is preferable that d1 represents 1 to 4 and $R^{D1}$ represents a group represented by Formula (F-1), and it is more preferable that d1 represents 1 and $R^{D1}$ represents a group represented by Formula (F-1). It is preferable that at least four of $R^{11}$ to $R^{16}$, $X^1$, and $X^2$ in Formula (1) represent a group represented by Formula (F-1), and it is more preferable that at least one of $R^{11}$ to $R^{16}$, $X^1$, and $X^2$ represents a group represented by Formula (F-1). It is preferable that at least four of $R^{21}$, $R^{22}$, $R^{23}$, and $R^{24}$ in Formula (2) represent a group represented by Formula (F-1), and it is more preferable that at least one of $R^{21}$, $R^{22}$, $R^{23}$, and $R^{24}$ represents a group represented by Formula (F-1).

$X^{31}$ represents -O- or >NH.

In the formula, $R^{31}$ represents a hydrogen atom, a hydroxy group, a cyano group, a halogen atom, an alkyl group, an alkenyl group, an alkynyl group, or an aryl group.

The alkyl group that may be used as $R^{31}$ is not particularly limited and is preferably an alkyl group having 1 to 24 carbon atoms, more preferably an alkyl group having 1 to 12 carbon atoms, and still more preferably an alkyl group having 1 to 6 carbon atoms.

The alkenyl group that may be used as $R^{31}$ is not particularly limited and is preferably an alkenyl group having 2 to 24 carbon atoms, more preferably an alkenyl group having 2 to 12 carbon atoms, and still more preferably an alkenyl group having 2 to 6 carbon atoms.

The alkynyl group that may be used as $R^{31}$ is not particularly limited and is preferably an alkynyl group having 2 to 24 carbon atoms, more preferably an alkynyl group having 2 to 12 carbon atoms, and still more preferably an alkynyl group having 2 to 6 carbon atoms.

The aryl group that may be used as $R^{31}$ is not particularly limited and is preferably an aryl group having 6 to 22 carbon atoms and more preferably an aryl group having 6 to 14 carbon atoms.

Examples of the halogen atom which may be used as $R^{31}$ include a fluorine atom, a chlorine atom, a bromine atom, and an iodine atom. Among these, a fluorine atom, a chlorine atom, or a bromine atom is preferable.

In particular, as $R^{31}$, a hydrogen atom or an alkyl group is preferable, and a hydrogen atom or methyl is more preferable.

In a case where $R^{31}$ represents a group which may have a substituent (an alkyl group, an alkenyl group, an alkynyl group, or an aryl group), $R^{31}$ may further have a substituent. Examples of the substituent include a substituent Z described below. In particular, a halogen atom (for example, a fluorine atom), a hydroxy group, a carboxy group, an ester group, or an amido group is preferable.

$L^{31}$ has the same definition as that of $L^{1a}$. In particular, an alkylene group (preferably 1 to 12 carbon atoms and more preferably 1 to 6 carbon atoms), a carbonyl group, an ether group, an imino group, or a linking group including a combination thereof is more preferable. An alkylene group having 1 to 4 carbon atoms, a carbonyl group, an ether group, an imino group, or a linking group including a combination thereof is still more preferable.

In a case where $L^{31}$ represents a group which may have a substituent, the group may further have a substituent. Examples of the substituent include the above-described substituent T. In particular, a halogen atom (preferably, a fluorine atom or a chlorine atom), an alkyl group, an acyl group, a carbamoyl group, or a hydroxy group is preferable.

It is preferable that $L^{31}$ has a certain length or more. The minimum number of atoms linking the ring $\alpha$ (an atom bonded to $L^{1a}$ among the atoms forming the ring structure represented by Formula (1) or (2)) and $X^{31}$ to each other is the same as the minimum number of atoms linking the ring $\alpha$ and $P^1$ to each other.

Specific examples of the compound having the above-described ring structure of two or more rings will be shown below but do not intend to limit the present invention. In the following exemplary compounds, m4 represents 1 to 100000, and n4 represents 1 to 100000.

B-1
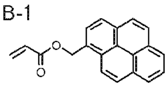
B-2
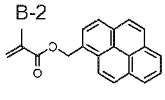
B-3
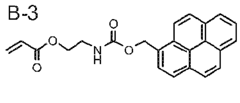
B-4
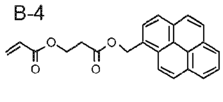

B-5
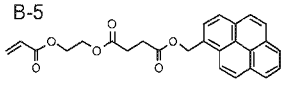
B-6
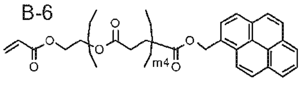
B-7
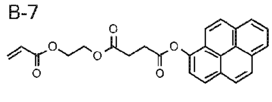

B-8
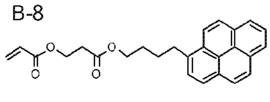
B-9
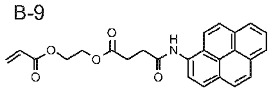
B-10
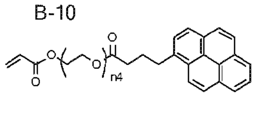

B-11
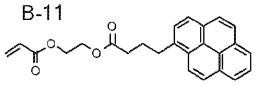
B-12
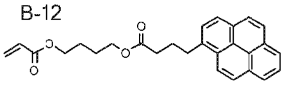
B-13
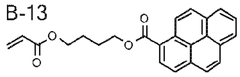
B-14
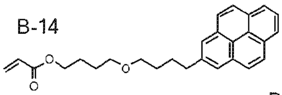
B-15
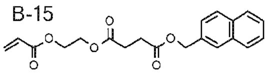
B-16
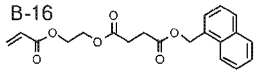
B-17
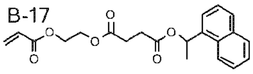
B-18
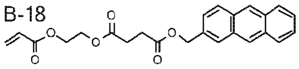
B-19
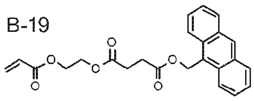
B-20
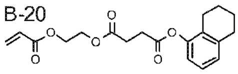
B-21
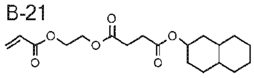
B-22
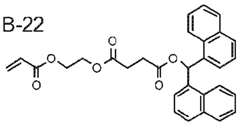
B-23
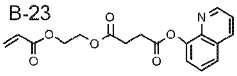
B-24
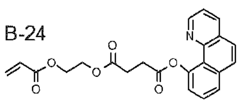
B-25
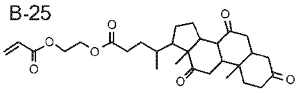
B-26
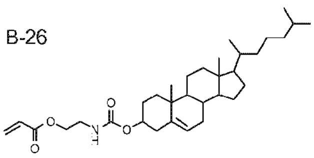
B-27
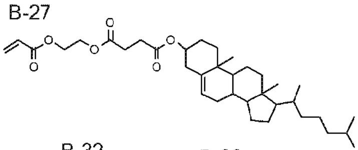
B-28
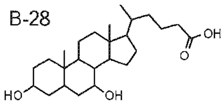
B-29
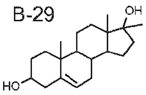
B-30
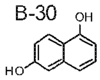
B-31
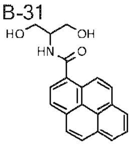
B-32
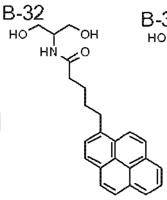
B-33
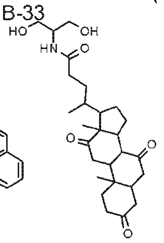
B-34
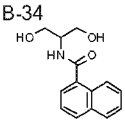

The compound having the ring structure of two or more rings can be synthesized and obtained, for example, by causing a compound having a polymerizable group (for example, a (meth)acryloyl group) to react with a compound having a ring structure of two or more rings and a reaction point (for example, a hydroxy group or a carboxy group).

The average particle size of the binder particles B is 50,000 nm or less, preferably 1000 nm or less, more preferably 500 nm or less, still more preferably 300 nm or less, and still more preferably 250 nm or less. The lower limit value is 10 nm or more, preferably 30 nm or more, more preferably 50 nm or more, and still more preferably 100 nm or more. By adjusting the size of the binder particles B to be in the above-described range, the area of a resistance film such as solid particles can be reduced, and the resistance can be reduced. That is, excellent adhesiveness and suppression of an interface resistance can be realized.

In the present invention, the average particle size of the binder particles B refers to an average particle size in a state where an ion conductive material is included.

A method of measuring the average particle size of the binder particles B is the same as the method of measuring the average particle size of the binder particles A.

The mass average molecular weight of the polymer forming the binder particles B is preferably 5,000 or higher, more preferably 10,000 or higher, and still more preferably 30,000 or higher. The upper limit is practically 1,000,000 or lower, and an aspect where the polymer is crosslinked is also preferable.

The mass average molecular weight of the polymer forming the binder particles B can be measured using the same method as the method of measuring the number-average molecular weight of the polymer forming the binder particles A.

In a case where the crosslinking of the polymer progresses due to heating or voltage application, the molecular weight may be higher than the above-described molecular weight. At the start of using the all-solid state secondary battery, the mass average molecular weight of the polymer forming the binder particles B is preferably in the above-described range.

The moisture content of the polymer forming the binder used in the present invention is preferably 100 ppm (by mass) or lower.

The polymer forming the binder used in the present invention may be dried by crystallization or may be used in the form of a polymer solution as it is. It is preferable that the amount of a metal catalyst (urethanization or polyesterification catalyst=tin, titanium, or bismuth) is small. By reducing the amount of the metal catalyst during polymerization or by removing the catalyst by crystallization, the metal concentration in the copolymer is preferably 100 ppm (by mass) or lower.

The content of the binder in each of the solid electrolyte layers is not particularly limited. The content of the binder in each of the solid electrolyte layers is preferably 0.1 to 50 parts by mass, more preferably 0.5 to 40 parts by mass, and still more preferably 1 to 30 parts by mass with respect to 100 parts by mass of the inorganic solid electrolyte.

By using the binder in the above-described range, binding properties of the inorganic solid electrolyte and suppression in interface resistance can be more effectively achieved at the same time.

In each of the solid electrolyte layers forming the laminate according to the embodiment of the present invention, as the binder, one kind may be used alone, or a plurality of kinds may be used in combination. In addition, the binder may be used in combination with other particles.

The binder used in the present invention can be prepared using an ordinary method.

In addition, examples of forming particles include a method of forming binder particles during a polymerization reaction and a method of precipitating the polymer solution to form particles.

(Lithium Salt)

The solid electrolyte layer forming the laminate according to the embodiment of the present invention may include a lithium salt (supporting electrolyte).

The lithium salt is preferably a lithium salt used for this kind of product and is not particularly limited. For example, a lithium salt described in paragraphs "0082" to "0085" of JP2015-088486A is preferable.

In a case where the solid electrolyte layer includes a lithium salt, the content of the lithium salt in each of the solid electrolyte layers is preferably 0.1 parts by mass or more and more preferably 5 parts by mass or more with respect to 100 parts by mass of the inorganic solid electrolyte. The upper limit is preferably 50 parts by mass or less and more preferably 20 parts by mass or less.

(Ionic Liquid)

The solid electrolyte layer forming the laminate according to the embodiment of the present invention may include an ionic liquid in order to further improve the ion conductivity. The ionic liquid is not particularly limited, but is preferably an ionic liquid dissolving the above-described lithium salt from the viewpoint of effectively improving the ion conductivity. Examples thereof include compounds made of a combination of a cation and an anion described below.

(i) Cation

Examples of the cation include an imidazolium cation, a pyridinium cation, a piperidinium cation, a pyrrolidinium cation, a morpholinium cation, a phosphonium cation, and a quaternary ammonium cation. Here, these cations have a substituent described below.

As the cation, one kind may be used alone, or two or more kinds may be used in combination.

A quaternary ammonium cation, a piperidinium cation, or a pyrrolidinium cation is preferable.

Examples of the substituent that may be included in the above-described cation include an alkyl group (having preferably 1 to 8 carbon atoms and more preferably 1 to 4 carbon atoms), a hydroxyalkyl group (having preferably 1 to 3 carbon atoms), an alkyloxyalkyl group (an alkyloxyalkyl group having 2 to 8 carbon atoms is preferable, and an alkyloxyalkyl group having 2 to 4 carbon atoms is more preferable), an ether group, an allyl group, an aminoalkyl group (an aminoalkyl group having 1 to 8 carbon atoms is preferable, and an aminoalkyl group having 1 to 4 carbon atoms is more preferable), and an aryl group (an aryl group having 6 to 12 carbon atoms is preferable, and an aryl group having 6 to 8 carbon atoms is more preferable). The substituent may form a cyclic structure in a form of containing a cation site. The substituent may further have a substituent described regarding the above-described dispersion medium. The ether group can be used in combination with other substituents. Examples of the substituent include an alkyloxy group and an aryloxy group.

(ii) Anion

Examples of the anion include a chloride ion, a bromide ion, an iodide ion, a boron tetrafluoride ion, a nitric acid ion, a dicyanamide ion, an acetate ion, an iron tetrachloride ion, a bis(trifluoromethanesulfonyl)imide ion, a bis(fluorosulfonyl)imide ion, a bis(perfluorobutylmethanesulfonyl)imide ion, an allylsulfonate ion, a hexafluorophosphate ion, and

a trifluoromethanesulfonate ion.

As the anion, one kind may be used alone, or two or more kinds may be used in combination.

A boron tetrafluoride ion, a bis(trifluoromethanesulfonyl)imide ion, a bis(fluorosulfonyl)imide ion, a hexafluorophosphate ion, a dicyanamide ion, or an allylsulfonate ion is preferable, and a bis(trifluoromethanesulfonyl)imide ion, a bis(fluorosulfonyl)imide ion, or an allylsulfonate ion is more preferable.

Examples of the ionic liquid include 1-allyl-3-ethylimidazolium bromide, 1-ethyl-3-methylimidazolium bromide, 1-(2-hydroxyethyl)-3-methylimidazolium bromide, 1-(2-methoxyethyl)-3-methylimidazolium bromide, 1-octyl-3-methylimidazolium chloride, N,N-diethyl-N-methyl-N-(2-methoxyethyl)ammonium tetrafluoroborate, 1-ethyl-3-methylimidazolium bis(trifluoromethanesulfonyl)imide, 1-ethyl-3-methylimidazolium bis(fluorosulfonyl)imide, 1-ethyl-3-methylimidazolium dicyanamide, 1-butyl-1-methylpyrrolidinium bis(trifluoromethanesulfonyl)imide, trimethylbutylammoniumbis(trifluoromethanesulfonyl)imide, N,N-diethyl-N-methyl-N-(2-methoxyethyl)ammonium bis(trifluoromethanesulfonyl)imide (DEME), N-propyl-N-methylpyrrolidiniumbis(trifluoromethanesulfonyl)imide (PMP), N-(2-methoxyethyl)-N-methylpyrrolidiniumtetrafluoroboride, 1-butyl-1-methylpyrrolidinium bis(fluorosulfonyl)imide, (2-acryloylethyl) trimethylammoniumbis(trifluoromethanesulfonyl)imide, 1-ethyl-1-methylpyrrolidinium allyl sulfonate, 1-ethyl-3-methylimidazolium allylsulfonate, and trihexyltetradecylphosphonium chloride.

The content of the ionic liquid in each of the solid electrolyte layers is preferably 0 parts by mass or more, more preferably 1 part by mass or more, and most preferably 2 parts by mass or more with respect to 100 parts by mass of the inorganic solid electrolyte. The upper limit is preferably 50 parts by mass or less, more preferably 20 parts by mass or less, and particularly preferably 10 parts by mass or less.

The mass ratio between the lithium salt and the ionic liquid (the lithium salt:the ionic liquid) is preferably 1:20 to 20:1, more preferably 1:10 to 10:1, and most preferably 1:7 to 2:1.

(Linear Structure)

The solid electrolyte layer forming the laminate according to the embodiment of the present invention may include a linear structure for compensating for the structure. Specific examples of the linear structure include a linear structure consisting of an organic matter and a linear structure consisting of an inorganic matter.

Examples of the linear structure consisting of an organic matter include cellulose nanofiber (trade name: CELISH (manufactured by Daicel FineChem Ltd.), substituted cellulose nanofiber, polyester nanofibers (trade name: NANOFRONT (manufactured by Teijin Ltd.), polyamide nanofiber (trade name: TIARA (manufactured by Daicel FineChem Ltd.), acrylic nanofiber, polyurethane nanofiber, and polyimide nanofiber.

Examples of a linear structure consisting of carbon include carbon nanotube and carbon nanofiber.

Examples of the linear structure consisting of an inorganic matter include a linear structure consisting of a metal (for example, silver nanowire, copper nanowire, nickel nanowire, cobalt nanowire, or gold nanowire) a linear structure consisting of ceramic (for example, alumina oxide nanowire, copper hydroxide nanowire, hydroxy apatite nanowire, iron oxide hydrate nanowire, iron oxide nanowire, nickel hydroxide nanowire, magnesium oxide nanowire, molybdenum oxide nanowire, silicon carbide nanowire, titanium oxide nanowire, manganese oxide nanowire, nickel oxide nanowire, tungsten oxide nanowire, vanadium oxide nanowire, or zinc oxide nanowire), and a linear structure consisting of glass (for example, silica glass nanofiber).

The content of the linear structure in each of the solid electrolyte layers is preferably 1 to 50 mass% and more preferably 5 to 30 parts by mass with respect to 100 parts by mass of the inorganic solid electrolyte.

(Support A)

Each of the above-described solid electrolyte layers may include a support other than the above-described release film. That is, in the laminate according to the embodiment of the present invention, a support may be used as a component of each of the solid electrolyte layers. Hereinafter, this support will also be referred to as "support A". Regarding the shape of the support A, it is preferable that a sheet-shaped support may have an opening such as a plurality of through holes. It is preferable that the support A is formed of a resin, glass, or a fiber.

Examples of the above-described resin include polycaprolactam, polyalkylene, an acrylic resin, polyimide, polycarbonate, polyphenylene, polyphenylene sulfide, polytetrafluoroethylene (PTFE), a polytetrafluoroethylene (PTFE)-tetrafluoroethylene-perfluoroalkyl vinyl ether copolymer (PFA), and nylon. Among these, polycaprolactam, polyimide, or an acrylic resin is preferable.

The glass support A having an opening can be prepared, for example, by patterning through wet etching. In order to effectively perform the above-described etching using this method, it is preferable that a photosensitive glass including a small amount of metal ions is used.

The shape of the opening is not particularly limited, and examples thereof include a honeycomb shape and a circular shape. In addition, the opening may be an unstructured opening (for example, a through hole having a high

opening ratio obtained by entangling fibers) without having a shape.

[Method of Manufacturing Solid Electrolyte-Containing Sheet]

A method of manufacturing a solid electrolyte-containing sheet according to the embodiment of the present invention is a method of manufacturing a solid electrolyte-containing sheet including a laminate of three or more solid electrolyte layers, the method including: at least the following steps (1) to (3) and a drying step.

Step (1): forming a solid electrolyte layer by applying a solid electrolyte composition including an inorganic solid electrolyte having an average particle size of 0.3 to 0.9 μm and a binder.
Step (2): forming a solid electrolyte layer by applying a solid electrolyte composition including an inorganic solid electrolyte having an average particle size of 1 to 5 μm and a particulate binder.
Step (3): forming a solid electrolyte layer by applying a solid electrolyte composition including an inorganic solid electrolyte having an average particle size of 0.3 to 0.9 μm and a binder.

Here, the order of performing the steps (1) to (3) is not particularly limited, and the steps (1) to (3) may be performed at the same time.
The solid electrolyte layer formed in the step (2) is disposed between the solid electrolyte layer formed in the step (1) and the solid electrolyte layer formed in the step (3).
The above-described solid electrolyte-containing sheet according to the embodiment of the present invention can be suitably manufactured using the method of manufacturing a solid electrolyte-containing sheet according to the embodiment of the present invention. That is, one the first SE layer and the third SE layer in the solid electrolyte-containing sheet according to the embodiment of the present invention is formed of the solid electrolyte composition in the step (1), and the other one of the first SE layer and the third SE layer is formed of the solid electrolyte composition in the step (3). In addition, the second SE layer is formed of the solid electrolyte composition in the step (2).
It is preferable that the method of manufacturing a solid electrolyte-containing sheet according to the embodiment of the present invention includes a step of forming the above-described fourth SE layer. It is preferable that the method of manufacturing a solid electrolyte-containing sheet according to the embodiment of the present invention includes a step (4) of applying a solid electrolyte composition for forming a solid electrolyte layer as a short-circuit suppressing layer between the solid electrolyte layer formed of the solid electrolyte composition in the step (1) and between the solid electrolyte layer formed of the solid electrolyte composition in the step (3).
In the method of manufacturing a solid electrolyte-containing sheet according to the embodiment of the present invention, it is preferable that the step (4) is performed such that the short-circuit suppressing layer is in contact with the first SE layer and the third SE layer.
In addition, the method of manufacturing a solid electrolyte-containing sheet according to the embodiment of the present invention may include a step of forming "the other SE layer" in addition to the aspect of the solid electrolyte-containing sheet that is desired to be obtained.
The components included in the solid electrolyte composition used for forming the solid electrolyte composition and "the other SE layer" used in the steps (1) to (4) and the contents thereof correspond to the components included in the laminate according to the embodiment of the present invention and the contents thereof.
The pore radius of the fourth SE layer measured using a mercury intrusion method can be adjusted by adjusting the components of the solid electrolyte composition used in the step (4), the contents thereof, and a pressure during pressurization at which the laminate according to the embodiment of the present invention is formed.

<Preparation of Solid Electrolyte Composition>

The solid electrolyte composition used in the method of manufacturing a solid electrolyte-containing sheet according to the embodiment of the present invention can be prepared using an ordinary method. Specifically, the solid electrolyte composition can be prepared by mixing or adding the inorganic solid electrolyte and the binder with or to another component such as a dispersion medium optionally. For example, the solid electrolyte composition can be prepared by mixing the above-described components using various mixers. The mixing condition is not particularly limited, and examples thereof include a ball mill, a beads mill, a planetary mixer, a blade mixer, a roll mill, a kneader, and a disc mill.

(Dispersion Medium)

Specific examples of the above-described dispersion medium are as follows.
Examples of an alcohol compound solvent include methyl alcohol, ethyl alcohol, 1-propyl alcohol, 2-butanol,

ethylene glycol, propylene glycol, glycerin, 1,6-hexanediol, 1,3-butanediol, and 1,4-butanediol.

Examples of an ether compound solvent include alkylene glycol alkyl ether (for example, ethylene glycol monomethyl ether, ethylene glycol monobutyl ether, diethylene glycol, dipropylene glycol, propylene glycol monomethyl ether, diethylene glycol monomethyl ether, triethylene glycol, polyethylene glycol, propylene glycol dimethyl ether, dipropylene glycol monomethyl ether, tripropylene glycol monomethyl ether, diethylene glycol monobutyl ether, or diethylene glycol dibutyl ether), dialkyl ether (for example, dimethyl ether, diethyl ether, or dibutyl ether), tetrahydrofuran, and dioxane (including respective isomers of 1,2-, 1,3, and 1,4-).

Examples of an amide compound solvent include N,N-dimethylformamide, 1-methyl-2-pyrrolidone, 2-pyrrolidinone, 1,3-dimethyl-2-imidazolidinone, ε-caprolactam, formamide, N-methylformamide, acetamide, N-methylacetamide, N,N-dimethylacetamide, N-methylpropanamide, and hexamethylphosphorictriamide.

Examples of an amino compound solvent include triethylamine, and tributylamine.

Examples of a ketone compound solvent include acetone, methyl ethyl ketone, diethyl ketone, dipropyl ketone, dibutyl ketone, and diisobutyl ketone.

Examples of an ester compound solvent include methyl acetate, ethyl acetate, propyl acetate, butyl acetate, pentyl acetate, hexyl acetate, methyl propionate, ethyl propionate, propyl propionate, butyl propionate, methyl butyrate, ethyl butyrate, propyl butyrate, butyl butyrate, isobutyl isobutyrate, pentyl butyrate, methyl valerate, ethyl valerate, propyl valerate, butyl valerate, methyl caproate, ethyl caproate, propyl caproate, and butyl caproate.

Examples of an aromatic compound solvent include benzene, toluene, xylene, and mesitylene.

Examples of an aliphatic compound solvent include hexane, heptane, cyclohexane, methylcyclohexane, ethylcyclohexane, decalin, octane, pentane, cyclopentane, and cyclooctane.

Examples of a nitrile compound solvent include acetonitrile, propionitrile, and butyronitrile.

<Method of Forming Laminate>

The laminate according to the embodiment of the present invention can be formed using the above-described solid electrolyte composition. Hereinafter, a case where the transfer sheet according to the embodiment of the present invention is manufactured using the method of manufacturing a solid electrolyte-containing sheet according to the embodiment of the present invention will be described as an example.

A method of applying the solid electrolyte composition to the release film (support) is not particularly limited, and examples thereof include a wet sequential coating method and a coating method. Among these, a simultaneous multilayer coating method is preferable.

(Wet Sequential Coating Method)

The wet sequential coating method can be performed with reference to, for example, JP2007-083625A. Hereinafter, the manufacturing of the transfer sheet 10A according to the embodiment of the present invention shown in Fig. 1 will be described as an example.

The solid electrolyte composition (a slurry including a dispersion medium) for forming the solid electrolyte layer 3 (first SE layer) is applied (step (1)) to the release film 4 to form the first SE layer.

Next, before evaporating or volatilizing the dispersion medium from the first SE layer, the solid electrolyte composition (a slurry including a dispersion medium) for forming the solid electrolyte layer 2 (second SE layer) is applied (step (2)) to the first SE layer to form the second SE layer.

Next, before evaporating or volatilizing the dispersion medium from the second SE layer, the solid electrolyte composition (a slurry including a dispersion medium) for forming the solid electrolyte layer 1 (third SE layer) is applied (step (3)) to the second SE layer to form the third SE layer.

In a case where the above-described linear structure is used, for example, before evaporating or volatilizing the dispersion medium from the first SE layer in the step (2), the second SE layer may be formed by disposing a linear structure impregnated with the solid electrolyte composition for forming the second SE layer. The linear structure can also be formed using the same method as described above even in the steps (1) and (3).

In addition, in a case where the above-described support A is used, for example, before evaporating or volatilizing the dispersion medium from the first SE layer in the step (2), the second SE layer may be formed by disposing the support A having a through hole on the first SE layer, applying the solid electrolyte composition for forming the second SE layer (step (2)), and filling the through hole with the solid electrolyte composition (slurry). The support A can also be formed using the same method as described above even in the steps (1) and (3).

Here, it is preferable that "before evaporating or volatilizing the dispersion medium from the first SE layer (second SE layer)" is "before the first SE layer (second SE layer) shows decreasing-rate drying".

"Before the first SE layer (second SE layer) shows decreasing-rate drying" typically refers to a period of several minutes immediately after the application of the slurry. During this period, a phenomenon "constant-rate drying" in which

the content of the solvent (dispersion medium) in the applied coating layer decreases in proportion to the time is shown. The time during which the "constant-rate drying" is shown is described in, for example, "Chemical Engineering Handbook (pp. 707 to 712, published by Maruzen Inc., October 25, 1980).

The slurry can be applied, for example, with a typical coating method using an extrusion die coater, an air doctor coater, a blade coater, a rod coater, a knife coater, a squeeze coater, a reverse roll coater, or a bar coater.

(Simultaneous Multilayer Coating Method)

The simultaneous multilayer coating method can be performed with reference to, for example, JP2005-271283A and JP2006-247967A.

The simultaneous multilayer coating can be performed, for example, with a coating method of simultaneously applying at least the respective solid electrolyte compositions used in the steps (1) to (3) to the release film using a coater such as an extrusion die coater or a curtain flow coater. In the present invention, simultaneous coating refers to applying the respective solid electrolyte compositions to, for example, the release film in a state where the respective solid electrolyte compositions are layered. However, it is not necessary that times or timings at which the respective solid electrolyte compositions are applied to the release film are exactly the same. In the example of the transfer sheet shown in Fig. 1, by applying the slurries for forming the respective solid electrolyte layers by simultaneous multilayer coating, the first to third SE layers are laminated on the release film 4 in a state where the first to third SE layers include the dispersion medium (wet state). As a result, the layer configuration shown in Fig. 1 is obtained.

In a case where simultaneous multilayer coating is performed, for example, using an extrusion die coater, three slurries (the solid electrolyte composition for forming the first SE layer, the solid electrolyte composition for forming the second SE layer, and the solid electrolyte composition for forming the third SE layer) that are simultaneously jetted are layered and formed in the vicinity of a jetting port of the extrusion die coater, that is, before being moved to the support. In this state, the solid electrolyte compositions are layered and applied to the support.

(Drying)

A step of drying the solid electrolyte compositions after applying all the solid electrolyte composition is performed. The drying temperature and the drying time can be appropriately set depending on the dispersion medium used in the slurry. The drying temperature is,for example, 80 to 200°C, and the drying time is 0.3 to 15 minutes.

In the present invention, each of the solid electrolyte layers after drying in the laminate according to the embodiment of the present invention may include a dispersion medium within a range where the effects of the present invention do not deteriorate. For example, the content of the dispersion medium may be 1 mass% or lower with respect to the total mass of the solid electrolyte layer.

(Pressurization)

It is preferable that the method of manufacturing a solid electrolyte-containing sheet according to the embodiment of the present invention includes a step of pressurizing all the solid electrolyte layers after applying and drying the solid electrolyte compositions. The pressure for pressurization can be adjusted in a range where the inorganic solid electrolyte particles and the binder particles in the obtained solid electrolyte-containing sheet can be maintained in a particle shape. For example, the pressure is 1 to 100 MPa.

(Storage)

A method of storing the solid electrolyte-containing sheet according to the embodiment of the present invention is not particularly limited, and it is preferable that the solid electrolyte-containing sheet is stored in a state where it is wound into a roll. The above-described pressurization may be performed before and after winding the solid electrolyte-containing sheet into a roll and is preferably performed before winding the solid electrolyte-containing sheet into a roll.

[Method of manufacturing Electrode Sheet for All-Solid State Secondary Battery]

A method of manufacturing an electrode sheet for an all-solid state secondary battery according to the embodiment of the present invention includes a step of transferring the laminate obtained using the method of manufacturing a solid electrolyte-containing sheet according to the embodiment of the present invention to an electrode active material layer. The method of manufacturing an electrode sheet for an all-solid state secondary battery according to the embodiment of the present invention can be performed using an ordinary method except that it includes the above-described method of manufacturing a solid electrolyte-containing sheet.

The electrode sheet can be manufactured using a method including a step of applying an electrode composition to a metal foil as a current collector to form a coating film. A composition for forming a conductor layer may be applied to the metal foil to form a conductor layer, and an electrode composition may be applied to the conductor layer.

For example, a negative electrode composition including the negative electrode active material is applied to a metal foil which is a negative electrode current collector so as to form a negative electrode active material layer. As a result, a negative electrode sheet for an all-solid state secondary battery is prepared. Next, the laminate of the transfer sheet obtained using the method of manufacturing a solid electrolyte-containing sheet according to the embodiment of the present invention is transferred to the negative electrode active material layer. In the example of the transfer sheet shown in Fig. 1, the transfer sheet is laminated on the negative electrode sheet for an all-solid state secondary battery such that the solid electrolyte layer 1 (third SE layer) is in contact with the negative electrode active material layer. By laminating and pressurizing the transfer sheet, the solid electrolyte-containing sheet and the negative electrode active material layer are closely attached to each other. Optionally, the pressurization may be performed under heating. As a result, a negative electrode sheet for an all-solid state secondary battery according to the embodiment of the present invention can be obtained.

As the electrode active material layer in the electrode sheet for an all-solid state secondary battery according to the embodiment of the present invention, an electrode active material layer forming a typical all-solid state secondary battery can be used. As the electrode composition for forming the electrode active material layer, for example, an electrode composition obtained by adding an active material to the solid electrolyte composition used in the step (1) or (3) can be used.

[Method of Manufacturing All-Solid State Secondary Battery]

A method of manufacturing an all-solid state secondary battery according to the embodiment of the present invention includes the method of manufacturing an electrode sheet for an all-solid state secondary battery according to the embodiment of the present invention. The method of manufacturing an all-solid state secondary battery according to the embodiment of the present invention can be performed using an ordinary method except that it includes the above-described method of manufacturing the electrode sheet for an all-solid state secondary battery.

For example, the release film 4 is released from the transfer sheet 10A in the prepared negative electrode sheet for an all-solid state secondary battery. A positive electrode composition is applied to the solid electrolyte layer 3 to form a positive electrode active material layer. By laminating a current collector on the positive electrode active material layer, the all-solid state secondary battery 100A having the layer configuration shown in Fig. 3 can be obtained. Optionally by sealing the laminate in a case, a desired all-solid state secondary battery can be obtained.

As another method, for example, the following method can be used. That is, the negative electrode sheet for an all-solid state secondary battery is prepared as described above. In addition, the positive electrode composition including a positive electrode active material is applied to a metal foil which is a positive electrode current collector so as to form a positive electrode active material layer. As a result, a positive electrode sheet for an all-solid state secondary battery is prepared. The release film is released from the negative electrode sheet for an all-solid state secondary battery, and the positive electrode sheet for an all-solid state secondary battery is laminated on the solid electrolyte layer including the release film such that the solid electrolyte layer and the active material layer are in contact with each other. Optionally, the pressurization may be performed under heating. This way, an all-solid state secondary battery can be manufactured.

(Formation (Film Formation) of Electrode Active Material Layer)

A method of applying the electrode composition is not particularly limited and can be appropriately selected. Examples of the method include coating (preferably wet-type coating), spray coating, spin coating, dip coating, slit coating, stripe coating, and bar coating.

In this case, the electrode composition may be dried after being applied. The drying temperature is not particularly limited. The lower limit is preferably 30°C or higher, more preferably 60°C or higher, and still more preferably 80°C or higher. The upper limit is preferably 300°C or lower, more preferably 250°C or lower, and still more preferably 200°C or lower. In a case where the solid electrolyte composition is heated in the above-described temperature range, the dispersion medium can be removed to make the composition enter a solid state. In addition, the temperature is not excessively increased, and the respective members of the all-solid state secondary battery are not impaired, which is preferable. Therefore, in the all-solid state secondary battery, excellent total performance can be exhibited, and excellent binding properties can be obtained.

It is preferable that the all-solid state secondary battery is pressurized after the preparation. Examples of the pressurization method include a method using a hydraulic cylinder pressing machine. The pressure is not particularly limited, but is, generally, preferably in a range of 50 to 1,500 MPa.

In addition, the applied electrode composition may be heated while being pressurized. The heating temperature

is not particularly limited, but is generally in a range of 30°C to 300°C. The respective layers or the all-solid state secondary battery can also be pressed at a temperature higher than the glass transition temperature of the inorganic solid electrolyte.

The pressurization may be carried out in a state in which the coating solvent or the dispersion medium is dried in advance or in a state in which the coating solvent or the dispersion medium remains.

The atmosphere during the pressurization is not particularly limited and may be any one of in the atmosphere, under the dried air (the dew point: -20°C or lower), in an inert gas (for example, in an argon gas, in a helium gas, or in a nitrogen gas), and the like.

The pressing time may be a short time (for example, within several hours) at a high pressure or a long time (one day or longer) under the application of an intermediate pressure. For example, in the case of the all-solid state secondary battery, a restraining device (screw fastening pressure or the like) of the all-solid state secondary battery can also be used in order to continuously apply an intermediate pressure.

The pressing pressure may be homogeneous or variable with respect to a pressed portion such as a sheet surface.

The pressing pressure may be variable depending on the area or the thickness of the pressed portion. In addition, the pressure may also be variable stepwise for the same portion.

A pressing surface may be smooth or roughened.

(Initialization)

The all-solid state secondary battery manufactured as described above is preferably initialized after the manufacturing or before the use. The initialization is not particularly limited, and it is possible to initialize the all-solid state secondary battery by, for example, carrying out initial charging and discharging in a state in which the pressing pressure is increased and then releasing the pressure up to a pressure at which the all-solid state secondary battery is ordinarily used.

[Usages of All-Solid State Secondary Battery]

The all-solid state secondary battery according to the embodiment of the present invention can be applied to a variety of usages. Application aspects are not particularly limited, and, in the case of being mounted in electronic apparatuses, examples thereof include notebook computers, pen-based input personal computers, mobile personal computers, e-book players, mobile phones, cordless phone handsets, pagers, handy terminals, portable faxes, mobile copiers, portable printers, headphone stereos, video movies, liquid crystal televisions, handy cleaners, portable CDs, mini discs, electric shavers, transceivers, electronic notebooks, calculators, portable tape recorders, radios, backup power supplies, and memory cards. Additionally, examples of consumer usages include automobiles (electric vehicles and the like), electric vehicles, motors, lighting equipment, toys, game devices, road conditioners, watches, strobes, cameras, medical devices (pacemakers, hearing aids, and shoulder massage devices, and the like). Furthermore, the all-solid state secondary battery can be used for a variety of military usages and universe usages. In addition, the all-solid state secondary battery can also be combined with solar batteries.

Examples

Hereinafter, the present invention will be described in more detail on the basis of examples. Meanwhile, the present invention is not interpreted to be limited thereto. "Parts" and "%" that represent compositions in the following examples are mass-based unless particularly otherwise described. In addition, "room temperature" refers to 25°C.

<Synthesis Example of Binder A>

7.2 g of a 40 mass% heptane solution of a macromonomer M-1, 12.4 g of methyl acrylate (manufactured by Wako Pure Chemical Industries, Ltd.), 6.7 g of acrylic acid (manufactured by Wako Pure Chemical Industries, Ltd.), 207 g of heptane (manufactured by Wako Pure Chemical Industries, Ltd.), and 1.4 g of azoisobutyronitrile were added to a 2 L three-neck flask equipped with a reflux cooling pipe and a gas introduction coke, nitrogen gas was introduced at a flow rate of 200 mL/min for 10 minutes, and the solution was heated to 100°C. A liquid (a solution in which 93.1 g of a 40 mass% heptane solution of the macromonomer M-1, 222.8 g of methyl acrylate, 120.0 g of acrylic acid, 300.0 g of heptane, and 2.1 g of azoisobutyronitrile were mixed with each other) prepared in a separate container was added dropwise to the solution for 4 hours. After completion of the dropwise addition, 0.5 g of azoisobutyronitrile was added. Next, the solution was stirred at 100°C for 2 hours, was cooled to room temperature, and was filtered. As a result, a dispersion liquid of a binder A was obtained. The solid content concentration was 39.2%.

(Synthesis Example of Macromonomer M-1)

Glycidyl methacrylate (manufactured by Tokyo Chemical Industry Co., Ltd.) was caused to react with a self condensate (manufactured by Wako Pure Chemical Industries, Ltd., GPC polystyrene standard number-average molecular weight: 2,000) of 12-hydroxystearic acid to obtain a macromonomer. This macromonomer, methyl methacrylate, and glycidyl methacrylate (manufactured by Tokyo Chemical Industry Co., Ltd.) were polymerized at a ratio (molar ratio) of 1:0.99:0.01 to obtain a polymer. The obtained polymer was caused to react with acrylic acid (manufactured by Wako Pure Chemical Industries, Ltd.) to obtain a macromonomer M-1. In the macromonomer M-1, the SP value was 9.3, and the number-average molecular weight was 11000.

Estimated structural formulae of the polymer forming the binder A and the macromonomer M-1 are shown below.

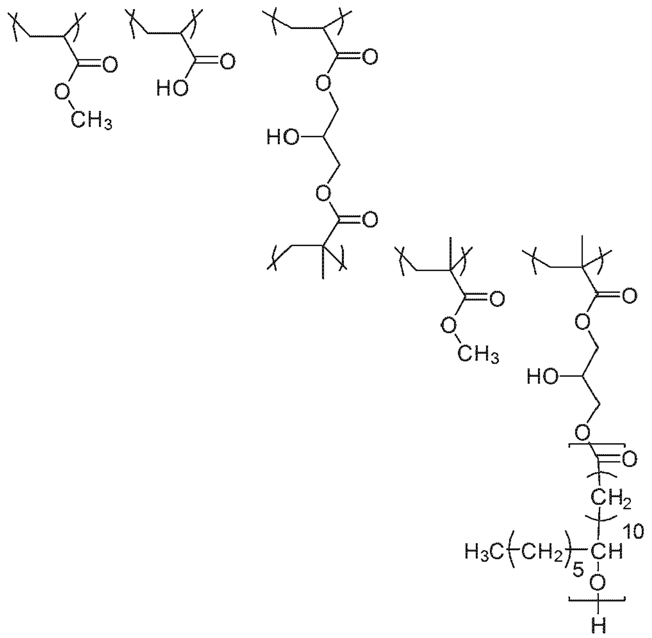

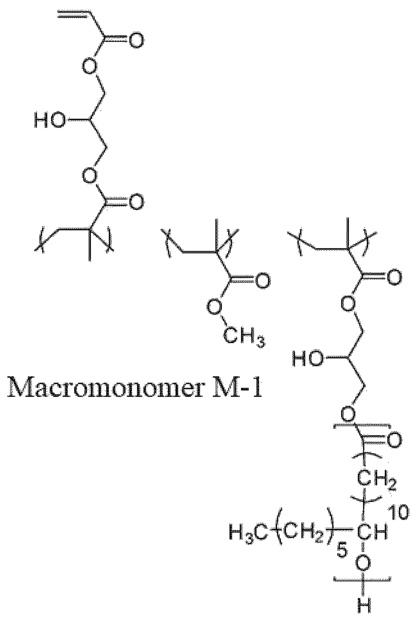

Macromonomer M-1

<Synthesis Example of Binder B>

200 parts by mass of heptane was added to a 1 L three-neck flask equipped with a reflux cooling pipe and a gas introduction coke, nitrogen gas was introduced at a flow rate of 200 mL/min for 10 minutes, and the solution was

heated from room temperature to 80°C. A liquid (a solution in which 90 parts by mass of butyl acrylate A-5 (manufactured by Wako Pure Chemical Industries, Ltd.), 20 parts by mass of methyl methacrylate A-4 (the above-described exemplary compound, manufactured by Wako Pure Chemical Industries, Ltd.), 10 parts by mass of acrylic acid A-1 (the above-described exemplary compound, manufactured by Wako Pure Chemical Industries, Ltd.), 20 parts by mass of B-27 (the above-described exemplary compound, a synthetic product), 60 parts by mass (solid content) of a macromonomer MM-1, and 2.0 parts by mass of a polymerization initiator V-601 (trade name, manufactured by Wako Pure Chemical Industries, Ltd.) were mixed with each other) prepared in a separate container were added dropwise to heptane while stirring heptane. Next, the solution was stirred at 80°C for 2 hours. Next, 1.0 part by mass of V-601 was further added to the obtained mixture, and the solution was stirred at 90°C for 2 hours. The obtained solution was diluted with heptane to obtain a dispersion liquid of the binder B.

(Synthesis of B-27)

80 g of cholesterol (manufactured by Tokyo Chemical Industry Co., Ltd.), 50 g of mono(2-acryloyloxyethyl) succinate (manufactured by Sigma-Aldrich Corporation), 5 g of 4-dimethylaminopyridine (manufactured by Tokyo Chemical Industry Co., Ltd.), and 500 g of dichloromethane were added to a 1 L three-neck flask and were stirred at 20°C for 5 minutes. 52 g of 1-(3-dimethylaminopropyl)-3-ethylcarbodiimide hydrochloride (manufactured by Tokyo Chemical Industry Co., Ltd.) was added to the solution for 30 minutes while stirring the solution, and the solution was stirred at 20 for 5 hours. Next, the solution was washed with 0.1 M hydrochloric acid three times, was dried with magnesium sulfate, and was distilled under reduced pressure. The obtained sample was purified by silica gel column chromatography to obtain B-27.

(Synthesis of Macromonomer MM-1)

190 parts by mass of toluene was added to a 1 L three-neck flask equipped with a reflux cooling pipe and a gas introduction coke, nitrogen gas was introduced at a flow rate of 200 mL/min for 10 minutes, and the solution was heated from room temperature to 80°C. A liquid (the following formula $\alpha$) prepared in a separate container was added dropwise to toluene for 2 hours while stirring the toluene, and was stirred at 80°C for 2 hours. Next, 0.2 parts by mass of V-601 (manufactured by Wako Pure Chemical Industries, Ltd.) was added, and the solution was stirred at 95°C for 2 hours. 0.025 parts by mass of 2,2,6,6-tetramethylpiperidine-1-oxyl (manufactured by Tokyo Chemical Industry Co., Ltd.), 13 parts by mass of glycidyl methacrylate (manufactured by Wako Pure Chemical Industries, Ltd.), and 2.5 parts by mass of tetrabutylammonium bromide (manufactured by Tokyo Chemical Industry Co., Ltd.) were added to the solution held at 95°C after stirring, and the solution was stirred at 120°C for 3 hours. The obtained mixture was cooled to a room temperature and was added to methanol to be precipitated. Precipitates were separated by filtration and were washed with methanol two times. 300 parts by mass of heptane was added to the precipitates to dissolve the precipitates. By condensing a part of the obtained solution under reduced pressure, a solution of the macromonomer MM-1 was obtained. The solid content concentration was 43.4%, the SP value was 9.1, and the mass average molecular weight was 16,000. The obtained macromonomer MM-1 was obtained as follows.

(Formula $\alpha$)

Dodecyl methacrylate (manufactured by Wako Pure Chemical Industries, Ltd.) ... 150 parts by mass
Methyl methacrylate (exemplary compound A-4, manufactured by Wako Pure Chemical Industries, Ltd.)... 59 parts by mass
3-mercaptoisobutyric acid (manufactured by Tokyo Chemical Industry Co., Ltd.) ... 2 parts by mass
V-601 (manufactured by Wako Pure Chemical Industries, Ltd.) ... 1.9 parts by mass

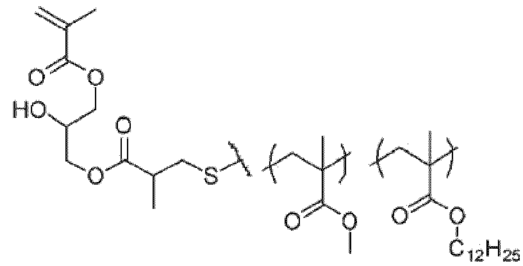

Macromonomer MM-1

-Measurement Method-

<Method of Measuring Solid Content Concentration>

The solid content concentrations of the dispersion liquid of the binder A or B and the macromonomer solution were measured based on the following method.

About 1.5 g of the dispersion liquid of the binder A or B and the macromonomer solution was weighed in an aluminum cup having a diameter $\phi$ of 7 cm, and the weighed value was read up to the three decimal places. Next, the solution was heated and dried in a nitrogen atmosphere at 90°C for 2 hours and at 140°C for 2 hours. The mass of the residue in the obtained aluminum cup was measured, and the solid content concentration was calculated from the following expression. The measurement was performed five times, and the average value of three measured values other than the maximum value and the minimum value were adopted.

$$\text{Solid Content Concentration (\%)} = \text{Amount (g) of Residue in Aluminum Cup} / \text{Dispersion Liquid of Binder A or B or Macromonomer Solution (g)}$$

<Measurement of Average Molecular Weight>

The number-average molecular weight of the macromonomer M-1 and the mass average molecular weight of the macromonomer MM-1 were measured using the above-described method (condition 2).

-Synthesis of Sulfide-Based Inorganic Solid Electrolyte (Li-P-S-Based Glass)

A sulfide-based inorganic solid electrolyte was synthesized with reference to a non-patent document of T. Ohtomo, A. Hayashi, M. Tatsumisago, Y. Tsuchida, S. Hama, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.

Specifically, in a glove box under an argon atmosphere (dew point: -70°C), lithium sulfide ($Li_2S$, manufactured by Aldrich-Sigma, Co. LLC. Purity: >99.98%) (2.42 kg) and diphosphoruspentasulfide ($P_2S_5$, manufactured by Aldrich-Sigma, Co. LLC. Purity: >99%) (3.90 kg) were respectively weighed, put into an agate mortar, and mixed using an agate mortar for five minutes. The molar ratio between $Li_2S$ and $P_2S_5$ ($Li_2S$:$P_2S_5$) was set to 75:25 in terms of molar ratio.

Sixty six zirconia beads having a diameter of 5 mm were put into a 45 mL zirconia container (manufactured by Fritsch Japan Co., Ltd.), the full amount of the mixture of the lithium sulfide and the diphosphoruspentasulfide was put thereinto, and the container was sealed in an argon atmosphere. The container was set in a planetary ball mill P-7 (trade name) manufactured by Fritsch Japan Co., Ltd., mechanical milling was carried out at a temperature of 25°C and a rotation speed of 510 rpm for 20 hours, and a yellow powder (6.20 g) of a sulfide-based inorganic solid electrolyte (Li-P-S-based glass; also referred to as "LPS") was obtained.

[Example 1]

<Preparation of Solid Electrolyte-Containing Sheet>

(Preparation of First Solid Electrolyte Composition)

180 zirconia beads having a diameter of 5 mm were put into a 45 mL zirconia container (manufactured by Fritsch Japan Co., Ltd.), and 2.9 g of LPS, 0.1 g (in terms of solid contents) of the dispersion liquid of the binder A, and 12.3 g of toluene as the dispersion medium were put thereinto. The container was set in a planetary ball mill P-7 (trade name, manufactured by Fritsch Japan Co., Ltd.) and the components were mixed together for 2 hours at a temperature of 25°C and a rotation speed of 300 rpm. As a result, a solid electrolyte composition (first solid electrolyte composition) for forming the first solid electrolyte layer was prepared, the composition including LPS having a particle size of 0.7 $\mu$m.

(Preparation of Second Solid Electrolyte Composition)

A solid electrolyte composition (second solid electrolyte composition) for forming the second solid electrolyte layer was prepared using the same preparation method as that of the first solid electrolyte composition, except that the number of zirconia beads was changed to 30, the rotation speed changed set to 100 rpm, and the mixing time was changed to 30 minutes. The particle size of LPS in the second solid electrolyte composition was 2.0 $\mu$m.

(Preparation of Third Solid Electrolyte Composition)

A solid electrolyte composition (third solid electrolyte composition) for forming the third solid electrolyte layer was prepared using the same preparation method as that of the first solid electrolyte composition, except that the binder A was changed to the binder B. The particle size of LPS in the third solid electrolyte composition was 0.7 μm.

The particle size of the inorganic solid electrolyte in the solid electrolyte composition was measured using a method described in paragraph "0142" of JP2015-088486A.

(Formation of Laminate)

The respective solid electrolyte compositions were applied using the above-described simultaneous multilayer coating method to prepare the solid electrolyte-containing sheet 10A shown in Fig. 1.

The first solid electrolyte composition, the second solid electrolyte composition, and the third solid electrolyte composition prepared as described above were applied to A1N30-H (trade name, manufactured by UACJ Corporation, an aluminum support having a thickness of 20 μm and a width of 200 mm) by simultaneous multilayer coating using a SMART LAB coater (manufactured by Techno Smart Corporation) such that the thickness of the first solid electrolyte layer was 3 μm, the thickness of the second solid electrolyte layer was 24 μm, and the thickness of the third solid electrolyte layer was 3 μm after forming and pressurizing the all-solid state secondary battery as described below. The laminate was dried at 150° for 3 minutes in a dryer, was pressurized at 20 MPa, and was wound. As a result, a solid electrolyte-containing sheet according to Example 1 was prepared.

As shown in Fig. 1, the solid electrolyte-containing sheet 10A according to Example 1 includes the support 4, the first SE layer 3, the second SE layer 2, and the third SE layer 4.

<Preparation of All-Solid State Secondary Battery>

(Preparation of Positive Electrode Sheet)

180 zirconia beads having a diameter of 5 mm were put into a 45 mL zirconia container (manufactured by Fritsch Japan Co., Ltd.), and 2.8 g of the above-described synthesized Li-P-S-based glass, 0.2 g of (in terms of solid contents) of the dispersion liquid of the binder A, and 12.3 g of toluene as a dispersion medium were put thereinto. The container was set in a planetary ball mill P-7 (trade name, manufactured by Fritsch Japan Co., Ltd.) and the components were mixed together for 2 hours at a temperature of 25°C and a rotation speed of 300 rpm. Next, 7.0 g of NMC ($LiNi_{0.33}Co_{0.33}Mn_{0.33}O_2$ (manufactured by Sigma-Aldrich Corporation)) as an active material and 0.2 g of acetylene black as a conductive auxiliary agent (manufactured by Denka Co., Ltd.) were put into the container. Next, using the same method, the container was set in a planetary ball mill P-7 (trade name, manufactured by Fritsch Japan Co., Ltd.) and the components were continuously mixed together for 10 minutes at a temperature of 25°C and a rotation speed of 100 rpm. As a result, a positive electrode composition was prepared.

The positive electrode composition prepared as described above was applied to an aluminum foil (positive electrode current collector) using an applicator (trade name: SA-201 Baker Type applicator, manufactured by Tester Sangyo Co., Ltd.) such that the weight per unit area was 30 $mg/cm^2$, was heated at 80°C for 1 hour, and was further dried at 110°C for 1 hour. Next, the laminate was pressurized (20 MPa, 1 minute) while being heated (120°C) using a heat press machine. As a result, a positive electrode sheet including the positive electrode active material layer on the positive electrode current collector was prepared.

(Preparation of Negative Electrode Sheet)

180 zirconia beads having a diameter of 5 mm were put into a 45 mL zirconia container (manufactured by Fritsch Japan Co., Ltd.), and 2.8 g of the above-described synthesized Li-P-S-based glass, 0.2 g of (in terms of solid contents) of the dispersion liquid of the binder B, and 12.3 g of heptane as a dispersion medium were put thereinto. The container was set in a planetary ball mill P-7 (manufactured by Fritsch Japan Co., Ltd.) and the components were mixed together for 2 hours at a temperature of 25°C and a rotation speed of 300 rpm. Next, 7.0 g of CGB20 (trade name, manufactured by Nippon Kokuen Group) as an active material was put into the container. Next, using the same method, the container was set in a planetary ball mill P-7 (trade name, manufactured by Fritsch Japan Co., Ltd.) and the components were continuously mixed together for 15 minutes at a temperature of 25°C and a rotation speed of 200 rpm. As a result, a negative electrode composition was prepared.

The negative electrode composition prepared as described above was applied to a SUS foil (negative electrode current collector) using an applicator (trade name: SA-201 Baker Type applicator, manufactured by Tester Sangyo Co., Ltd.) such that the weight per unit area was 15 $mg/cm^2$, was heated at 80°C for 1 hour, and was further dried at 110°C

for 1 hour. Next, the laminate was pressurized (20 MPa, 1 minute) while being heated (120°C) using a heat press machine. As a result, a negative electrode sheet including the negative electrode active material layer on the negative electrode current collector was prepared.

(Battery Formation)

The all-solid state secondary battery according to Example 1 having the layer configuration shown in Fig. 3 was formed.

The solid electrolyte-containing sheet obtained as described above and the negative electrode sheet were laminated (batch transfer) such that the solid electrolyte layer and the negative electrode active material layer were in contact with each other, and the laminate was pressurized at 50 MPa for 10 seconds. A member consisting of the negative electrode current collector 9/the negative electrode active material layer 8/the third SE layer 1/the second SE layer 2/the first SE layer 3/the aluminum support 4 was prepared, the aluminum support 4 was released, and the member was cut to have a diameter of 15 mmΦ. Next, this member was laminated in a 2032-type coin case such that the positive electrode active material layer 7 of the positive electrode sheet cut to have a diameter of 14 mmΦ and the first SE layer 3 were in contact with each other. The laminate was pressurized at 600 MPa, and the coin case was swaged. As a result, an all-solid state secondary battery according to Example 1 was prepared.

As shown in Fig. 3, the configuration of the all-solid state secondary battery according to Example 1 was the negative electrode current collector 9/the negative electrode active material layer 8/the third SE layer 1/the second SE layer 2/the first SE layer 3/the positive electrode active material layer 7/the positive electrode current collector 6.

[Example 2]

A solid electrolyte-containing sheet 10A according to Example 2 having the layer configuration shown in Fig. 1 and an all-solid state secondary battery 100A according to Example 2 having the layer configuration shown in Fig. 3 were prepared using the same preparation method as that of Example 1, except that the configuration was adjusted as shown in Table 1 below.

[Example 3]

A solid electrolyte-containing sheet 10A according to Example 3 shown in Fig. 1 was prepared by applying each of the solid electrolyte compositions using the above-described wet coating method, and an all-solid state secondary battery according to Example 3 was prepared using the solid electrolyte-containing sheet according to Example 3.

Specifically, the first solid electrolyte layer (wet state) was formed by applying the first solid electrolyte composition to the aluminum support. The second solid electrolyte layer (wet state) was formed on the first solid electrolyte layer. The third solid electrolyte layer was formed on the second solid electrolyte layer. The solid electrolyte-containing sheet and the all-solid state secondary battery according to Example 3 were prepared using the same method as that of Example 1, except that the solid electrolyte layers were sequentially laminated as described above.

[Example 4]

A solid electrolyte-containing sheet 10A according to Example 4 having the layer configuration shown in Fig. 1 and an all-solid state secondary battery 100A according to Example 4 having the layer configuration shown in Fig. 3 were prepared using the same preparation method as that of Example 1, except that the laminate was pressurized (20 MPa) after winding.

[Example 5]

(Preparation of Fourth Solid Electrolyte Composition)

A solid electrolyte composition (fourth solid electrolyte composition) for forming the fourth solid electrolyte layer was prepared using the same preparation method as that of the first solid electrolyte composition, except that the number of zirconia beads was changed to 120 and the rotation speed changed set to 500 rpm. The particle size of LPS in the fourth solid electrolyte composition was 0.2 μm.

(Preparation of Solid Electrolyte-Containing Sheet)

A solid electrolyte-containing sheet 10B according to Example 5 having the layer configuration shown in Fig.

2 was prepared.

A solid electrolyte-containing sheet 10B according to Example 5 was prepared with the same preparation method as that of the solid electrolyte-containing sheet according to Example 1 using the first and fourth solid electrolyte compositions. As shown in Fig. 2, the configuration of the solid electrolyte-containing sheet 10B according to Example 5 was the support 4/the first SE layer 3/the second SE layer 2/the fourth SE layer 5/the third SE layer 4.

-Preparation of All-Solid State Secondary Battery-

An all-solid state secondary battery 100B according to Example 5 having the layer configuration shown in Fig. 4 was prepared using the same preparation method as that of the all-solid state secondary battery according to Example 1, except that the solid electrolyte-containing sheet 10B according to Example 5 was used. As shown in Fig. 4, the configuration of the all-solid state secondary battery according to Example 5 was the negative electrode current collector 9/the negative electrode active material layer 8/the third SE layer 1/the fourth SE layer 5 (short-circuit suppressing layer)/the second SE layer 2/the first SE layer 3/the positive electrode active material layer 7/the positive electrode current collector 6.

The pore radius of the short-circuit suppressing layer included in the laminate according to the embodiment of the present invention in the all-solid state secondary battery was 4 nm, the pore radius being calculated using the following method.

<Calculation of Pore Radius>

A dry powder was obtained from the fourth solid electrolyte composition, the dry powder was interposed between SUS plates, and the obtained laminate was pressurized at a pressure of 600 MPa which is the same as that during the battery formation. As a result, a pellet having a thickness of 600 μm was formed. Next, using AUTOPORE IV 9520 (trade name, manufactured by Micromeritics Instrument Corporation), an pore radius distribution in a pore radius range of 1.8 nm to 100 μm was obtained, and a pore radius was calculated using the Washburn's equation. A numerical value calculated using a mercury intrusion method was used.

[Example 6]

An all-solid state secondary battery according to Example 6 and a solid electrolyte-containing sheet according to Example 6 were prepared using the same method as that of the all-solid state secondary battery according to Example 5 and the solid electrolyte-containing sheet according to Example 5, except that the configuration was adjusted as shown in Table 1 below. The pore radius of the short-circuit suppressing layer included in the laminate according to the embodiment of the present invention in the all-solid state secondary battery was 5 nm or less, the pore radius being calculated using the following method.

[Example 7]

A solid electrolyte-containing sheet according to Example 7 was prepared using the same method as that of the solid electrolyte-containing sheet according to Example 5, except that the configuration was the support 4/the first SE layer 3/the fourth SE layer 5/the second SE layer 2/the third SE layer 1.

In addition, an all-solid state secondary battery according to Example 7 was prepared using the same method as that of the all-solid state secondary battery according to Example 5, except that the solid electrolyte-containing sheet according to Example 7 was used. The pore radius of the short-circuit suppressing layer included in the laminate according to the embodiment of the present invention in the all-solid state secondary battery was 5 nm or less, the pore radius being calculated using the following method.

[Examples 8 to 13]

Solid electrolyte-containing sheets and all-solid state secondary batteries according to Examples 8 to 13 were prepared using the same method as that of Example 1, except that the number of balls and the dispersion time were changed such that the particle size of the inorganic solid electrolyte was as shown in Table 1 below during the preparation of each of the solid electrolyte compositions.

[Examples 14 and 15]

Solid electrolyte-containing sheets and all-solid state secondary batteries according to Examples 14 and 15

were prepared using the same method as that of Example 1, except that the configuration was adjusted as shown in Table 1 below.

[Examples 16 and 17]

Solid electrolyte-containing sheets and all-solid state secondary batteries according to Examples 16 to 17 were prepared using the same method as that of Example 1, except that the number of balls and the dispersion time were changed and/or the thickness of the solid electrolyte layer was changed such that the particle size of the inorganic solid electrolyte was as shown in Table 1 below during the preparation of each of the solid electrolyte compositions.

[Example 18]

An all-solid state secondary battery according to Example 18 and a solid electrolyte-containing sheet according to Example 18 were prepared using the same method as that of the all-solid state secondary battery according to Example 5 and the solid electrolyte-containing sheet according to Example 5, except that the configuration was adjusted as shown in Table 1 below. The pore radius of the short-circuit suppressing layer included in the laminate according to the embodiment of the present invention in the all-solid state secondary battery was 5 nm or less, the pore radius being calculated using the following method. The particle size of the inorganic solid electrolyte was adjusted by adjusting the number of balls and the dispersion time during the preparation of the solid electrolyte composition.

[Example 19]

A polyimide sheet (thickness: 40 μm, size of opening: about 3 mm on average) including a through hole having an opening ratio of 88% was prepared with reference to Example 1 of JP2017-103146A.

A solid electrolyte-containing sheet and an all-solid state secondary battery according to Example 19 were prepared using the same method as that of Example 3, except that the polyimide sheet was used.

Specifically, the first solid electrolyte layer (wet state) was formed by applying the first solid electrolyte composition to the aluminum support. The above-described polyimide sheet was disposed on the first solid electrolyte layer. The second solid electrolyte composition was applied to the polyimide sheet to fill the through hole, and the second solid electrolyte layer (wet state) was formed. The third solid electrolyte layer was formed on the second solid electrolyte layer. This way, a solid electrolyte-containing sheet and an all-solid state secondary battery according to Example 19 were prepared.

[Example 20]

A polycaprolactone sheet (thickness: 50 μm) including a through hole having an opening ratio of 80% was prepared with reference to Example 1 [Experiment 1] of JP2007-291367A. A solid electrolyte-containing sheet and an all-solid state secondary battery according to Example 20 were prepared using the same method as that of Example 19, except that the polycaprolactone sheet was used instead of the polyimide sheet.

[Example 21]

An acrylic resin sheet (thickness: 50 μm, size of opening: about 2 mm on average) including a through hole having an opening ratio of 80% was prepared with reference to a resin layer forming step of Example 5 of WO2017/026118A. A solid electrolyte-containing sheet and an all-solid state secondary battery according to Example 21 were prepared using the same method as that of Example 19, except that the acrylic resin sheet was used instead of the polyimide sheet.

[Example 22]

Non-woven fabric formed of a fiber was prepared using an electrospinning method as follows.

Cellulose triacetate (manufactured by Daicel Corporation, trade name: L-30) was dissolved in a solvent including dichloromethane and N-methyl-2-pyrrolidone (NMP) at a mass ratio of 8:2 to prepare a solution (concentration: 4 mass%). Using this solution and NANON-3 (trade name, manufactured by MECC Corporation), electrospinning was performed under conditions of applied voltage: 30 kv and flux: 1.0 mL/hr to obtain a fiber. By entangling the fiber, non-woven fabric was obtained. The amount of entangled fibers was adjusted such that the thickness of the non-woven fabric was as shown below and was 25 μm after being impregnated with the solid electrolyte composition to form a sheet and a battery. As a result, non-woven fabric having a predetermined thickness was obtained.

The non-woven fabric obtained as described above was impregnated with the second solid electrolyte composition to prepare an inorganic solid electrolyte-impregnated non-woven fabric (wet state). A solid electrolyte-containing sheet and an all-solid state secondary battery according to Example 22 were prepared using the same method as that of Example 3, except that the inorganic solid electrolyte-impregnated non-woven fabric was used. The first solid electrolyte layer (wet state) was formed by applying the first solid electrolyte composition to the aluminum support. The inorganic solid electrolyte-impregnated non-woven fabric was disposed on the first solid electrolyte layer in a wet state to form a second solid electrolyte layer (wet state). The third solid electrolyte layer was formed on the second solid electrolyte layer. This way, a solid electrolyte-containing sheet and an all-solid state secondary battery according to Example 22 were prepared.

In the all-solid state secondary battery according to Example 22, the thickness of the second solid electrolyte layer was 25 μm.

[Comparative Example 1]

A solid electrolyte-containing sheet and an all-solid state secondary battery according to Comparative Example 1 were prepared using the same method as that of Example 1, except that the configuration was adjusted as shown in Table 1 below.

[Comparative Example 2]

The first solid electrolyte composition was applied to A1N30-H (aluminum support) by single-layer coating using a SMART LAB coater (manufactured by Techno Smart Corporation) such that the thickness of the first solid electrolyte layer was 3 μm after forming and pressurizing the all-solid state secondary battery as described below. The laminate was dried at 150° for 3 minutes in a dryer. Likewise, the second solid electrolyte composition was applied to the first solid electrolyte layer and dried such that the thickness of the second solid electrolyte layer was 24 μm. Further, the third solid electrolyte composition was applied to the second solid electrolyte layer and dried such that the thickness of the third solid electrolyte layer was 3 μm. As a result, a solid electrolyte-containing sheet was obtained. Next, the obtained solid electrolyte-containing sheet was pressurized at 20 MPa and wound. As a result, a solid electrolyte-containing sheet according to Comparative Example 2 was prepared.

[Comparative Examples 3 to 9]

Solid electrolyte-containing sheets and all-solid state secondary batteries according to Comparative Examples 3 to 9 were prepared using the same method as that of Example 1, except that the configuration was adjusted as shown in Table 1 below. Since a binder was not used in Comparative Example 3, a sheet was not able to be formed.

[Examples 101 and Comparative Example 101]

Solid electrolyte-containing sheets and all-solid state secondary batteries according to Example 101 and Comparative Example 101 were prepared using the same method as that of Example 1, except that the configuration was adjusted as shown in Table 2 below.

[Comparative Example 102]

A solid electrolyte-containing sheet and an all-solid state secondary battery according to Comparative Example 102 were prepared using the same method as that of Comparative Example 2, except that the configuration was adjusted as shown in Table 2 below.

[Comparative Examples 103 and 104]

Solid electrolyte-containing sheet and all-solid state secondary batteries according to Comparative Examples 103 and 104 were prepared using the same method as that of Example 1, except that the configuration was adjusted as shown in Table 2 below.

(i) Average Particle Size

A method of calculating the average particle sizes of the inorganic solid electrolyte particles and the binder included in the solid electrolyte layer will be described below.

The all-solid state secondary battery manufactured as described above was disassembled, and a cross-section was exposed under a condition of acceleration voltage: 3 kV using an ion milling device (trade name: "IM4000PLUS", manufactured by Hitachi High-Technologies Corporation). 10 images were captured at a magnification such that one screen included 400 to 500 particles using a scanning electron microscope (SEM) and was binarized using ImageJ (software, manufactured by National Institutes of Health). An area equivalent diameter obtained from the calculated areas was set as the average particle size.

(ii) Thickness of Solid Electrolyte Layer

The thickness of each of the solid electrolyte layers was calculated from the SEM images.

Table 1 and <Notes in Table> show the average particle sizes of the inorganic solid electrolyte particles and the binder included in each of the solid electrolyte layers and the thickness of each of the solid electrolyte layer.

The performances of the solid electrolyte-containing sheets according to Examples and Comparative Examples and the all-solid state secondary batteries according to Examples and Comparative Examples were evaluated in the following tests.

(1) Film Hardness

The film hardness of the solid electrolyte-containing sheet was evaluated in a bending resistance test using a mandrel tester according to JIS K5600-5-1.

A striped solid electrolyte-containing sheet having a width of 50 mm and a length of 100 mm was used, a solid electrolyte layer surface was set opposite to the mandrel, and the solid electrolyte-containing sheet was bent using mandrels having different diameters to visually inspect whether or not cracking and fracturing occurred. In a case where cracking and/or fracturing did not occur, the diameter of the mandrel (unit mm) was gradually reduced to 25, 20, 16, 12, 10, 8, 6, 5, 4, 3, and 2, and the diameter of the mandrel at which cracking and/or fracturing occurred was recorded. The evaluation was performed based on one of the following evaluation standards to which the maximum diameter among the diameters of the mandrels at which cracking and/or fracturing occurred belongs to. AA, A, B, and C are acceptable levels in the present test.

-Evaluation Standards-

AA: less than 5 mm
A: 5 mm or more and less than 10 mm
B: 10 mm or more and less than 16 mm
C: 16 mm or more and less than 20 mm
D: 20 mm or more

(2) Battery Performance

The all-solid state secondary battery was measured using a charging and discharging evaluation device "TOSCAT-3000" (trade name) (manufactured by Toyo System Corporation). The all-solid state secondary battery was charged at a current value of 0.2 mA until the battery voltage reached 4.2 V, and then was discharged at a current value of 2.0 mA until the battery voltage reached 3.0 V. The battery voltage measured 10 seconds after the start of discharging was read based on the following standards, and the resistance was evaluated.

The evaluation standards are as follows. Evaluation standards 1 are standards for the evaluation in Table 1, and evaluation standards 2 are standards for the evaluation in Table 2. In the evaluation standards 1 and 2, AA, A, B, and C are acceptable levels in the present test. In the battery performance test in Tables 1 and 2, "-’ represents that the battery performance was not able to be evaluated because a battery itself was not able to be formed due to a weak intensity.

-Evaluation Standards 1-

AA: 4.1 V or higher
A: 4.05 V or higher and lower than 4.1 V
B: 4.0 V or higher and lower than 4.05 V
C: 3.95 V or higher and lower than 4.0 V
D: 3.9 V or higher and lower than 3.95 V

-Evaluation Standards 2-

AA: 3.8 V or higher
A: 3.75 V or higher and lower than 3.8 V
B: 3.7 V or higher and lower than 3.75 V
C: 3.65 V or higher and lower than 3.7 V
D: 3.6 V or higher and lower than 3.65 V

(3) Short-Circuit

The all-solid state secondary battery was measured using a charging and discharging evaluation device "TOSCAT-3000" (trade name) (manufactured by Toyo System Corporation). 10 sets of all-solid state secondary batteries were prepared and were rapidly charged at a current density of 0.8 $mA/cm^2$ until the battery voltage reached 4.2 V. Next, the proportion of the number of batteries in which short-circuit did not occur was calculated. The evaluation standards are as follows. AA, A, B, and C are acceptable levels in the present test. In the short-circuit evaluation in Tables 1 and 2, "-' represents that the short-circuit performance was not able to be evaluated because a battery itself was not able to be formed due to a weak intensity.

-Evaluation Standards-

AA: 0%
A: higher than 0% and 10% or lower
B: higher than 10% and 20% or lower
C: higher than 20% and 50% or lower
D: higher than 50%

[Table 1-1]

| | Configuration | | | | | | | | | | | | | | | |
|---|---|---|---|---|---|---|---|---|---|---|---|---|---|---|---|---|
| | Support | First Solid Electrolyte Layer | | | | | Second Solid Electrolyte Layer | | | | | Third Solid Electrolyte Layer | | | | |
| | | Inorganic Solid Electrolyte and Thickness | | | Binder | | Inorganic Solid Electrolyte and Thickness | | | Binder | | Inorganic Solid Electrolyte and Thickness | | | Binder | |
| | | Kind | Particle Size | Thickness | Kind | Form | Kind | Particle Size | Thickness | Kind | Particle Size | Kind | Particle Size | Thickness | Kind | Particle Size |
| Example 1 | Al | LPS | 0.7 | 3 | A | Particulate | LPS | 2.0 | 24 | A | Particulate | LPS | 0.7 | 3 | B | Particulate |
| Example 2 | Al | LPS | 0.7 | 3 | C | Solution | LPS | 2.0 | 24 | A | Particulate | LPS | 0.7 | 3 | C | Solution |
| Example 3 | Al | LPS | 0.7 | 3 | A | Particulate | LPS | 2.0 | 24 | A | Particulate | LPS | 0.7 | 3 | B | Particulate |
| Example 4 | Al | LPS | 0.7 | 3 | A | Particulate | LPS | 2.0 | 24 | A | Particulate | LPS | 0.7 | 3 | B | Particulate |
| Example 5 | Al | LPS | 0.7 | 3 | A | Particulate | LPS | 2.0 | 22 | A | Particulate | LPS | 0.7 | 3 | B | Particulate |
| Example 6 | Al | LPS | 0.7 | 3 | A | Particulate | LPS | 2.0 | 20 | A | Particulate | LPS | 0.7 | 3 | B | Particulate |
| Example 7 | Al | LPS | 0.7 | 3 | A | Particulate | LPS | 2.0 | 22 | A | Particulate | LPS | 0.7 | 3 | B | Particulate |
| Example 8 | Al | LPS | 0.7 | 3 | A | Particulate | LPS | 1.6 | 24 | A | Particulate | LPS | 0.7 | 3 | B | Particulate |
| Example 9 | Al | LPS | 0.7 | 3 | A | Particulate | LPS | 3.0 | 24 | A | Particulate | LPS | 0.7 | 3 | B | Particulate |
| Example 10 | Al | LPS | 0.7 | 3 | A | Particulate | LPS | 4.0 | 24 | A | Particulate | LPS | 0.7 | 3 | B | Particulate |
| Example 11 | Al | LPS | 0.3 | 3 | A | Particulate | LPS | 2.0 | 24 | A | Particulate | LPS | 0.3 | 3 | B | Particulate |
| Example 12 | Al | LPS | 0.5 | 3 | A | Particulate | LPS | 2.0 | 24 | A | Particulate | LPS | 0.5 | 3 | B | Particulate |

(continued)

| | Configuration | | | | | | | | | | | | | | | |
|---|---|---|---|---|---|---|---|---|---|---|---|---|---|---|---|---|
| | Support | First Solid Electrolyte Layer | | | | | Second Solid Electrolyte Layer | | | | | Third Solid Electrolyte Layer | | | | |
| | | Inorganic Solid Electrolyte and Thickness | | | Binder | | Inorganic Solid Electrolyte and Thickness | | | Binder | | Inorganic Solid Electrolyte and Thickness | | | Binder | |
| | | Kind | Particle Size | Thickness | Kind | Form | Kind | Particle Size | Thickness | Kind | Particle Size | Kind | Particle Size | Thickness | Kind | Particle Size |
| Example 13 | Al | LPS | 0.9 | 3 | A | Particulate | LPS | 2.0 | 24 | A | Particulate | LPS | 0.9 | 3 | B | Particulate |
| Example 14 | PET | LPS | 0.7 | 3 | A | Particulate | LPS | 2.0 | 24 | A | Particulate | LPS | 0.7 | 3 | B | Particulate |
| Example 15 | Al | LPS | 0.7 | 3 | A | Particulate | LPS | 2.0 | 24 | A | Particulate | LPS | 0.7 | 3 | A | Particulate |
| Example 16 | Al | LPS | 0.7 | 3 | A | Particulate | LPS | 2.0 | 14 | A | Particulate | LPS | 0.7 | 3 | B | Particulate |
| Example 17 | Al | LPS | 0.5 | 2 | A | Particulate | LPS | 1.6 | 5 | A | Particulate | LPS | 0.5 | 2 | B | Particulate |
| Example 18 | Al | LPS | 0.5 | 2 | A | Particulate | LPS | 1.6 | 5 | A | Particulate | LPS | 0.5 | 2 | B | Particulate |
| Example 19 | Al | LPS | 0.7 | 3 | A | Particulate | LPS | 2.0 | 40 | A | Particulate | LPS | 0.7 | 3 | B | Particulate |
| Example 20 | Al | LPS | 0.7 | 3 | A | Particulate | LPS | 2.0 | 45 | A | Particulate | LPS | 0.7 | 3 | B | Particulate |
| Example 21 | Al | LPS | 0.7 | 3 | A | Particulate | LPS | 2.0 | 24 | A | Particulate | LPS | 0.7 | 3 | B | Particulate |
| Example 22 | Al | LPS | 0.7 | 3 | A | Particulate | LPS | 2.0 | 25 (Non-Woven Fabric) | A | Particulate | LPS | 0.7 | 3 | B | Particulate |

[Table 1-2]

| | Configuration | | | | | | | | | | | | | | | |
|---|---|---|---|---|---|---|---|---|---|---|---|---|---|---|---|---|
| | Support | First Solid Electrolyte Layer | | | | | Second Solid Electrolyte Layer | | | | | Third Solid Electrolyte Layer | | | | |
| | | Inorganic Solid Electrolyte and Thickness | | | Binder | | Inorganic Solid Electrolyte and Thickness | | | Binder | | Inorganic Solid Electrolyte and Thickness | | | Binder | |
| | | Kind | Particle Size | Thickness | Kind | Form | Kind | Particle Size | Thickness | Kind | Particle Size | Kind | Particle Size | Thickness | Kind | Particle Size |
| Comparative Example 1 | Al | - | - | - | - | - | LPS | 2.0 | 30 | A | Particulate | | - | - | - | - |
| Comparative Example 2 | Al | LPS | 0.7 | 3 | A | Particulate | LPS | 2.0 | 24 | A | Particulate | LPS | 0.7 | 3 | B | Particulate |
| Comparative Example 3 | Al | LPS | 0.7 | 3 | A | Particulate | LPS | 2.0 | 24 | - | - | LPS | 0.7 | 3 | B | Particulate |
| Comparative Example 4 | Al | LPS | 0.7 | 15 | A | Particulate | - | - | - | - | - | LPS | 0.7 | 15 | B | Particulate |
| Comparative Example 5 | Al | LPS | 0.7 | 3 | A | Particulate | LPS | 2.0 | 24 | C | Solution | LPS | 0.7 | 3 | B | Particulate |
| Comparative Example 6 | Al | LPS | 0.1 | 3 | A | Particulate | LPS | 2.0 | 24 | A | Particulate | LPS | 0.1 | 3 | B | Particulate |
| Comparative Example 7 | Al | LPS | 1.1 | 3 | A | Particulate | LPS | 2.0 | 24 | A | Particulate | LPS | 1.1 | 3 | B | Particulate |
| Comparative Example 8 | Al | LPS | 0.7 | 3 | A | Particulate | LPS | 0.9 | 24 | A | Particulate | LPS | 0.7 | 3 | B | Particulate |
| Comparative Example 9 | Al | LPS | 0.7 | 3 | A | Particulate | LPS | 7.0 | 24 | A | Particulate | LPS | 0.7 | 3 | B | Particulate |

[Table 1-3]

| | Configuration | | | | | | Coating Film Forming Method | | | Transfer Method | Evaluation | | |
|---|---|---|---|---|---|---|---|---|---|---|---|---|---|
| | Fourth Solid Electrolyte Layer | | | | | | | | | | | | |
| | Position of Layer | Inorganic Solid Electrolyte and Thickness | | | Binder | | | | | | Film Hardness | Battery Performance | Short-Circuit |
| | | Kind | Particle Size | Thickness | Kind | Form | Laminating Method | | Pressurization | | | | |
| Example 1 | - | - | - | - | - | - | Coating | Simultaneous Multilayer | Before Winding | Batch Transfer | AA | AA | C |
| Example 2 | - | - | - | - | - | - | Coating | Simultaneous Multilayer | Before Winding | Batch Transfer | AA | C | C |
| Example 3 | - | - | - | - | - | - | Coating | Wet Coating | Before Winding | Batch Transfer | AA | B | C |
| Example 4 | - | - | - | - | | - | Coating | Simultaneous Multilayer | After Winding | Batch Transfer | B | AA | C |
| Example 5 | C | LPS | 0.2 | 2 | A | Particulate | Coating | Simultaneous Multilayer | Before Winding | Batch Transfer | AA | AA | AA |
| Example 6 | C | LPS | 0.2 | 4 | A | Particulate | Coating | Simultaneous Multilayer | Before Winding | Batch Transfer | B | B | B |
| Example 7 | B | LPS | 0.2 | 2 | A | Particulate | Coating | Simultaneous Multilayer | Before Winding | Batch Transfer | AA | AA | B |
| Example 8 | - | | - | - | - | - | Coating | Simultaneous Multilayer | Before Winding | Batch Transfer | B | B | C |
| Example 9 | - | - | - | - | - | - | Coating | Simultaneous Multilayer | Before Winding | Batch Transfer | AA | AA | C |
| Example 10 | - | - | - | - | - | - | Coating | Simultaneous Multilayer | Before Winding | Batch Transfer | AA | B | C |
| Example 11 | - | - | - | - | - | - | Coating | Simultaneous Multilayer | Before Winding | Batch Transfer | C | B | C |
| Example 12 | - | - | - | - | - | - | Coating | Simultaneous Multilayer | Before Winding | Batch Transfer | B | AA | C |

(continued)

| | Configuration | | | | | | Coating Film Forming Method | | | Transfer Method | Evaluation | | |
|---|---|---|---|---|---|---|---|---|---|---|---|---|---|
| | Fourth Solid Electrolyte Layer | | | | | | | | | | Film Hard-ness | Battery Per-formance | Short-Circuit |
| | Position of Layer | Inorganic Solid Electrolyte and Thickness | | | Binder | | | | | | | | |
| | | Kind | Particle Size | Thickness | Kind | Form | Laminating Method | | Pressurization | | | | |
| Example 13 | - | - | - | - | - | - | Coating | Simultaneous Multilayer | Before Winding | Batch Transfer | AA | B | C |
| Example 14 | - | - | - | - | - | - | Coating | Simultaneous Multilayer | Before Winding | Batch Transfer | AA | AA | C |
| Example 15 | - | - | - | - | - | - | Coating | Simultaneous Multilayer | Before Winding | Batch Transfer | AA | C | C |
| Example 16 | - | - | - | - | - | - | Coating | Simultaneous Multilayer | Before Winding | Batch Transfer | AA | AA | C |
| Example 17 | - | - | - | - | - | - | Coating | Simultaneous Multilayer | Before Winding | Batch Transfer | B | AA | C |
| Example 18 | C | LPS | 0.2 | 1 | A | Particulate | Coating | Simultaneous Multilayer | Before Winding | Batch Transfer | B | AA | AA |
| Example 19 | - | - | - | - | - | - | Coating | Wet Coating | Before Winding | Batch Transfer | AA | C | C |
| Example 20 | - | - | - | - | - | - | Coating | Wet Coating | Before Winding | Batch Transfer | AA | C | C |
| Example 21 | - | - | - | - | - | - | Coating | Wet Coating | Before winding | Batch Transfer | AA | C | C |
| Example 22 | - | - | - | - | - | - | Coating | Wet Coating | Before Winding | Batch Transfer | AA | C | C |

[Table 1-4]

| | Configuration | | | | | | Coating Film Forming Method | | | Transfer Method | Evaluation | | |
|---|---|---|---|---|---|---|---|---|---|---|---|---|---|
| | Fourth Solid Electrolyte Layer | | | | | | | | | | Film Hard-ness | Battery Per-formance | Short-Circuit |
| | Position of Layer | Inorganic Solid Electrolyte and Thickness | | | Binder | | | | | | | | |
| | | Kind | Particle Size | Thickness | Kind | Form | Laminating Method | | Pressurization | | | | |
| Comparative Example 1 | - | - | - | - | - | - | Coating | Singe-Layer Coating | Before Winding | Batch Transfer | AA | D | C |
| Comparative Example 2 | - | - | - | - | - | - | Coating | Coating for Single Layer | Before Winding | Sequential Three-Step Trans fer | D | D | C |
| Comparative Example 3 | - | - | - | - | - | - | Coating | Simultaneous Multilayer Coating | Not Able to be Pressurized | Not Able to be Transferred | - | - | - |
| Comparative Example 4 | - | - | - | - | - | - | Coating | Simultaneous Multilayer Coating | Before Winding | Batch Transfer | D | D | C |
| Comparative Example 5 | - | - | - | - | - | - | Coating | Simultaneous Multilayer Coating | Before Winding | Batch Transfer | B | D | C |
| Comparative Example 6 | - | - | - | - | - | - | Coating | Simultaneous Multilayer Coating | Before Winding | Batch Transfer | D | C | C |
| Comparative Example 7 | - | - | - | - | - | - | Coating | Simultaneous Multilayer Coating | Before Winding | Batch Transfer | AA | D | C |
| Comparative Example 8 | - | - | - | - | - | - | Coating | Simultaneous Multilayer Coating | Before Winding | Batch Transfer | D | C | C |
| Comparative Example 9 | - | - | - | - | - | - | Coating | Simultaneous Multilayer Coating | Before Winding | Batch Transfer | D | C | C |

<Notes in Table>

Al: A1N30-H (trade name, manufactured by UACJ Corporation, thickness: 20 μm)

PET: CERAPEEL HP2 (trade name, manufactured by Toray Advanced Film Co., Ltd., thickness: 38 μm)

LPS: Li-P-S-based glass synthesized above

Binder A: binder A synthesized as described above, particle size in solid electrolyte layer: 0.3 μm

Binder B: binder B synthesized as described above, particle size in solid electrolyte layer: 0.3 μm

Binder C: product number: 430072 (manufactured by Sigma-Aldrich Corporation)

"Solution": a state where the binder was dissolved in the dispersion medium in the solid electrolyte composition and was not present to be particulate in the solid electrolyte layer

Position B of Layer: a configuration in which the fourth SE layer was provided between the first SE layer and the second SE layer

Position C of Layer: a configuration in which the fourth SE layer was provided between the second SE layer and the third SE layer

[Table 2]

| | Configuration | | | | | | | | | | | | | | | | | |
|---|---|---|---|---|---|---|---|---|---|---|---|---|---|---|---|---|---|---|
| | | First Solid Electrolyte Layer | | | | | Second Solid Electrolyte Layer | | | | | Third Solid Electrolyte Layer | | | | | | |
| | Support | Inorganic Solid Electrolyte and Thickness | | | Binder | | Inorganic Solid Electrolyte and Thickness | | | Binder | | Inorganic Solid Electrolyte and Thickness | | | Binder | | | |
| | | Kind | Particle Size | Thickness | Kind | Form | Kind | Particle Size | Thickness | Kind | Particle Size | Kind | Particle Size | Thickness | Kind | Particle Size | | |
| Example 101 | Al | LLZ | 0.7 | 0.7 | A | Particulate | LLZ | 2.0 | 2.0 | A | Particulate | LLZ | 0.7 | 0.7 | B | Particulate | | |
| Comparative Example 101 | Al | - | - | - | - | - | LLZ | 2.0 | 2.0 | A | Particulate | - | - | - | - | - | | |
| Comparative Example 102 | Al | LLZ | 0.7 | 0.7 | A | Particulate | LLZ | 2.0 | 2.0 | A | Particulate | LLZ | 0.7 | 0.7 | B | Particulate | | |
| Comparative Example 103 | Al | LLZ | 0.7 | 0.7 | A | Particulate | LLZ | 2.0 | 2.0 | C | Solution | LLZ | 0.7 | 0.7 | B | Particulate | | |
| Comparative Example 104 | Al | LLZ | 0.7 | 0.7 | A | Particulate | - | - | - | - | - | LLZ | 0.7 | 0.7 | B | Particulate | | |

| | Configuration | | | | | | Coating Film Forming Method | | | Transfer Method | Evaluation | | |
|---|---|---|---|---|---|---|---|---|---|---|---|---|---|
| | Fourth Solid Electrolyte Layer | | | | | | | | | | | | |
| | Position of Layer | Inorganic Solid Electrolyte and Thickness | | | Binder | | | | | | | | |
| | | Kind | Particle Size | Thickness | Kind | Form | Laminating Method | | Pressurization | | Film Hardness | Battery Performance | Short-Circuit |
| Example 101 | - | - | - | - | - | - | Coating | Simultaneous Multilayer Coating | Before Winding | Batch Transfer | AA | AA | C |
| Comparative Example 101 | - | - | - | - | - | - | Coating | Single-Layer Coating | Before Winding | Batch Transfer | AA | D | C |
| Comparative Example 102 | - | - | - | - | - | - | Coating | Coating for Single Layer | Before Winding | Sequential Three-Step Transfer | D | D | C |
| Comparative Example 103 | - | - | - | - | - | - | Coating | Simultaneous Multilayer Coating | Before Winding | Batch Transfer | B | D | C |
| Comparative Example 104 | - | - | - | - | - | - | Coating | Simultaneous Multilayer Coating | Before Winding | Batch Transfer | D | D | C |

<Notes in Table>

LLZ: $Li_7La_3Zr_2O_{12}$ (manufactured by Toshima Manufacturing Co., Ltd.)

As can be seen from Table 1, in the solid electrolyte-containing sheets according to Comparative Examples 2, 3, 6, 8, and 9 the film hardness was unacceptable. In addition, in the all-solid state secondary batteries according to Comparative Examples 1, 2, 4, 5, and 7, the battery performance was unacceptable. On the other hand, in the solid electrolyte-containing sheets according to Examples 1 to 22, the film hardness was acceptable. In the all-solid state secondary batteries according to Examples 1 to 22, the battery performance was acceptable.

It can be seen from a comparison between the all-solid state secondary batteries according to Examples 1 to 15 that, in a case where the binders included in the two solid electrolyte layers that are disposed on both the surface sides of the laminate are different from each other, an adhesive strength between the electrode active material layer and the laminate can be improved and the battery performance is higher.

In addition, it can be seen from a comparison between the results of the all-solid state secondary batteries according to Examples 1 and 3 that, in a case where the laminate is prepared using a simultaneous multilayer coating method, the battery performance is higher.

As can be seen from Table 2, the solid electrolyte-containing sheet according to the embodiment of the present invention exhibits excellent effects even in a case where an oxide-based inorganic solid electrolyte is used.

Explanation of References

| | |
|---|---|
| 1: | solid electrolyte layer (third SE layer, third solid electrolyte layer) |
| 2: | solid electrolyte layer (second SE layer, second solid electrolyte layer) |
| 3: | solid electrolyte layer (first SE layer, first solid electrolyte layer) |
| 4: | release film (support) |
| 5: | solid electrolyte layer (short-circuit suppressing layer, fourth SE layer) |
| 6: | positive electrode current collector |
| 7: | positive electrode active material layer |
| 8: | negative electrode active material layer |
| 9: | negative electrode current collector |
| 11: | operation portion |
| 10A, 10B: | solid electrolyte-containing sheet (transfer sheet) |
| 100A, 100B: | all-solid state secondary battery |

## Claims

**1.** A solid electrolyte-containing sheet comprising:

a laminate of three or more solid electrolyte layers,
wherein the solid electrolyte layer includes an inorganic solid electrolyte and a binder,
the inorganic solid electrolytes included in two solid electrolyte layers that are disposed on both surface sides of the laminate among the three or more solid electrolyte layers are formed of particles having an average particle size of 0.3 to 0.9 μm,
the inorganic solid electrolyte included in at least one of solid electrolyte layers that are disposed between the two solid electrolyte layers disposed on both the surface sides of the laminate is formed of particles having an average particle size of 1 to 5 μm, and
the binder included in the at least one solid electrolyte layer is particulate.

**2.** The solid electrolyte-containing sheet according to claim 1,
wherein the binders included in the two solid electrolyte layers that are disposed on both the surface sides of the laminate are different from each other.

**3.** The solid electrolyte-containing sheet according to claim 1 or 2,
wherein the binders included in the two solid electrolyte layers that are disposed on both the surface sides of the

laminate are particulate.

4. The solid electrolyte-containing sheet according to any one of claims 1 to 3, wherein the binders that are included in all the solid electrolyte layers included in the laminate are particulate.

5. The solid electrolyte-containing sheet according to any one of claims 1 to 4, wherein the inorganic solid electrolytes that are included in all the solid electrolyte layers included in the laminate are sulfide-based inorganic solid electrolytes.

6. The solid electrolyte-containing sheet according to any one of claims 1 to 5, comprising:

a laminate of four or more solid electrolyte layers,
wherein one of the solid electrolyte layers that are disposed between the two solid electrolyte layers disposed on both the surface sides of the laminate is a short-circuit suppressing layer,
a pore radius of the short-circuit suppressing layer measured using a mercury intrusion method is less than 5 nm, and
a thickness of the short-circuit suppressing layer is 4 μm or less.

7. The solid electrolyte-containing sheet according to claim 6, wherein the short-circuit suppressing layer is in contact with one of the two solid electrolyte layers disposed on both the surface sides of the laminate.

8. The solid electrolyte-containing sheet according to any one of claims 1 to 7, which is a solid electrolyte-containing sheet for transfer.

9. An electrode sheet for an all-solid state secondary battery, the electrode sheet comprising:

the laminate included in the solid electrolyte-containing sheet according to any one of claims 1 to 8; and
an electrode active material layer adjacent to the laminate.

10. An all-solid state secondary battery comprising: the electrode sheet for an all-solid state secondary battery according to claim 9.

11. An electronic apparatus comprising: the all-solid state secondary battery according to claim 10.

12. An electric vehicle comprising: the all-solid state secondary battery according to claim 10.

13. A method of manufacturing a solid electrolyte-containing sheet including a laminate of three or more solid electrolyte layers, the method comprising:

a step (1) of forming a solid electrolyte layer by applying a solid electrolyte composition including an inorganic solid electrolyte having an average particle size of 0.3 to 0.9 μm and a binder;
a step (2) of forming a solid electrolyte layer by applying a solid electrolyte composition including an inorganic solid electrolyte having an average particle size of 1 to 5 μm and a particulate binder;
a step (3) of forming a solid electrolyte layer by applying a solid electrolyte composition including an inorganic solid electrolyte having an average particle size of 0.3 to 0.9 μm and a binder; and
a step of drying the solid electrolyte layers,
wherein the solid electrolyte layer formed in the step (2) is disposed between the solid electrolyte layer formed in the step (1) and the solid electrolyte layer formed in the step (3).

14. The method of manufacturing a solid electrolyte-containing sheet according to claim 13, wherein the binder included in the solid electrolyte composition in the step (1) and the binder included in the solid electrolyte composition in the step (3) are different from each other.

15. The method of manufacturing a solid electrolyte-containing sheet according to claim 13 or 14, further comprising: a step of laminating the three or more solid electrolyte layers in a wet state and drying the three or more laminated

solid electrolyte layers.

**16.** The method of manufacturing a solid electrolyte-containing sheet according to any one of claims 13 to 15, further comprising:
a step of pressurizing the dried three or more solid electrolyte layers.

**17.** The method of manufacturing a solid electrolyte-containing sheet according to claim 16, further comprising:
a step of winding the pressurized three or more solid electrolyte layers into a roll.

**18.** The method of manufacturing a solid electrolyte-containing sheet according to any one of claims 13 to 17 including a laminate of four or more solid electrolyte layers, the method further comprising:
a step (4) of forming a short-circuit suppressing layer between the solid electrolyte layer formed in the step (1) and the solid electrolyte layer formed in the step (3) by applying a solid electrolyte composition for forming the short-circuit suppressing layer, the short-circuit suppressing layer having a pore radius of less than 5 nm and a thickness of 4 μm or less, and the pore radius being measured using a mercury intrusion method.

**19.** The method of manufacturing a solid electrolyte-containing sheet according to claim 18,
wherein the short-circuit suppressing layer is in contact with one of solid electrolyte layers disposed on both surfaces of the laminate.

**20.** A method of manufacturing an electrode sheet for an all-solid state secondary battery, the method comprising:
a step of transferring the laminate included in the solid electrolyte-containing sheet to an electrode active material layer, the solid electrolyte-containing sheet being obtained using the method of manufacturing a solid electrolyte-containing sheet according to any one of claims 13 to 19.

**21.** A method of manufacturing an all-solid state secondary battery, the method comprising:
the method of manufacturing an electrode sheet for an all-solid state secondary battery according to claim 20.

**22.** A method of manufacturing an electronic apparatus, the method comprising:
the method of manufacturing an all-solid state secondary battery according to claim 21.

**23.** A method of manufacturing an electric vehicle, the method comprising:
the method of manufacturing an all-solid state secondary battery according to claim 21.

FIG. 1

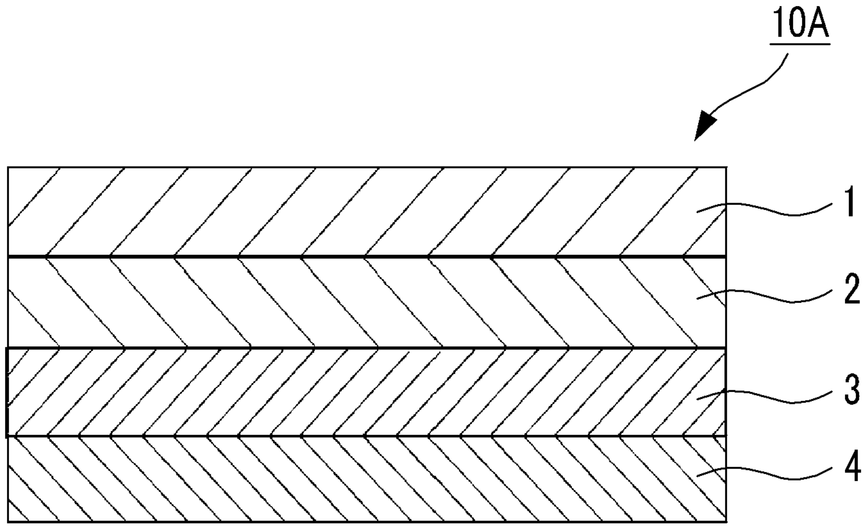


FIG. 2

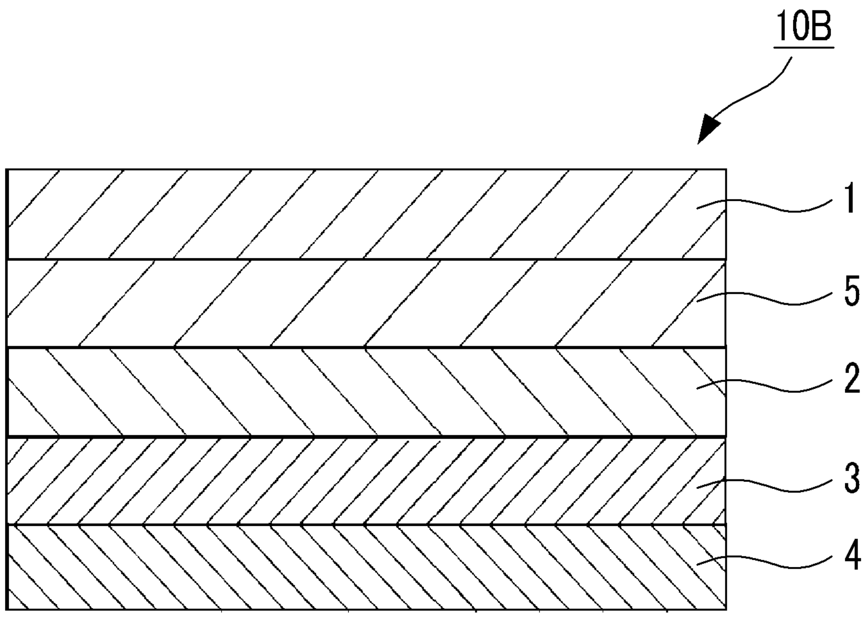

FIG. 3

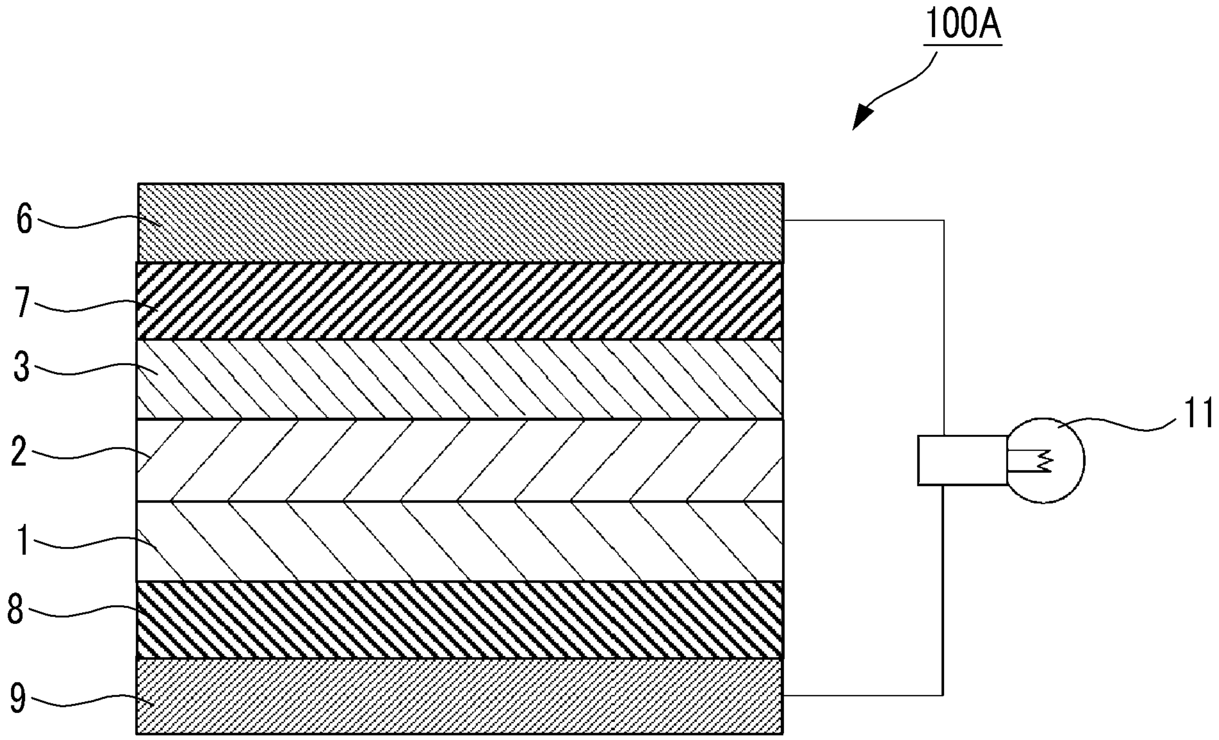


FIG. 4

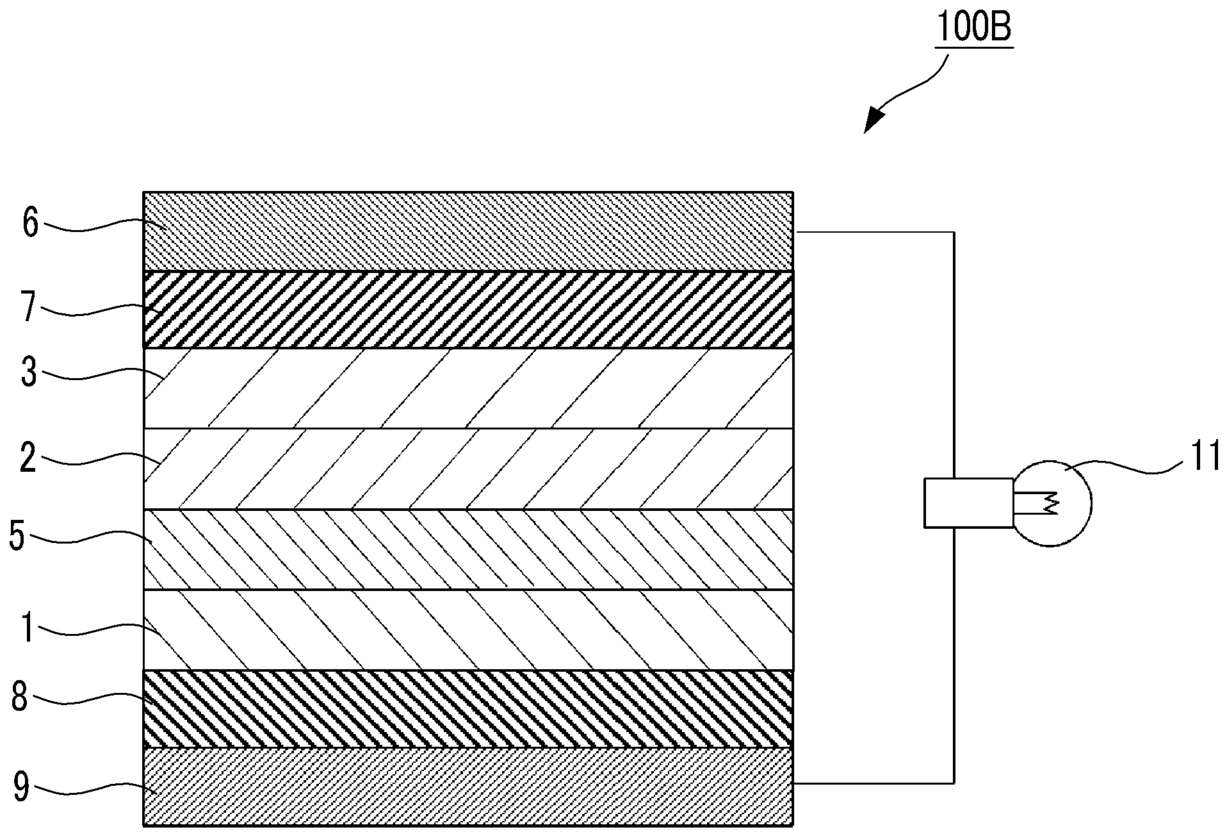

## INTERNATIONAL SEARCH REPORT

International application No.
PCT/JP2019/003270

A. CLASSIFICATION OF SUBJECT MATTER
Int.Cl. H01M10/0562(2010.01)i, H01B1/06(2006.01)i, H01B13/00(2006.01)i, H01M4/13(2010.01)i, H01M4/139(2010.01)i, H01M10/0585(2010.01)i

According to International Patent Classification (IPC) or to both national classification and IPC

B. FIELDS SEARCHED

Minimum documentation searched (classification system followed by classification symbols)
Int.Cl. H01M10/052, H01M10/056-10/0562, H01M10/058-10/0585, H01B1/06, H01B13/00, H01M4/13-4/139

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2017-037780 A (TOYOTA MOTOR CORP.) 16 February 2017, paragraphs [0001], [0013]-[0073], fig. 1 (Family: none) | 1-23 |
| Y | JP 2015-220012 A (FUJITSU LTD.) 07 December 2015, paragraphs [0001]-[0002], [0008]-[0010], [0012]-[0015], [0019]-[0020], [0031], [0033]-[0047], [0051], fig. 3, 7 (Family: none) | 1-23 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 April 2019 (24.04.2019) | 14 May 2019 (14.05.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/003270

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2017-204468 A (SAMSUNG ELECTRONICS CO., LTD.) 16 November 2017, paragraphs [0001], [0008]-[0009], [0053]-[0057], [0085]-[0089], [0100]-[0102], [0202], fig. 1G, 1N & US 2017/0324097 A1, paragraphs [0002], [0085]-[0089], [0113]-[0117], [0130]-[0132], [0224], fig. 1G, 1N & EP 3244471 A1 & KR 10-2017-0126404 A & CN 107359309 A | 6-12, 18-23 |
| Y | WO 2017/204028 A1 (FUJIFILM CORP.) 30 November 2017, paragraphs [0001], [0013], [0107]-[0108], fig. 1 & CN 109155162 A & KR 10-2019-0002550 A | 8-12, 20-23 |
| Y | WO 2017/138116 A1 (HITACHI, LTD.) 17 August 2017, paragraphs [0001], [0035]-[0045], fig. 3-6 (Family: none) | 17-23 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5686191 B
- JP 2017010816 A
- JP 2008135287 A
- JP 2013023654 A
- JP 2013229187 A
- JP 2015088486 A
- WO 2017131093 A
- JP 2007083625 A
- JP 2005271283 A
- JP 2006247967 A
- JP 2017103146 A
- JP 2007291367 A
- WO 2017026118 A


### Non-patent literature cited in the description


- **H. L. HOY.** *Journal of Painting,* 1970, vol. 42, 76-118
- **J. H. SAUNDERS ; K. C. FRISCH et al.** *POLYURETHANES, CHEMISTRY AND TECHNOLOGY PART 1, Chemistry,* 1962, 48-53
- Chemical Engineering Handbook. Maruzen Inc, 25 October 1980, 707-712
- **T. OHTOMO ; A. HAYASHI ; M. TATSUMISAGO ; Y. TSUCHIDA ; S. HAMA ; K. KAWAMOTO.** *Journal of Power Sources,* 2013, vol. 233, 231-235
- **A. HAYASHI ; S. HAMA ; H. MORIMOTO ; M. TATSUMISAGO ; T. MINAMI.** *Chem. Lett.,* 2001, 872, , 873